# EUROPEAN PATENT APPLICATION

(11) **EP 4 403 438 A1**
(43) Date of publication of application: **24.07.2024**
(21) Application number: 22869950.0
(22) Date of filing: 12.09.2022
(51) Int. Cl.: B62D 5/04, B62D 6/00, F16D 41/08, F16D 55/00, F16D 65/18, B62D 101/00, B62D 113/00, B62D 119/00, F16D 121/22

(54) **STEER-BY-WIRE STEERING DEVICE**

(30) Priority: 17.09.2021 JP 2021152000; 17.09.2021 JP 2021151986; 24.09.2021 JP 2021155458; 27.09.2021 JP 2021156513; 29.09.2021 JP 2021159198; 04.02.2022 JP 2022016447
(71) Applicant: NTN Corporation, Osaka-shi, Osaka 530-0005 (JP)
(72) Inventor: SATO Koji, Iwata-shi, Shizuoka 438-8510 (JP); SAITO Takahide, Iwata-shi, Shizuoka 438-8510 (JP); ISHIKAWA Shintarou, Iwata-shi, Shizuoka 438-8510 (JP)
(74) Representative: Grünecker Patent- und Rechtsanwälte PartG mbB
(86) International application number: PCT/JP2022/034079
(87) International publication number: WO 2023/042803

(57) **Abstract**

Provided are an inner ring (20) that rotates in unison with a steering wheel (1); an outer ring (21) fixed; an engagement element cage (25) movably supported between an engagement position at which engagement elements (24) are engaged with the inner ring (20) and the outer ring (21) and a disengagement position at which the engagement elements (24) are disengaged therefrom; an electromagnet (27) that attracts an armature (26) when energized; and a motion converting mechanism (28) that moves the engagement element cage (25) according to movement of the armature (26).

## Description

### TECHNICAL FIELD

The present invention relates to a steer-by-wire type steering system that steers a steering target in a state where a steering wheel and the steering target are mechanically separated from each other.

### BACKGROUND ART

As a steering system for a vehicle that changes a direction of steered wheels of a vehicle according to a rotation operation of a steering wheel by a driver, a steer-by-wire type steering system is known. A steer-by-wire type steering system for a vehicle includes: a steering sensor that detects an operation amount of a steering wheel; and a steering actuator provided to be mechanically separated from the steering wheel, and the steering actuator operates according to an operation amount of the steering wheel detected by the steering sensor, thereby changing a direction of a pair of right and left steered wheels.

The steer-by-wire type steering system for a vehicle temporarily converts the operation amount of the steering wheel by the driver into an electric signal and controls the operation of the steering actuator on the basis of the electric signal; therefore, it is possible to optimize, according to a traveling state of the vehicle, the correspondence relationship between the operation amount of the steering wheel and the operation amount of the steering actuator like, for example, adjusting, depending on a traveling speed of the vehicle, an amount of change in the direction of the steered wheels when the steering wheel is operated, and it is therefore expected to improve the traveling stability and the motion performance of the vehicle.

Meanwhile, in the steer-by-wire type steering system for a vehicle, the steering wheel to be rotationally operated by the driver and the steering actuator that changes the direction of the pair of right and left steered wheels are mechanically separated from each other. Therefore, also when the driver operates the steering wheel while the vehicle is stopped so that the direction of the steered wheels reached a movement limit (stroke end), the driver can further perform the rotation operation of the steering wheel. This causes a problem that, although the direction of the steered wheels has reached the stroke end, the driver does not notice that the direction of the steered wheels has reached the stroke end.

To address the above problem, the below-identified Patent Document 1 proposes a steer-by-wire type steering system for a vehicle that enables the driver to sense the situation via the steering wheel when the direction of the steered wheels reaches the stroke end.

The steering system for a vehicle of Patent Document 1 includes: a reaction force motor that gives to the steering wheel a steering reaction force calculated based on a vehicle speed, an operation amount of the steering wheel, and the like; and a reaction force controller that controls the reaction force motor. Then, when the direction of the steered wheels reaches the stroke end, the reaction force controller performs control to correct and increase a magnitude of the steering reaction force generated by the reaction force motor. As a result, the driver can sense that the direction of the steered wheels has reached the stroke end via the steering wheel.

### PRIOR ART DOCUMENT

### PATENT DOCUMENT

Patent Document 1: International publication WO2020/195226

### SUMMARY OF THE INVENTION

### PROBLEMS TO BE SOLVED BY THE INVENTION

In the case where control is performed to correct and increase the magnitude of the steering reaction force generated by the reaction force motor when the direction of the steered wheels reaches the stroke end as in Patent Document 1, the steering reaction force of the steering wheel is merely increased and the rotation of the steering wheel is not inhibited. Therefore, there is a possibility that the driver does not notice that the direction of the steered wheels has reached the stroke end and that the driver continues the rotation operation of the steering wheel.

To prevent such a situation, it can be considered to employ a larger reaction force motor for the steering system for a vehicle of Patent Document 1. When a larger reaction force motor is employed, the magnitude of the steering reaction force that can be generated by the reaction force motor is accordingly increased. Therefore, it is possible to generate, when the direction of the steered wheels reaches the stroke end, such a large steering reaction force that any driver can reliably notice. However, when a larger reaction force motor is employed, a peripheral space of the motor becomes smaller, and the cost is also increased.

The above-described problem exists not only in a steer-by-wire type steering system for a vehicle whose steering target is the steered wheels of a vehicle but also in, for example, a steer-by-wire type steering system for a vessel that steers a rudder (outboard motor or the like) provided at the stern of a vessel.

An object to be solved by the present invention is to provide a steer-by-wire type steering system that enables, when the direction of a steering target reaches a stroke end, a driver to reliably sense such situation via a steering wheel.

### MEANS FOR SOLVING THE PROBLEMS

In order to achieve the above object, a first invention provides a steer-by-wire type steering system comprises: a steering wheel; a steering sensor configured to detect an operation amount of the steering wheel; and a steering actuator disposed to be mechanically separated from the steering wheel, and configured to change a direction of a steering target according to the operation amount of the steering wheel detected by the steering sensor; characterized in that the steer-by-wire type steering system further comprises: a shaft coupled to the steering wheel so as to rotate in unison with the steering wheel; a fixed member non-rotatably fixed; an inner ring coupled to one of the shaft and the fixed member; an outer ring coupled to the other of the shaft and the fixed member; engagement elements disposed between an outer periphery of the inner ring and an inner periphery of the outer ring; an engagement element cage retaining the engagement elements, and supported to be circumferentially movable between an engagement position where the engagement elements are engaged with the inner ring and the outer ring and a disengagement position where the engagement elements are disengaged from the inner ring and the outer ring; an armature supported to be axially movable; an electromagnet configured to attract and axially move the armature when the electromagnet is energized; and a motion converting mechanism configured to circumferentially move, according to motion of the armature, the engagement element cage from one of the engaging position and the disengagement position to the other of the engaging position and the disengagement position.

With this configuration, it is possible to move, by switching between an energized state and a de-energized state of the electromagnet, the engagement element cage from the disengagement position where the engagement of the engagement elements between the inner ring and the outer ring is released to the engagement position where the engagement elements are engaged between the inner ring and the outer ring, whereby it is possible to switch from the steering unlocked state where the rotation of the steering wheel is allowed to the steering locked state where the rotation of the steering wheel is prevented. Here, when the engagement element cage is moved to the engagement position, the engagement elements are physically engaged between the inner ring and the outer ring, thereby preventing the rotation of the inner ring, so that the rotation of the steering wheel coupled to the inner ring via the shaft is reliably prevented. Therefore, by switching between the energized state and the de-energized state of the electromagnet when the direction of the steering object reaches the stroke end, the steering wheel is prevented from further rotating, so that it is possible to cause the driver to reliably sense, via the steering wheel, that the direction of the steering target has reached the stroke end.

It is possible to adopt the following configuration: The inner ring is coupled to the shaft, and the outer ring is coupled to the fixed member.

In this case, it is preferable to adopt the following configuration: The inner ring and the shaft are coupled to each other with play of a predetermined angular range such that the shaft is allowed to rotate relative to the inner ring within the predetermined angular range, and such that the shaft is prevented from rotating relative to the inner ring beyond the predetermined angular range, and an elastic member is disposed between the inner ring and the shaft such that when the inner ring and the shaft rotate relative to each other from a state where the inner ring and the shaft are at a central position of the predetermined angular range, the elastic member biases the inner ring and the shaft toward the central position of the predetermined angular range.

This configuration can prevent the following situation: The steering wheel gets locked and does not move when the direction of the steering target reaches the stroke end and the driver senses the situation via the steering wheel and suddenly tries to rotate the steering wheel in the opposite direction (the direction in which the direction of the steering target returns from the stroke end).

That is, in a case where switching is made from the steering unlocked state to the steering locked state when the direction of the steering target reaches the stroke end, the steering wheel cannot be further rotated, and the driver senses, via the steering wheel, that the direction of the steering target reaches the stroke end. Here, the following situation may occur. When the driver suddenly tries to rotate the steering wheel in the opposite direction, it is necessary to immediately switch from the steering locked state to the steering unlocked state to allow the rotation of the steering wheel. However, if the shaft coupled to the steering wheel is coupled to the inner ring without any play so as not to relatively rotate with respect to the inner ring at all, the operation of switching from the steering locked state to the steering unlocked state cannot be performed in time, and the driver cannot rotate the steering wheel in the opposite direction. When the above configuration is adopted to solve this problem, the shaft is coupled to the inner ring with play so as to allow relative rotation within the predetermined angular range with respect to the inner ring. Therefore, when the rotation of the steering wheel is prevented in one direction of both normal and reverse directions, the steering wheel can be rotated in the other direction of the both normal and reverse directions by an angle corresponding to the play provided between the shaft and the inner ring. Therefore, in the case where the driver senses, via the steering wheel, that the direction of the steering target has reached the stroke end and suddenly tries to rotate the steering wheel in the opposite direction, it is possible to secure a time for performing the operation of switching from the steering locked state to the steering unlocked state to allow the rotation of the steering wheel, and it is possible to prevent the steering wheel from being locked and not moving.

It is possible to adopt the following configuration: The shaft includes a non-circular shaft portion having a non-circular cross section, the inner ring includes a non-circular hole portion fitted to the non-circular shaft portion with a circumferential gap defined, and the elastic member is a leaf spring disposed to be circumferentially sandwiched between the non-circular shaft portion and the non-circular hole portion.

Tt is also possible to adopt the following configuration: The shaft includes a non-circular shaft portion having a non-circular cross section, the inner ring includes a non-circular hole portion fitted to the non-circular shaft portion with a circumferential gap defined, and the elastic member is a compression coil spring disposed to be compressed between the non-circular shaft portion and the non-circular hole portion.

It is also possible to adopt the following configuration: The shaft includes a non-circular shaft portion having a non-circular cross section, the inner ring includes a non-circular hole portion fitted to the non-circular shaft portion with a circumferential gap defined, and the elastic member is a torsion bar of which one end is fitted in a fitting hole formed at a center of the shaft and is rotationally fixed to the shaft, and of which the other end is rotationally fixed to the inner ring.

It is possible to adopt the following configuration: The fixed member is a tubular brake case in which the electromagnet and the armature are received, and the outer ring is integrally formed with the tubular brake case.

This configuration can reduce the number of parts and therefore reduce the manufacturing cost.

It is possible to adopt the following configuration: The fixed member is a tubular brake case in which the electromagnet and the armature are received, the tubular brake case is formed of a non-magnetic material, and the outer ring is formed separately from the tubular brake case and is rotationally fixed to the tubular brake case.

With this configuration, since the brake case is formed of a non-magnetic material, when the electromagnet is energized, the magnetic flux generated from the electromagnet can be prevented from leaking to the brake case, so that the armature can be efficiently attracted. Therefore, it is possible to reduce the sizes of the electromagnet and the armature and is therefore possible to save space.

Also, it is possible to adopt the following configuration: The fixed member is a tubular brake case in which the electromagnet and the armature are received, the outer ring is formed separately from the tubular brake case and is rotationally fixed to the tubular brake case, the electromagnet is disposed in the tubular brake case so as to be axially opposed to the outer ring, the tubular brake case is provided with: an electromagnet movement restricting portion for restricting movement of the electromagnet in one axial direction; and an outer ring movement restricting portion for restricting a movement range of the outer ring in the other axial direction, and an elastic spacer is disposed between the outer ring and the electromagnet so as to bias the outer ring and the electromagnet in a direction axially away from each other.

This configuration can lower a machining cost of the brake case. That is, in a case where the outer ring and the electromagnet are disposed to be axially opposed to each other in the brake case, it is considered to adopt the following configuration to axially fix the outer ring and the electromagnet. There are separately provided (i) a stop ring to restrict the axial movement of the electromagnet in the direction approaching the outer ring and (ii) a stop ring to restrict the axial movement of the outer ring in the direction approaching the electromagnet, and stop ring grooves for mounting respective ones of the stop rings are formed in the inner periphery of the brake case. However, when this configuration is adopted, a cost is required to perform groove machining on the inner periphery of the brake case. In contrast, in a case where the configuration is made as described above such that the elastic spacer is mounted between the outer ring and the electromagnet to bias the outer ring and the electromagnet in the direction to keep the outer ring and the electromagnet axially away from each other and such that the biasing force of the elastic spacer restricts the axial movement of the electromagnet in the direction to approach the outer ring and the axial movement of the outer ring in the direction to approach the electromagnet, it is not necessary to perform groove machining, for mounting the stop rings, on the inner periphery of the brake case, so that it is possible to lower a machining cost of the brake case.

As the elastic spacer, it is possible to use any one of a disc spring, a wave spring, and a compression coil spring.

The elastic spacer is preferably formed of a non-magnetic material.

With this configuration, since the elastic spacer is formed of a non-magnetic material, when the electromagnet is energized, the magnetic flux generated from the electromagnet can be prevented from leaking via the elastic spacer, so that the armature can be efficiently attracted. Therefore, it is possible to reduce the sizes of the electromagnet and the armature and is therefore possible to save space.

It is possible to adopt the following configuration: The outer ring is coupled to the shaft, and the inner ring is coupled to the fixed member.

In this case, it is preferable to adopt the following configuration: The inner ring and the fixed member are coupled to each other with play of a predetermined angular range such that the inner ring is allowed to rotate relative to the fixed member within the predetermined angular range, and such that the inner ring is prevented from rotating relative to the fixed member beyond the predetermined angular range, and an elastic member is disposed between the inner ring and the fixed member such that when the inner ring and the fixed member rotate relative to each other from a state where the inner ring and the fixed member are at a central position of the predetermined angular range, the elastic member biases the inner ring and the fixed member toward the central position of the predetermined angular range.

This configuration can prevent the following situation. The steering wheel gets locked and does not move when the direction of the steering target reaches the stroke end and the driver senses the situation via the steering wheel and suddenly tries to rotate the steering wheel in the opposite direction (the direction in which the direction of the steering target returns from the stroke end).

It is possible to adopt the following configuration: The fixed member is a tubular brake case in which the electromagnet and the armature are received, and the tubular brake case is formed of a non-magnetic material.

With this configuration, since the brake case is formed of a non-magnetic material, when the electromagnet is energized, the magnetic flux generated from the electromagnet can be prevented from leaking to the brake case, so that the armature can be efficiently attracted. Therefore, it is possible to reduce the sizes of the electromagnet and the armature and is therefore possible to save space.

It is possible to adopt the following configuration: The steer-by-wire type steering system further comprises a reaction force motor configured to apply a steering reaction force to the steering wheel, the fixed member is a tubular brake case in which the electromagnet and the armature are received, and the tubular brake case is integrally formed with a motor case of the reaction force motor.

It is preferable to adopt the following configuration: The motion converting mechanism is configured to circumferentially move the engagement element cage from the disengagement position to the engagement position when the electromagnet is energized; and circumferentially move the engagement element cage from the engagement position to the disengagement position when the electromagnet is not energized.

With this configuration, when the electromagnet is energized, the steering locked state is switched from the steering locked state to the steering unlocked state, and when the electromagnet is de-energized, the steering locked state is switched from the steering unlocked state to the steering locked state. Therefore, when the power of the vehicle is turned off and the electromagnet is de-energized, for example, at the time of parking the vehicle, the steering wheel is brought into the steering locked state in which the rotation of the steering wheel is prevented, so that it is possible to add a steering wheel lock function for preventing theft of the vehicle.

In order to achieve the above object, a second invention provides a steer-by-wire type steering system comprising: a steering wheel; a steering sensor configured to detect an operation amount of the steering wheel; and a steering actuator configured to change a direction of a steering target according to the operation amount of the steering wheel detected by the steering sensor; characterized in that the steer-by-wire type steering system further comprises: a shaft coupled to the steering wheel so as to rotate in unison with the steering wheel; an outer ring having an inner periphery disposed around the shaft; engagement elements disposed between the shaft and the inner periphery of the outer ring; an engagement element cage retaining the engagement elements, and disposed to be circumferentially movable between an engagement position where the engagement elements are engaged with the shaft and the inner periphery of the outer ring and a disengagement position where the engagement elements are disengaged from the shaft and the inner periphery of the outer ring; a centering spring elastically holding the engagement element cage at the disengagement position, and rotationally fixed to the shaft and the engagement element cage so as to rotate in unison with the shaft; and an excitation actuated type electromagnetic brake configured to brake the engagement element cage.

With the above configuration, when the excitation actuated type electromagnetic brake is brought into a non-excited state, the excitation actuated type electromagnetic brake comes into a state of not braking does not brake the engagement element cage. At this time, when the shaft rotates, the centering spring rotationally fixed to the shaft so as to rotate in unison with the shaft transmits the rotational force of the shaft to the engagement element cage, and holds the engagement element cage at the disengagement position with respect to the shaft. Therefore, the engagement elements cannot be engaged with the shaft and the inner periphery of the outer ring. That is, when the electromagnetic brake is in the non-excited state, the steering wheel is allowed to rotate. On the other hand, when the excitation actuated type electromagnetic brake is brought into an excited state, the excitation actuated type electromagnetic brake comes into a state of braking the engagement element cage. At this time, when the steering wheel is rotationally operated, since the engagement element cage to which the rotational force of the shaft is transmitted from the centering spring is braked by the electromagnetic brake, the shaft rotates relative to the engagement element cage. With this relative rotation, when the engagement element cage circumferentially moving with respect to the shaft reaches the engagement position against the centering spring, the engagement elements are engaged with the shaft and the inner periphery of the outer ring, so that the shaft is reliably prevented from further rotating. When the electromagnetic brake is switched from the excited state to the non-excited state, the elastic restoring force of the centering spring returns the engagement element cage to the disengagement position. Therefore, by switching the electromagnetic brake from the non-excited state to the excited state, it is possible to reliably prevent the steering wheel from rotating beyond the amount of circumferential movement of the engagement element cage between the disengagement position and the engagement position, and to reliably cause the driver to sense, via the steering wheel, that the direction of the steering target has reached the stroke end.

The excitation actuated type electromagnetic brake preferably comprises: for example, an armature rotationally fixed to the engagement element cage, and disposed to be axially movable; a friction surface portion fixed at a position axially opposed to the armature; an electromagnet axially opposed to the armature; and a separation spring supporting the armature at a position axially away from the electromagnet and the friction surface portion when the electromagnet is not excited, the separation spring being disposed to store force according to axial movement of the armature attracted to the friction surface portion by the electromagnet when the electromagnet is excited. With this configuration, in the non-excited state in which the electromagnet is de-energized, it is possible to hold the armature at a position separate from the friction surface portion by the support of the separation spring so as to keep the engagement element cage in the non-braking state, and, in addition, there can be a predetermined magnetic gap between the armature and the electromagnet. When the electromagnet is switched from the non-excited state to the excited state, the electromagnet attracts the armature to the friction surface portion against the separation spring and apples an actuation pressure between the friction surface portion and the armature, whereby the engagement element cage can be braked and circumferentially moved with respect to the shaft. Since the separation spring stores force according to the axial movement of the armature when the armature is attracted, when the electromagnet is switched from the excited state to the non-excited state, the armature can be separated from the electromagnet and the friction surface portion by the elastic restoring force of the separation spring, whereby the braking of the engagement element cage can be released.

The following configuration is preferable: The electromagnet comprises a field core axially opposed to the armature; and a solenoid coil wound around the field core, the friction surface portion is integrally formed with the field core, and the armature comprises a movable member configured to be directly attracted and stuck to the friction surface portion of the field core when the electromagnet is excited. With this configuration, it is possible to eliminate, between the electromagnet and the armature, the rotor that is an object with which the armature comes into contact, and, as a result, it is possible to reduce the size and the number of parts of the excitation actuated type electromagnetic brake. In addition, since no rotor is provided between the electromagnet and the armature, the magnetic flux efficiently circulates between the electromagnet and the armature as compared with the case where a rotor is provided, the attraction force of the electromagnet with respect to the armature can be increased, so that a braking torque with respect to the engagement element cage can be increased, and, as a result, the resistance of the centering spring with respect to the relative rotation between the engagement element cage and the shaft at the time of braking can be made strong. Therefore, it is possible to cause the driver to sense that the direction of the steering target is in the vicinity of the stroke end, by rapidly making, immediately after the electromagnet is excited, the rotation operation of the steering wheel heavier than in normal time.

The steering system more preferably further comprises a control unit configured to switch, at a predetermined stroke position before the direction of the steering target reaches a stroke end, the excitation actuated type electromagnetic brake to an excited state. As described above, the rotation operation of the steering wheel can be rapidly made heavier after the electromagnet is switched to the excited state; therefore, when the electromagnet is switched to the excited state at the predetermined stroke position where the direction of the steering target is close to the stroke end, the rotation operation of the steering wheel can be made heavier than in normal time before the direction of the steering target reaches the stroke end, whereby it is possible to cause the driver who is further turning the steering wheel to sense that the direction of the steering target is reaching the stroke end.

The following configuration is preferable: The steering system further comprises a tubular brake case in which the outer ring and the excitation actuated type electromagnetic brake are received, the tubular brake case is formed of a non-magnetic material, and formed separately from the outer ring, and the outer ring is rotationally fixed to the tubular brake case. With this configuration, it is possible to prevent the magnetic flux generated from the excitation actuated type electromagnetic brake from leaking to the brake case when the excitation actuated type electromagnetic brake is brought into the excited state.

The following configuration is preferable: The steering system further comprises a tubular brake case in which the excitation actuated type electromagnetic brake is received, and the outer ring is integrally formed with the tubular brake case. This configuration makes it possible to eliminate a step in which the outer ring is axially positioned with respect to the brake case and is prevented from rotating with respect to the brake case, and it is possible to reduce the number of parts.

The following configuration is preferable: The steering system further comprises a reaction force motor configured to apply a steering reaction force to the steering wheel, the steering target comprises a pair of right and left steered wheels, and the outer ring, the engagement elements, the engagement element cage, and the excitation actuated type electromagnetic brake are disposed between the steering wheel and the reaction force motor, or disposed on a side of the reaction force motor axially opposite from the steering wheel. With this configuration, the steer-by-wire type steering system for a vehicle can cause the driver to reliably sense, via the steering wheel, that the direction of the steered wheels has reached the stroke end.

In order to achieve the above object, a third invention provides a steer-by-wire type steering system comprising: a steering wheel; a steering sensor configured to detect an operation amount of the steering wheel; a steering actuator configured to change a direction of a steering target according to the operation amount of the steering wheel detected by the steering sensor; and an electromagnetic brake, wherein the electromagnetic brake comprises; an armature disposed to be axially movable; a friction surface portion fixed at a position axially opposed to the armature; and an electromagnet configured to attract and axially move the armature until the armature comes into contact with the friction surface portion when the electromagnet is excited; characterized in that the steer-by-wire type steering system further comprises: a shaft coupled to the steering wheel so as to rotate in unison with the steering wheel; an outer ring having an inner periphery disposed around the shaft; engagement elements disposed between the shaft and the inner periphery of the outer ring; an engagement element cage retaining the engagement elements, and disposed to be circumferentially movable between an engagement position where the engagement elements are engaged with the shaft and the inner periphery of the outer ring and a disengagement position where the engagement elements are disengaged from the shaft and the inner periphery of the outer ring; a centering spring elastically holding the engagement element cage at the disengagement position, and rotationally fixed to the shaft and the engagement element cage so as to rotate in unison with the shaft; and an impact absorbing member for alleviating collision between the armature attracted by the electromagnet and the friction surface portion, wherein the electromagnetic brake is disposed to switch, according to axial movement of the armature, between a state in which the engagement element cage is braked and a state in which the braking thereof is released.

With the above configuration, when the shaft rotates in a release state where the electromagnetic brake does not brake the engagement element cage, the centering spring rotationally fixed to the shaft so as to rotate in unison with the shaft transmits the rotational force of the shaft to the engagement element cage, and holds the engagement element cage at the disengagement position with respect to the shaft. Therefore, the engagement elements cannot be engaged with the shaft and the inner periphery of the outer ring, so that the steering wheel is allowed to rotate. On the other hand, when the steering wheel is rotationally operated in an operating state where the electromagnetic brake brakes the engagement element cage, since the engagement element cage to which the rotational force of the shaft is transmitted from the centering spring is braked by the electromagnetic brake, the engagement element cage and the shaft rotate relative to each other. With this relative rotation, when the engagement element cage reaches the engagement position against the centering spring, the engagement elements engage with the shaft and the inner periphery of the outer ring, so that the shaft is reliably prevented from further rotating. Therefore, since the steering wheel is reliably prevented from further rotating, it is possible to cause the driver to reliably sense, via the steering wheel, that the direction of the steering target has reached the stroke end. Here, when the state is changed between the braking state and the release state of the electromagnetic brake according to the axial movement of the armature attracted to the electromagnet, the collision between the friction surface portion and the armature is alleviated by the impact absorbing member, so that the collision noise can be reduced. In addition, since the electromagnetic brake only needs to generate a friction torque, between the armature and the friction surface portion, for delaying the rotation of the engagement element cage with respect to the rotating shaft, it is also possible to avoid an increase in size of the electromagnetic brake.

The following configuration is preferable: The electromagnet comprises a field core axially opposed to the armature; and a solenoid coil wound around the field core, and the armature comprises a movable member configured to be directly attracted and stuck to the field core when the electromagnet is excited. With this configuration, there is no need to separately provide to the electromagnet a rotor with which the armature is to come in contact, between the electromagnet and the armature, and, as a result, it is possible to reduce the size and the number of parts of the electromagnetic brake. In addition, since no rotor is provided between the electromagnet and the armature, the magnetic flux efficiently circulates between the electromagnet and the armature as compared with the case where a rotor is provided. Therefore, it is possible to increase the attraction force of the electromagnet with respect to the armature and thus to increase the braking force to the engagement element cage, and it is therefore possible to set the resistance of the above-described centering spring to be strong. Therefore, it is possible to cause the driver to sense that the direction of the steering target is in the vicinity of the stroke end by rapidly making, immediately after the electromagnetic brake operates, the rotation operation of the steering wheel heavier than when the electromagnet is released.

The impact absorbing member preferably comprises a resin member for fixing the solenoid coil. With this configuration, the resin member for fixing the position of the solenoid coil with respect to the field core can be used also as the impact absorbing member, so that the number of parts can be reduced.

The following configuration is preferable: The electromagnetic brake further comprises, for example, a separation spring supporting the armature at a position axially away from the friction surface portion when the electromagnet is not excited, the separation spring being disposed to store force according to axial movement of the armature attracted when the electromagnet is excited, and the armature is rotationally fixed to the engagement element cage. With this configuration, the electromagnetic brake is of the excited operation type; therefore, considering that a situation in which the direction of the steering target reaches the stroke end rarely occurs, the time duration in which the electromagnetic brake is in the non-excited state is longer, and the energy saving performance is excellent.

The electromagnetic brake preferably further comprises, for example, a friction member rotationally fixed to the engagement element cage, and disposed to be axially movable with respect to the engagement element cage; a friction surface portion that is axially opposed to the friction member, and that is stationary with respect to the shaft; and an actuation spring disposed such that when the electromagnet is not excited, the actuation spring biases the friction member so as to be pressed against the friction surface portion, and such that when the electromagnet is excited, pressing of the friction member weakens according to axial movement of the armature attracted to the electromagnet. With this configuration, since the electromagnetic brake is of the non-excited operation type, even when no power is supplied, the steering is locked, and it is possible to prevent theft of the vehicle or the like.

The following configuration is preferable: The steering system further comprises a reaction force motor configured to apply a steering reaction force to the steering wheel, the steering target comprises a pair of right and left steered wheels, and the outer ring, the engagement elements, the engagement element cage, and the electromagnetic brake are disposed between the steering wheel and the reaction force motor, or disposed on a side of the reaction force motor axially opposite from the steering wheel. With this configuration, the steer-by-wire type steering system for a vehicle can cause the driver to reliably sense, via the steering wheel, that the direction of the steered wheels has reached the stroke end.

In order to achieve the above object, a fourth invention provides a steer-by-wire type steering system comprising: a steering wheel; a steering sensor configured to detect an operation amount of the steering wheel; a steering actuator configured to change a direction of a steering target according to the operation amount of the steering wheel detected by the steering sensor; and a reaction force motor configured to apply a steering reaction force to the steering wheel; characterized in that the steer-by-wire type steering system further comprises: a shaft coupled to the steering wheel so as to rotate in unison with the steering wheel; an outer ring having an inner periphery disposed around the shaft; engagement elements disposed between the shaft and the inner periphery of the outer ring; an engagement element cage retaining the engagement elements, and disposed to be circumferentially movable between an engagement position where the engagement elements are engaged with the shaft and the inner periphery of the outer ring and a disengagement position where the engagement elements are disengaged from the shaft and the inner periphery of the outer ring; a centering spring elastically holding the engagement element cage at the disengagement position, and rotationally fixed to the shaft and the engagement element cage so as to rotate in unison with the shaft; an electromagnetic brake configured to brake the engagement element cage; and a control unit configured to perform: a motor control operation to increase a rotational torque of the reaction force motor such that the steering reaction force increases as the direction of the steering target approaches a stroke end; and, in addition, a braking control operation to activate the electromagnetic brake.

With the above configuration, when the shaft rotates in a release state where the electromagnetic brake does not brake the engagement element cage, the centering spring rotationally fixed to the shaft so as to rotate in unison with the shaft transmits the rotational force of the shaft to the engagement element cage, and holds the engagement element cage at the disengagement position with respect to the shaft. Therefore, the engagement elements cannot be engaged with the shaft and the inner periphery of the outer ring, so that the steering wheel is allowed to rotate. On the other hand, when the steering wheel is rotationally operated in an operating state where the electromagnetic brake brakes the engagement element cage, since the engagement element cage to which the rotational force of the shaft is transmitted from the centering spring is braked by the electromagnetic brake, the engagement element cage and the shaft rotate relative to each other. With this relative rotation, when the engagement element cage reaches the engagement position against the centering spring, the engagement elements engage with the shaft and the inner periphery of the outer ring, so that the shaft is reliably prevented from further rotating. Here, considering the operation timings of the reaction force motor and the electromagnetic brake, the control unit first performs a motor control operation, and the steering reaction force gradually increases as the direction of the steering target approaches the stroke end. However, when the driver does not notice the increase in the steering reaction force and further continues the rotation operation of turning the steering wheel, the control unit further performs the braking control operation. As a result, the resistance (the reaction force from the centering spring) when the centering spring is elastically deformed during the movement, of the engagement element cage braked by the electromagnetic brake, from the disengagement position to the engagement position is applied to the steering wheel via the shaft, and the resistance increases as the engagement element cage approaches the engagement position. Therefore, as the direction of the steering target approaches the stroke end, a reaction force in which the steering reaction force by the reaction force motor and the resistance of the centering spring are added up is applied to the steering wheel, so that it is possible to cause the driver to more easily sense that the direction of the steering target is close to the stroke end. However, when the driver does not stop the rotation operation of turning the steering wheel and the engagement element cage reaches the engagement position, the engagement elements are engaged with the shaft and the inner periphery of the outer ring, thereby reliably preventing the steering wheel from rotating. Therefore, it is possible to cause the driver to sense, via the steering wheel, that the direction of the steering target has reached the stroke end.

The electromagnetic brake preferably comprises, for example: an armature rotationally fixed to the engagement element cage and disposed to be axially movable; a friction surface portion fixed at a position axially opposed to the armature; an electromagnet axially opposed to the armature; and a separation spring supporting the armature at a position axially away from the electromagnet and the friction surface portion when the electromagnet is not excited, the separation spring being disposed to store force according to axial movement of the armature attracted to the friction surface portion by the electromagnet when the electromagnet is excited. With this configuration, the electromagnetic brake is of the excited operation type; therefore, considering that a situation in which the direction of the steering target reaches the stroke end rarely occurs, the time duration in which the electromagnetic brake is in the non-excited state is longer, and the energy saving performance is excellent.

Here, the armature is preferably rotationally fixed to the engagement element cage with circumferential play. The following situation possibly occurs: When the driver tries to fully turn the steering wheel in one circumferential direction, the driver is surprised at the fact that the rotation of the steering wheel in the one circumferential direction is prevented by the above-described engagement, and the driver hastily performs a sudden reverse steering operation of turning the steering wheel in the other circumferential direction. In the beginning of the sudden reverse steering operation, the armature is attracted to the friction surface portion by the electromagnet. In a case where the armature braked by the friction surface portion and the engagement element cage to which the centering spring transmits the other rotational torque in the circumferential direction of the shaft are rotationally fixed without play in the circumferential direction, there is a concern that the electromagnetic brake is not released by the control unit in time, thereby failing to unlock at the time of the sudden reverse steering operation. When the armature is rotationally fixed to the engagement element cage with play in the circumferential direction, smooth relative rotation between the braked armature and the engagement element cage that is co-rotated by the shaft via the centering spring is performed within the play at the time of the sudden reverse steering operation, so that the above-described failure in unlocking can be prevented.

The electromagnetic brake preferably comprises: a friction member rotationally fixed to the engagement element cage, and disposed to be axially movable with respect to the engagement element cage; a friction surface portion that is axially opposed to the friction member, and that is stationary with respect to the shaft; an electromagnet; an armature axially opposed to the electromagnet; and an actuation spring disposed such that when the electromagnet is not excited, the actuation spring biases the friction member so as to be pressed against the friction surface portion, and such that when the electromagnet is excited, pressing of the friction member weakens according to axial movement of the armature attracted to the electromagnet. With this configuration, since the electromagnetic brake is of the non-excited operation type, even when no power is supplied, the steering is locked, and it is possible to prevent theft of the vehicle or the like.

Here, the friction member is preferably rotationally fixed to the engagement element cage with circumferential play. At the beginning of the sudden reverse steering operation as described above, the armature is not attracted by the electromagnet, and the friction member is pressed against the friction surface portion by the actuation spring. In the case where the friction member braked by the friction surface portion and the engagement element cage to which the centering spring transmits the other rotational torque in the circumferential direction of the shaft are rotationally fixed without play in the circumferential direction, there also is a concern of the above-described failure in unlocking. When the friction member is rotationally fixed to the engagement element cage with play in the circumferential direction, smooth relative rotation between the braked friction member and the engagement element cage that is co-rotated by the shaft via the centering spring is performed within the play at the time of the sudden reverse steering operation, so that the failure in unlocking can be prevented.

The following configuration is preferable: The electromagnet comprises a field core axially opposed to the armature; and a solenoid coil wound around the field core, and the armature comprises a movable member configured to be directly attracted and stuck to the field core when the electromagnet is excited. With this configuration, it is possible to eliminate, between the electromagnet and the armature, the rotor that is an object with which the armature comes into contact, and, as a result, it is possible to reduce the size and the number of parts of the electromagnetic brake. In addition, since no rotor is provided between the electromagnet and the armature, the magnetic flux efficiently circulates between the electromagnet and the armature as compared with the case where a rotor is provided. Therefore, it is possible to increase the attraction force of the electromagnet with respect to the armature and thus to increase the braking force to the engagement element cage, and it is therefore possible to set the resistance of the above-described centering spring to be strong. Therefore, it is possible to cause the driver to sense that the direction of the steering target is in the vicinity of the stroke end by rapidly making, immediately after the electromagnetic brake operates, the rotation operation of the steering wheel heavier than when the electromagnet is released.

The following configuration is preferable: The control unit is configured to perform a release control operation to release the electromagnetic brake when from a state in which the direction of the steering target has reached the stroke end by turning the steering wheel in one circumferential direction, the steering wheel is turned in the other circumferential direction, and the shaft and the engagement element cage are disposed to be allowed to rotate in the other circumferential direction from when the direction of the steering target reaches the stroke end until the electromagnetic brake is released. With this configuration, at the time of the above-described sudden reverse steering operation, it is possible to reliably prevent the failure in unlocking by allowing the shaft and the engagement element cage to reversely rotate until the electromagnetic brake is released.

The following configuration is preferable: The steering target comprises a pair of right and left steered wheels, and the outer ring, the engagement elements, the engagement element cage, and the electromagnetic brake are disposed between the steering wheel and the reaction force motor, or disposed on a side of the reaction force motor axially opposite from the steering wheel. With this configuration, the steer-by-wire type steering system for a vehicle can cause the driver to reliably sense, via the steering wheel, that the direction of the steering target has reached the stroke end.

In order to achieve the above object, a fifth invention provides a steer-by-wire type steering system comprising: a steering wheel; a steering sensor configured to detect an operation amount of the steering wheel; a steering actuator disposed to be mechanically separated from the steering wheel, and configured to change a direction of a steering target according to the operation amount of the steering wheel detected by the steering sensor; a shaft coupled to the steering wheel so as to rotate in unison with the steering wheel; and a brake unit comprising an inner ring coupled to the shaft; an outer ring fixed; and engagement elements disposed between an outer periphery of the inner ring and an inner periphery of the outer ring, the brake unit being configured to switch between an engaged state in which the inner ring and the outer ring are engaged with each other via the engagement elements and a disengaged state in which the inner ring and the outer ring are disengaged from each other, wherein the steering sensor is disposed at an end of the shaft opposite from the steering wheel, and wherein the motion converting mechanism is configured such that when the direction of the steering target reaches a stroke end, the motion converting mechanism energizes the electromagnet so as to circumferentially move the engagement elements from a position for the disengaged state to a position for the engaged state, thereby locking the inner ring and the outer ring, and such that when the direction of the steering target leaves from the stroke end, the motion converting mechanism de-energizes the electromagnet so as to circumferentially move the engagement elements from the position for the engaged state to the position for the disengaged state, thereby unlocking the inner ring and the outer ring.

Here, the following configuration can be adopted: The brake unit comprises an engagement element cage retaining the engagement elements; an armature supported to be axially movable; an electromagnet configured to attract and axially move the armature when the electromagnet is energized; and a motion converting mechanism configured to circumferentially move the engagement element cage from one of the position for the engaged state and the position for the disengaged state to the other of the position for the engaged state and the position for the disengaged state according to movement of the armature.

In this aspect, the following configuration can be adopted: The steering system further comprises a tubular brake case in which the electromagnet and the armature are received, and the outer ring is integrally formed with the tubular brake case.

Alternatively, the following configuration can be adopted; The steering system further comprises a tubular brake case in which the electromagnet and the armature are received, the tubular brake case is formed of a non-magnetic material, and the outer ring is formed separately from the tubular brake case and is rotationally fixed to the tubular brake case.

In each of these aspects, the following configuration can be adopted: The electromagnet is disposed on an outer periphery of the end of the shaft opposite from the steering wheel, and the inner ring includes an extension portion entering between an inner diameter surface of the electromagnet and an outer diameter surface of the shaft, and rotatably supported on the tubular brake case by a bearing.

In each of these aspects, the following configuration can be adopted: The tubular brake case has, on a side of a steering wheel side, an end opening closed by a lid body, the shaft is rotatably supported on the lid body by a bearing, and the end of the shaft opposite from the steering wheel is coaxially connected to an input shaft of the steering sensor.

### EFFECTS OF THE INVENTION

With the steer-by-wire type steering system of the first invention, it is possible to move, by switching between an energized state and a de-energized state of the electromagnet, the engagement element cage from the disengagement position where the engagement of the engagement elements between the inner ring and the outer ring is released to the engagement position where the engagement elements are engaged between the inner ring and the outer ring, whereby it is possible to switch from the steering unlocked state where the rotation of the steering wheel is allowed to the steering locked state where the rotation of the steering wheel is prevented. Here, when the engagement element cage is moved to the engagement position, the engagement elements are physically engaged between the inner ring and the outer ring, thereby preventing the rotation of the inner ring, so that the rotation of the steering wheel coupled to the inner ring via the shaft is reliably prevented. Therefore, by switching between the energized state and the de-energized state of the electromagnet when the direction of the steering object reaches the stroke end, the steering wheel is prevented from further rotating, so that it is possible to cause the driver to reliably sense, via the steering wheel, that the direction of the steering target has reached the stroke end.

Also with the steer-by-wire type steering system of the second invention, it is possible to cause, when the direction of the steering target reaches the stroke end, the driver to reliably sense the situation via the steering wheel.

Also with the steer-by-wire type steering system according to the third invention, it is possible to cause, when the direction of the steering target reaches the stroke end, the driver to reliably sense the situation via the steering wheel by switching between the braking state and the release state of the electromagnetic brake, and it is possible to avoid an increase in size of the electromagnetic brake and, at the same time, to reduce a collision noise at the electromagnetic brake.

Also with the steer-by-wire type steering system of the fourth invention, it is possible to cause, when the direction of the steering target reaches the stroke end, the driver to reliably sense the situation via the steering wheel.

With the steer-by-wire type steering system of the fifth invention, the electric power consumption can be reduced, and the temperature rise can therefore be reduced, so that the system can be compact.

### BRIEF DESCRIPTION OF THE DRAWINGS

Fig. 1 schematically shows a steer-by-wire type steering system according to a first embodiment of the first invention.
Fig. 2 is a cross-sectional view in the vicinity of a brake unit is Fig. 1.
Fig. 3 is an enlarged view in the vicinity of a motion converting mechanism in Fig. 2.
Fig. 4 is a cross-sectional view taken along line IV-IV in Fig. 2.
Fig. 5 is a view showing a second embodiment of the first invention, in correspondence to Fig. 2.
Fig. 6 is a cross-sectional view taken along line VI-VI in Fig. 5.
Fig. 7 is a view showing a third embodiment of the first invention, in correspondence to Fig. 1.
Fig. 8 is a cross-sectional view in the vicinity of a brake unit in Fig. 7.
Fig. 9 is a view showing a fourth embodiment of the first invention, in correspondence to Fig. 2.
Fig. 10 is a cross-sectional view taken along line X-X in Fig. 9.
Fig. 11 is a cross-sectional view showing a state in which a non-circular shaft portion shown in Fig. 10 has rotated relative to the non-circular hole portion and rotation stopper surfaces of an outer periphery of the non-circular shaft portion are received by an inner surface of the non-circular hole portion.
Fig. 12 is an exploded perspective view of the non-circular shaft portion, the non-circular hole portion, and an elastic member shown in Fig. 9.
Fig. 13 is a view showing a fifth embodiment of the first invention, in correspondence to Fig. 10.
Fig. 14 is a view showing a sixth embodiment of the first invention, in correspondence to Fig. 2.
Fig. 15 is a cross-sectional view taken along line XV-XV in Fig. 14.
Fig. 16 is a view showing a seventh embodiment of the first invention, in correspondence to Fig. 2.
Fig. 17 is a cross-sectional view taken along line XVII-XVII in Fig. 16.
Fig. 18 is a cross-sectional view taken along line XVIII-XVIII in Fig. 16.
Fig. 19 is a cross-sectional view taken along line XIX-XIX in Fig. 18.
Fig. 20 is a cross-sectional view taken along line XX-XX in Fig. 16.
Fig. 21 is a cross-sectional view taken along line XXI-XXI in Fig. 20.
Fig. 22 is a view showing a state in which a flange of a first split cage and a flange of a second split cage shown in Fig. 21 are axially close to each other and have relatively rotated.
Fig. 23 is a view showing a modified example in which an outer ring and a brake case shown in Fig. 16 are integrally formed.
Fig. 24 is a diagram showing an eighth embodiment of the first invention, in correspondence to Fig. 2.
Fig. 25 is an enlarged cross-sectional view in the vicinity of an elastic spacer in Fig. 24.
Fig. 26 is a view showing another example of an elastic spacer in Fig. 25.
Fig. 27 is a view showing still another example of the elastic spacer in Fig. 25.
Fig. 28 is a diagram showing a ninth embodiment of the first invention, in correspondence to Fig. 2.
Fig. 29 is a view showing a tenth embodiment of the first invention, in correspondence to Fig. 2.
Fig. 30 is a cross-sectional view taken along line XXX-XXX in Fig. 29.
Fig. 31 is a view showing an eleventh embodiment of the first invention, in correspondence to Fig. 2.
Fig. 32 is a cross-sectional view in the vicinity of an excitation actuated type electromagnetic brake included in a steer-by-wire type steering system according to a first embodiment of the second invention.
Fig. 33 is a diagram schematically showing the steer-by-wire type steering system according to the first embodiment of the second invention.
Fig. 34 is a cross-sectional view taken along line XXXIV-XXXIV in Fig. 32.
Fig. 35 is an enlarged view in the vicinity of an armature in Fig. 32. Fig. 36 is a cross-sectional view showing a state where the engagement element cage is moving from the state in Fig. 34.
Fig. 37 is a cross-sectional view showing a state where the engagement element cage has reached the engagement position from the state in Fig. 36.
Fig. 38 is a graph schematically showing the relation between a centering spring torque and a rotational angle of a shaft in Fig. 32.
Fig. 39 is a cross-sectional view in the vicinity of an excitation actuated type electromagnetic brake according to a second embodiment of the second invention.
Fig. 40 is a cross-sectional view in the vicinity of an electromagnetic brake included in a steer-by-wire type steering system according to a first embodiment of the third invention.
Fig. 41 is an enlarged view in the vicinity of an armature in Fig. 40.
Fig. 42 is a cross-sectional view in the vicinity of an electromagnetic brake according to a second embodiment of the third invention.
Fig. 43 is a partial cross-sectional view showing lower surfaces of a friction member and an engagement element cage in Fig. 42.
Fig. 44 is a cross-sectional view in the vicinity of an electromagnetic brake included in a steer-by-wire type steering system according to a first embodiment of the fourth invention.
Fig. 45 is an enlarged view in the vicinity of an armature in Fig. 44.
Fig. 46 is a cross-sectional view taken along line XLVI-XLVI in Fig. 44.
Fig. 47 is a cross-sectional view showing a state where the engagement element cage is moving from the state in Fig. 46, using a cross section equivalent to Fig. 46.
Fig. 48 is a cross-sectional view showing when the engagement element cage turns over from the state in Fig. 47.
Fig. 49 is a graph schematically showing the relation between a steering torque and a rotational angle of a shaft in the first embodiment of the fourth invention.
Fig. 50 is a cross-sectional view in the vicinity of an electromagnetic brake according to a second embodiment of the fourth invention.
Fig. 51 is a cross-sectional view showing a friction member in Fig. 50 from the right side.
Fig. 52 is a diagram schematically showing a steer-by-wire type steering system according to an embodiment of the fifth invention.
Fig. 53 is a cross-sectional view in the vicinity of a brake unit in Fig. 52.
Fig. 54 is an enlarged view in the vicinity of a motion converting mechanism in Fig. 53.
Fig. 55 is a cross-sectional view taken along line LV-LV in Fig. 53.

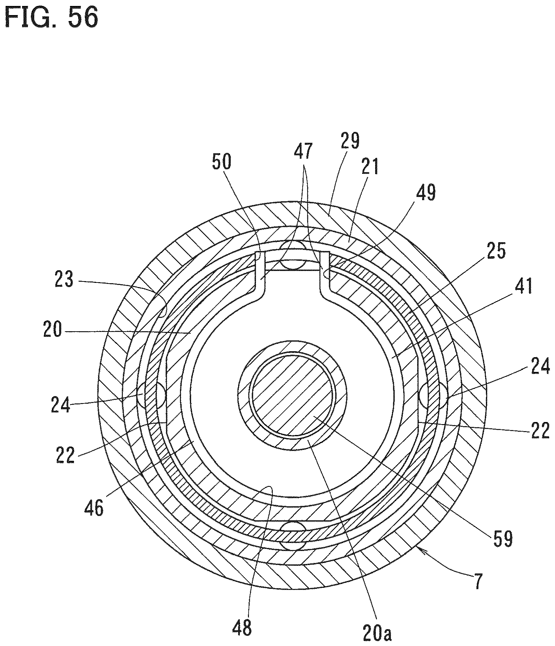

Fig. 56 is a cross-sectional view taken along line LVI-LVI in Fig. 53.

### BEST MODE FOR CARRYING OUT THE INVENTION

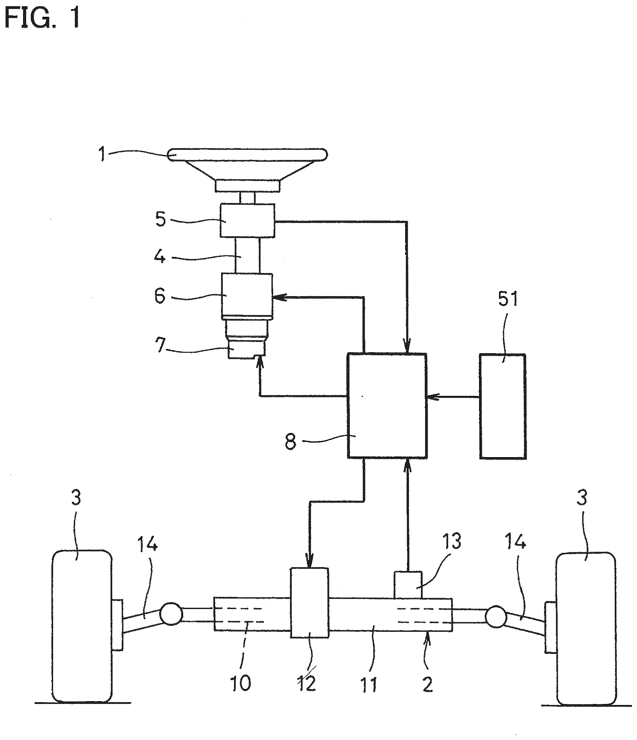

Fig. 1 shows a steer-by-wire type steering system according to the first embodiment of the first invention. This steering system is a steer-by-wire type steering system for a vehicle that converts the operation amount of a steering wheel 1 by the driver into an electric signal, and controls a steering actuator 2 based on the electric signal, thereby changing the direction of a pair of right and left steered wheels 3.

This steering system includes a steering wheel 1 steered by the driver; a steering shaft 4 coupled to the steering wheel 1; a steering sensor 5 that detects the operation amount of the steering wheel 1; a reaction force motor 6 that applies a steering reaction force to the steering wheel 1; a brake unit (electromagnetic clutch unit) 7 configured such that when one of an energized state and a de-energized state is switched to the other state, one of a steering locked state in which rotation of the steering wheel 1 is prevented and a steering unlocked state in which rotation of the steering wheel 1 is allowed is switched to the other state by the brake unit 7; a steering actuator 2 disposed to be mechanically separated from the steering wheel 1; and a control unit 8.

The steering shaft 4 is coupled to the steering wheel 1 so as to rotate in unison with the steering wheel 1 when the steering wheel 1 is steered. The steering sensor 5 is mounted to the steering shaft 4. The steering sensor 5 may be, for example, a steering angle sensor that detects the steering angle of the steering wheel 1, or a steering torque sensor that detects the steering torque applied to the steering wheel 1 by the driver.

The reaction force motor 6 is an electric motor that generates rotational torque by energization. The reaction force motor 6 is coupled to an end of the steering shaft 4. The reaction force motor 6 applies rotational torque to the steering shaft 4 such that the steering reaction force is applied to the steering wheel 1 through the shaft 4.

The steering actuator 2 includes a steering shaft 10; a steering shaft housing 11; a steering motor 12 that moves the steering shaft 10 in the right- and-left direction of the vehicle; and a steering sensor 13 that detects the position of the steering shaft 10. The steering shaft 10 is supported by the steering shaft housing 11 so as to be movable in the right-to-left direction of the vehicle. The steering shaft housing 11 receives the central portion of the steering shaft 10 such that the right and left ends of the steering shaft 10 protrude beyond the steering shaft housing 11.

The steering motor 12 and the steering sensor 13 are mounted to the steering shaft housing 11. A motion converting mechanism (not shown) is mounted between the steering motor 12 and the steering shaft 10 so as to convert the rotation output from the steering motor 12, into the linear motion of the steering shaft 10. The right and left ends of the steering shaft 10 are coupled, respectively, to the right and left steered wheels 3 via tie rods 14 such that when the steering shaft 10 axially moves, the direction of the right and left steered wheels 3 change accordingly.

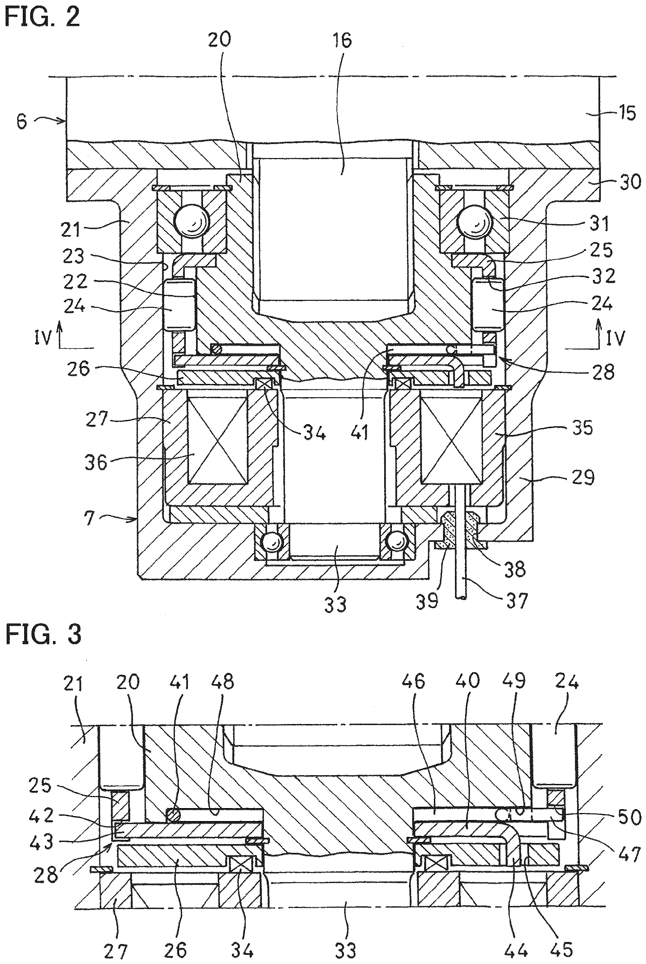

As shown in Fig. 2, the reaction force motor 6 includes a motor case 15, and a motor shaft 16 protruding beyond the motor case 15 toward the side opposite/remote from the steering wheel 1 (see Fig. 1) (toward the lower side in Fig. 2). The motor shaft 16 is rotatably supported by a rolling bearing (not shown) mounted in the motor case 15. Also, the motor shaft 16 is coupled to the steering shaft 4 (see Fig. 1) so as to rotate in unison with the steering wheel 1 and the steering shaft 4 (see Fig. 1). The motor case 15 is fixed to the vehicle body (not shown) so as to be non-rotatable.

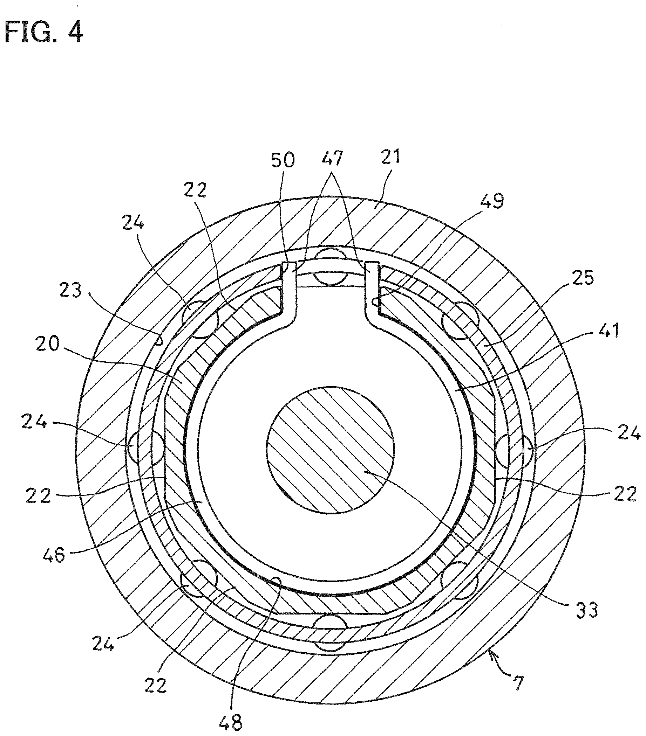

The brake unit 7 includes an inner ring 20 coupled to the motor shaft 16; an outer ring 21 fixed to the motor case 15; a plurality of cam surfaces 22 (see Fig. 4) formed on the outer periphery of the inner ring 20; a cylindrical surface 23 formed on the inner periphery of the outer ring 21; engagement elements 24 disposed between the cylindrical surface 23 and the respective cam surfaces 22; an engagement element cage 25 retaining the engagement elements 24; an armature 26 supported to be axially movable; an electromagnet 27 that attracts the armature 26 so as to axially move when the electromagnet 27 is energized; and a motion converting mechanism 28 that circumferentially moves the engagement element cage 25 according to the movement of the armature 26.

The inner ring 20 is fitted on the outer periphery of the motor shaft 16 via/by splines. Due to this spline fitting, the motor shaft 16 is coupled in a play-free state to the inner ring 20 so as not to rotate relative to the inner ring 20 at all. The outer ring 21 is integrally formed with a brake case (clutch case) 29. The brake case 29 is a tubular member in which constituent parts of the brake unit 7 (the inner ring 20, the engagement elements 24, the engagement element cage 25, the armature 26, the electromagnet 27, etc.) are received all together. A radially outwardly extending flange 30 is formed at one axial end of the brake case 29, and the flange 30 is fixed to the axial end surface of the motor case 15 by bolts (not shown). A bearing 31 is mounted to the outer ring 21 so as to rotatably support the inner ring 20.

By fixing the brake case 29 to the motor case 15, the brake case 29 is kept fixed not to rotate even when the steering wheel 1 (see Fig. 1) is steered. Also, by forming the outer ring 21 integrally with the brake case 29, the outer ring 21 is coupled to the brake case 29.

As shown in Fig. 4, the cam surfaces 22 of the inner ring 20 on its outer periphery are radially opposed to the cylindrical surface 23 of the outer ring 21 on its inner periphery. A wedge-shaped space which gradually narrows from its circumferential center toward both circumferential ends thereof is defined between each cam surface 22 and the cylindrical surface 23.

The engagement element cage 25 has a plurality of pockets 32 (see Fig. 2) radially extending through the cage 25 and circumferentially spaced apart from each other. The engagement elements 24 are received in the respective pockets 32. The engagement element cage 25 is supported to be circumferentially movable, relative to the inner ring 20, between an engagement position where by circumferentially moving the engagement elements 24 from the circumferential central positions of the respective cam surfaces 22 (see Fig. 4), the engagement elements 24 are engaged with the respective cam surfaces 22 and the cylindrical surface 23, and a disengagement position where by moving the engagement elements 24 to the circumferential central positions of the respective cam surfaces 22, the engagement elements 24 are disengaged from the respective cam surfaces 22 and the cylindrical surface 23.

As shown in Fig. 2, the armature 26 is axially movably supported by the outer periphery of an inner ring shaft portion 33 integrally formed with the inner ring 20. The armature 26 is a disk-shaped member made of a magnetic material (such as iron or silicon steel). The electromagnet 27 is axially opposed to the armature 26. The electromagnet 27 is fixed to the brake case 29 so as to move neither axially nor circumferentially. A separation spring 34 is mounted between the armature 26 and the electromagnet 27 so as to bias the armature 26 in the direction in which the armature 26 is separated (moves away) from the electromagnet 27.

The electromagnet 27 includes an annular field core 35 having a C-shaped cross section axially opening toward the armature 26; and a solenoid coil 36 wound around the field core 35. When the solenoid coil 36 is energized, an electric circuit passing through the field core 35 and the armature 26 is formed, so that the armature 26 is attracted to the field core 35. The brake case 29 is formed with a through hole 38 through which a lead wire 37 for supplying electric power to the solenoid coil 36 passes. A grommet 39 made of rubber is mounted in the through hole 38 so as to fill the gap between the inner periphery of the through hole 38 and the outer periphery of the lead wire 37.

As shown in Fig. 3, the motion converting mechanism 28 includes an intermediate plate 40 that is rotationally fixed to the armature 26 so as to be axially movable relative to the armature 26, and that is rotationally fixed to the engagement element cage 25; and a centering spring 41 that elastically holds the engagement element cage 25 at the disengagement position.

The intermediate plate 40 has, on its outer periphery, an engaging projection 43 engaged in an engaging recess 42 formed in the engagement element cage 25. By the engagement between the engaging projection 43 and the engaging recess 42, the intermediate plate 40 is rotationally fixed to the engagement element cage 25 so as to circumferentially move in unison with the engagement element cage 25. The intermediate plate 40 is formed with an axial protrusion 44 axially extending toward the armature 26. The armature 26 is formed with an axial hole 45 in which the axial protrusion 44 of the intermediate plate 40 is axially slidably inserted. Due to the engagement between the axial protrusion 44 and the axial hole 45, the intermediate plate 40 is rotationally fixed to the armature 26 so as to circumferentially move in unison with the armature 26 in a state in which it is axially movable with respect to the armature 26.

As shown in Fig. 4, the centering spring 41 comprises a C-shaped annular portion 46 formed of a steel wire wound into a C-shape; and a pair of extending portions 47 extending radially outward from both ends of the C-shaped annular portion 46, respectively. The C-shaped annular portion 46 is fitted in a circular, spring receiving recess 48 formed in an axial end surface of the inner ring 20. The pair of extending portions 47 are inserted in a radial groove 49 formed in an axial end surface of the inner ring 20 so as to penetrate radially outward from the spring receiving recess 48.

The extending portions 47 of the centering spring 41 protrude beyond the radially outer end of the radial groove 49, and the portions of the extending portions 47 protruding from the radial groove 49 are inserted in a cage groove 50 formed in the engagement element cage 25. The radial groove 49 and the cage groove 50 are formed to have the same circumferential width. The extending portions 47 of the centering spring 41 are in contact with the inner surface of the radial groove 49 and the inner surface of the cage groove 50, and elastically retain the engagement element cage 25 at the disengagement position by circumferential forces acting on the contact portions.

While the electromagnet 27 is de-energized, the brake unit 7 shown in Fig. 2 is in an idling state in which the inner ring 20 can freely rotate with respect to the outer ring 21. That is, when the electromagnet 27 is de-energized, the armature 26 is separated from the electromagnet 27 by the biasing force of the separation spring 34, and the armature 26 is freely rotatable with respect to the electromagnet 27. At this time, since the engagement element cage 25 is retained at the disengagement position by the elastic restoring force of the centering spring 41, even when the inner ring 20 is rotated, the engagement elements 24 are not engaged with the cam surfaces 22 on the outer periphery of the inner ring 20 and the cylindrical surface 23 on the inner periphery of the outer ring 21, and the inner ring 20 and the motor shaft 16 can therefore freely rotate in both normal and reverse directions.

On the other hand, in a state where the electromagnet 27 is energized, the brake unit 7 is in a locked state in which relative rotation of the inner ring 20 is prevented. That is, when the electromagnet 27 is energized, the armature 26 is attracted and stuck to the electromagnet 27, and the armature 26 is brought into frictional contact with the electromagnet 27. Since the armature 26 in frictional contact with the electromagnet 27 is rotationally fixed to the engagement element cage 25 via the intermediate plate 40, when the inner ring 20 is rotated in this state, the rotation of the engagement element cage 25 is restricted, and the inner ring 20 therefore rotates relative to the engagement element cage 25. As a result, the engagement element cage 25 moves from the disengagement position to the engagement position against the elastic force of the centering spring 41, and the engagement elements 24 are engaged with the cam surfaces 22 on the outer periphery of the inner ring 20 and the cylindrical surface 23 on the inner periphery of the outer ring 21, so that rotation of the inner ring 20 is prevented, and the motor shaft 16 coupled to the inner ring 20 is therefore prevented from rotating.

The reaction force motor 6, the brake unit 7, and the steering motor 12 shown in Fig. 1 are controlled by the control unit 8. An external sensor 51, the steering sensor 5, and the steering sensor 13 are electrically connected to the input side of the control unit 8. The external sensor 51 is a vehicle speed sensor or the like that detects a traveling speed of the vehicle. The reaction force motor 6, the brake unit 7, and the steering actuator 2 are electrically connected to the output side of the control unit 8.

The control unit 8 performs control to activate the steering motor 12 according to the operation amount of the steering wheel 1 detected by the steering sensor 5, and the traveling situation (vehicle speed or the like) of the vehicle detected by the external sensor 51 so as to change the direction of the pair of right and left steered wheels 3. At this time, the control unit 8 performs control to activate the reaction force motor 6 such that a steering reaction force having a magnitude according to the operation amount of the steering wheel 1 and the traveling situation of the vehicle is generated.

The control unit 8 further determines whether the direction of the steered wheels 3 has reached the stroke end on the basis of the position of the steering shaft 10 detected by the steering sensor 13. When the control unit determines that the direction of the steered wheels 3 has not reached the stroke end, the electromagnet 27 (see Fig. 2) of the brake unit 7 is de-energized to hold the engagement element cage 25 at the disengagement position. On the other hand, when the control unit determines that the direction of the steered wheels 3 has reached the stroke end, the electromagnet 27 (see Fig. 2) of the brake unit 7 is energized to move the engagement element cage 25 from the disengagement position to the engagement position.

With this steer-by-wire type steering system, it is possible to move, by switching between the energized state and the de-energized state of the electromagnet 27 shown in Fig. 2, the engagement element cage 25 from a disengagement position where the engagement of the engagement elements 24 are disengaged from the inner ring 20 and the outer ring 21, to an engagement position where the engagement elements 24 are engaged with the inner ring 20 and the outer ring 21, whereby it is possible to switch from a steering unlocked state where rotation of the steering wheel 1 is allowed, to a steering locked state where rotation of the steering wheel 1 is prevented. Here, when the engagement element cage 25 is moved to the engagement position, the engagement elements 24 are physically engaged with the inner ring 20 and the outer ring 21, whereby rotation of the inner ring 20 is prevented. Therefore, rotation of the steering wheel 1, which is coupled to the inner ring 20 via the motor shaft 16 and the steering shaft 4 shown in Fig. 1, is reliably prevented. Therefore, by switching between the energized state and the de-energized state of the electromagnet 27 when the direction of the steered wheels 3 reaches the stroke end, the steering wheel 1 is reliably prevented from further rotating, so that it is possible to cause the driver to reliably sense, via the steering wheel 1, that the direction of the steered wheels 3 has reached the stroke end.

In this steer-by-wire type steering system, since the outer ring 21 is formed integrally with the brake case 29 as shown in Fig. 2, the number of parts is small, and the manufacturing cost can be reduced.

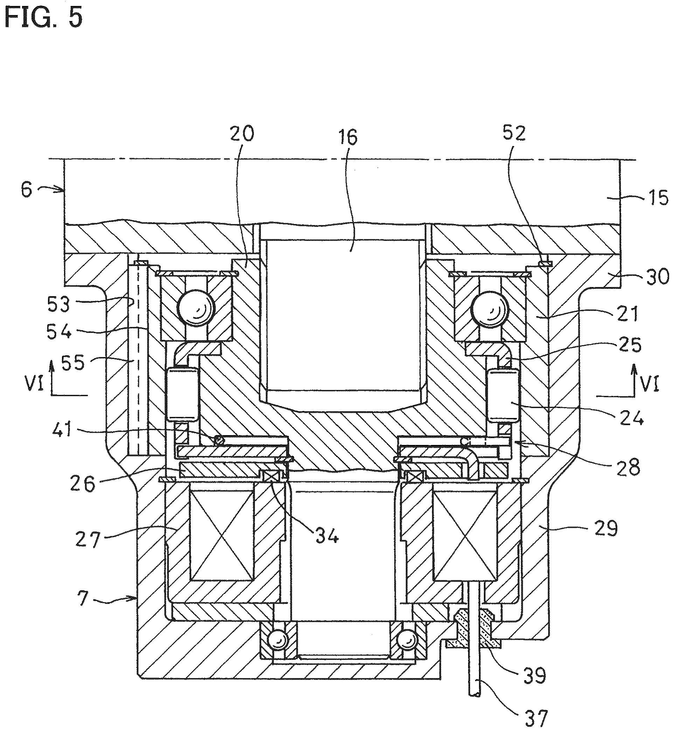

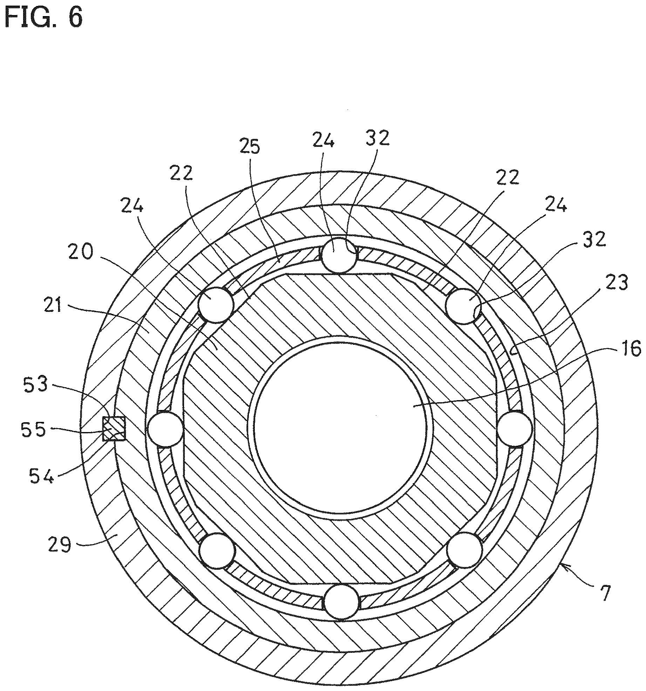

- Figs. 5 and 6 show the second embodiment of the first invention. The second embodiment is different from the first embodiment only in the configurations of the outer ring 21 and the brake case 29, and the other configurations are the same. Therefore, the elements of the second embodiment corresponding to those of the first embodiment are denoted by the same numerals, and the description thereof is omitted.

As shown in Fig. 5, the outer ring 21 is formed separately from the brake case 29. The brake case 29 is made of a non-magnetic material (such as aluminum alloy or copper alloy). On the other hand, the outer ring 21 is formed of a steel material. The outer ring 21 is fitted in the brake case 29, which has a tubular shape, and is prevented from moving out of the brake case 29 by a stop ring 52 mounted on the inner periphery of the brake case 29. As shown in Fig. 6, a common key member 55 is fitted in a key groove 53 formed in the inner periphery of the brake case 29, and a key groove 54 formed in the outer periphery of the outer ring 21, and the outer ring 21 is rotationally fixed to the brake case 29 by the key member 55. Here, the outer ring 21 is coupled to the brake case 29 by being rotationally fixed to the brake case 29 by the key member 55.

If the configuration of the second embodiment of the first invention is adopted, since the brake case 29 is formed of a non-magnetic material, when the electromagnet 27 is energized, the magnetic flux generated from the electromagnet 27 can be prevented from leaking to the brake case 29, so that the armature 26 can be efficiently attracted. Therefore, it is possible to reduce the sizes of the electromagnet 27 and the armature 26, and therefore possible to save space.

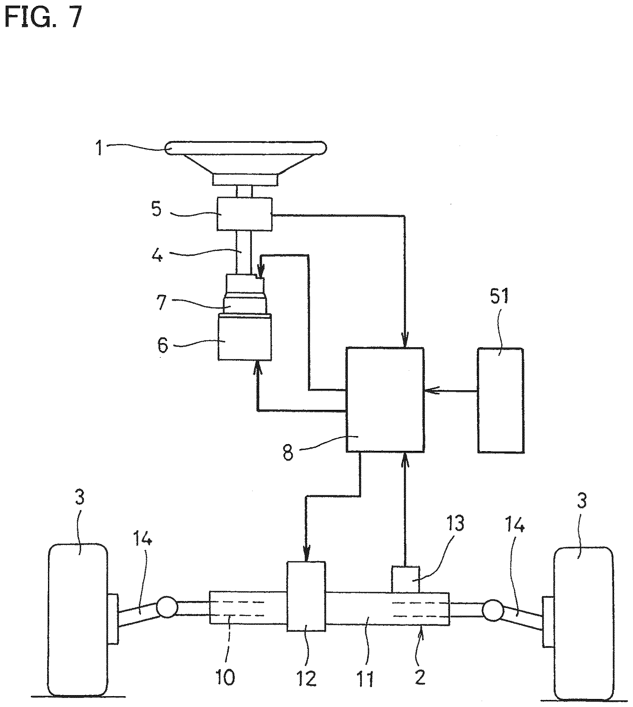

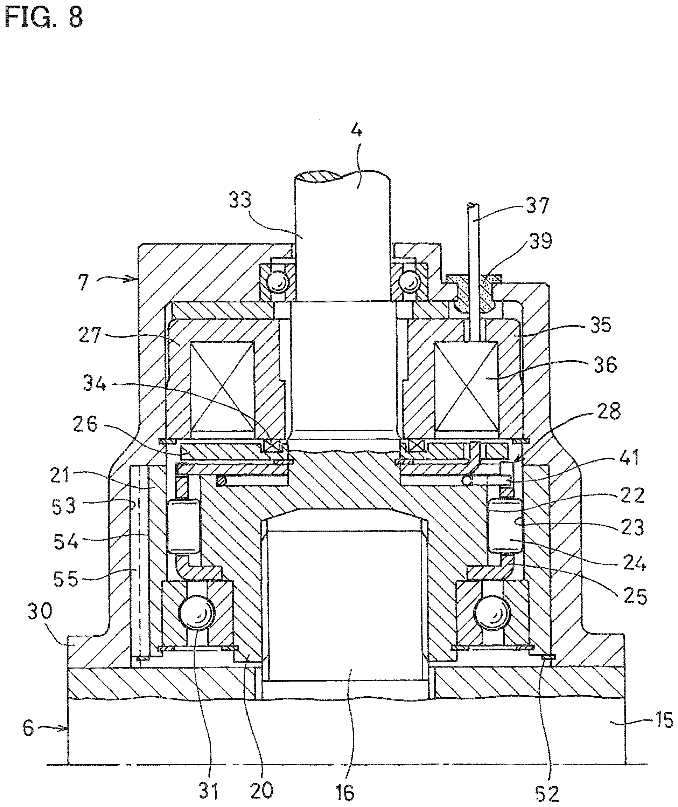

Figs. 7 and 8 show the third embodiment of the first invention. The third embodiment is different from the second embodiment in that while, in the second embodiment, the brake unit 7 is mounted to the side of the reaction force motor 6 opposite/remote from the steering wheel 1 (attached on the lower side in the relevant drawing), in the third embodiment, the brake unit 7 is mounted to the side of the reaction force motor 6 close to the steering wheel 1 (attached on the upper side in the relevant drawing) in a vertically inverted manner. However, the other configurations are basically the same. Therefore, the elements of the third embodiment corresponding to those of the second embodiment are denoted by the same numerals, and the description thereof is omitted.

As shown in Fig. 8, the reaction force motor 6 includes a motor case 15, and a motor shaft 16 protruding beyond the motor case 15 toward the steering wheel 1 (see Fig. 7) (toward the upper side in Fig. 7).

The brake unit 7 includes an inner ring 20 coupled to the steering shaft 4; an outer ring 21 fixed to the motor case 15; a plurality of cam surfaces 22 formed on the outer periphery of the inner ring 20; a cylindrical surface 23 formed on the inner periphery of the outer ring 21; engagement elements 24 disposed between the cylindrical surface 23 and the respective cam surfaces 22; an engagement element cage 25 that retains the engagement elements 24; an armature 26 supported to be axially movable; an electromagnet 27 that attracts the armature 26 so as to axially move when the electromagnet 27 is energized; and a motion converting mechanism 28 that circumferentially moves the engagement element cage 25 according to the movement of the armature 26.

The inner ring 20 is coupled to the steering shaft 4 via an inner ring shaft portion 33 formed integrally with the inner ring 20. In the relevant drawing, the inner ring shaft portion 33 and the steering shaft 4 are integrally formed, but the inner ring shaft portion 33 and the steering shaft 4 may be separate members connected so as to rotate in unison.

In the brake unit 7, since, as in the first embodiment, the engagement element cage 25 is retained at the disengagement position in a state where the electromagnet 27 is de-energized, even when the inner ring 20 is rotated, the engagement elements 24 do not engage with the cam surfaces 22 on the outer periphery of the inner ring 20 and the cylindrical surface 23 on the inner periphery of the outer ring 21, and the inner ring 20 and the steering shaft 4 can therefore freely rotate in both normal and reverse directions.

On the other hand, in the state where the electromagnet 27 is energized, the engagement element cage 25 moves from the disengagement position to the engagement position, and the engagement elements 24 engage with the cam surfaces 22 on the outer periphery of the inner ring 20 and the cylindrical surface 23 on the inner periphery of the outer ring 21, so that rotation of the inner ring 20 is prevented, and the steering shaft 4, which is coupled to the inner ring 20, is also prevented from rotating.

As in the first embodiment, also for the steering system for a vehicle of the third embodiment of the first invention, by switching between the energized state and the de-energized state of the electromagnet 27 when the direction of the steered wheels 3 (see Fig. 7) reaches the stroke end, the steering wheel 1 (see Fig. 7) is reliably prevented from further rotating, so that it is possible to cause the driver to reliably sense, via the steering wheel 1, that the direction of the steered wheels 3 has reached the stroke end.

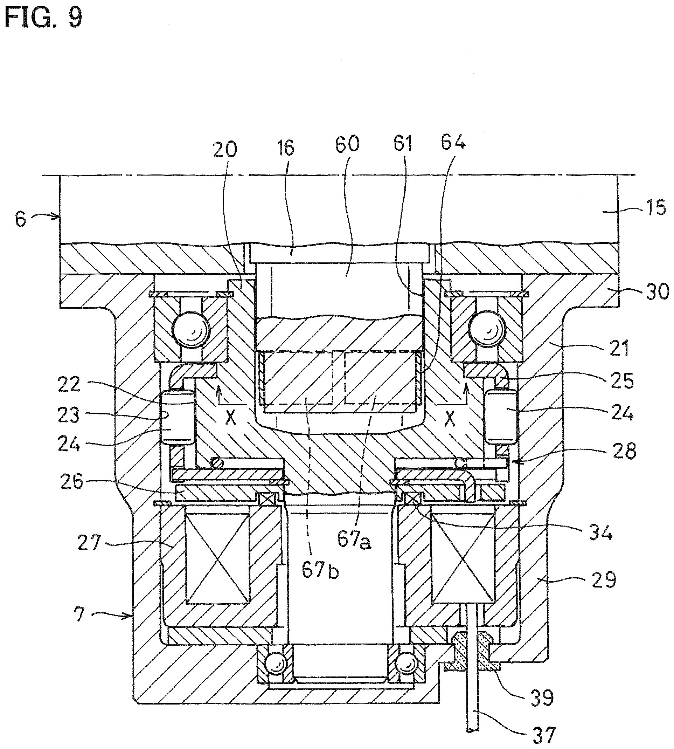

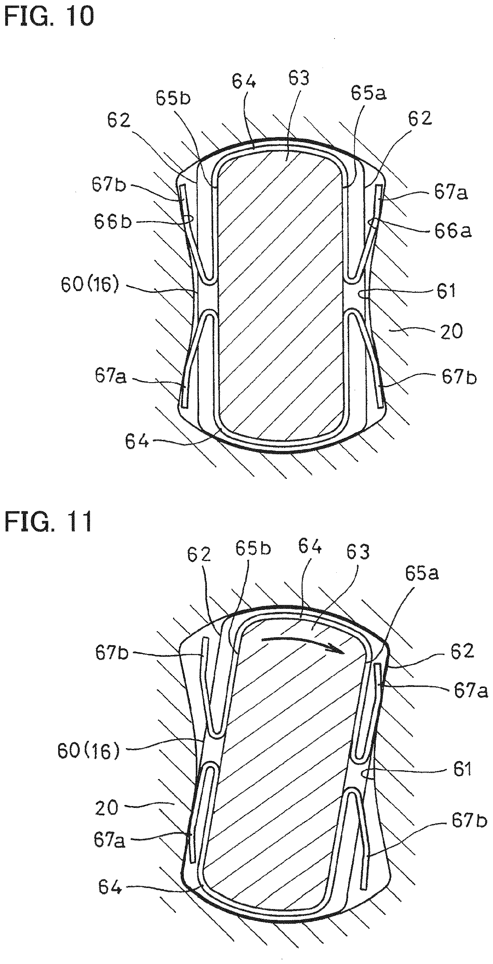

Figs. 9 and 10 show the fourth embodiment of the first invention. The fourth embodiment is different from the first embodiment only in the coupling structure between the inner ring 20 and the motor shaft 16, and the other configurations are the same. Therefore, therefore, the elements of the fourth embodiment corresponding to those of the first embodiment are denoted by the same numerals, and the description thereof is omitted.

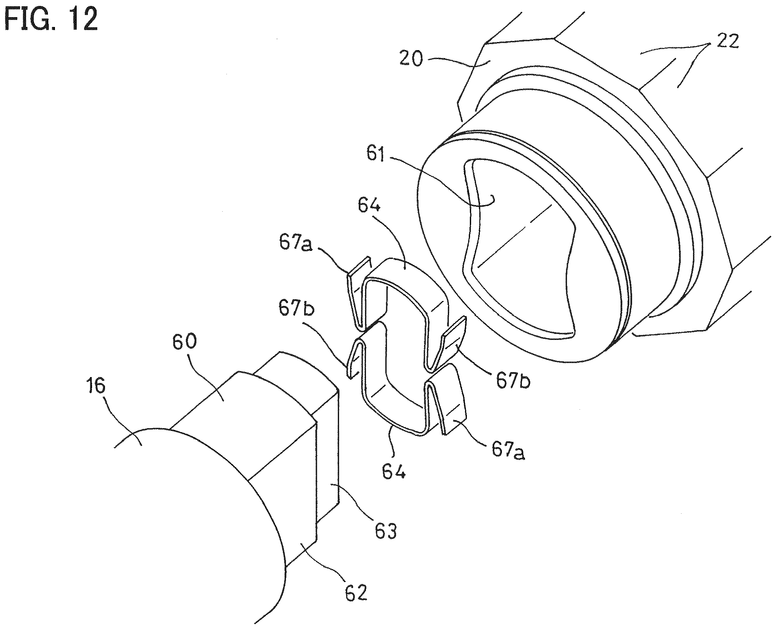

As shown in Fig. 10, the motor shaft 16 includes a non-circular shaft portion 60 having a non-circular cross section. The inner ring 20 is formed with a non-circular hole portion 61 in which the non-circular shaft portion 60 of the motor shaft 16 is fitted with a circumferential gap defined. On the outer periphery of the non-circular shaft portion 60, rotation stopper surfaces 62 and an elastic member holding portion 63 are formed axially side by side (see Fig. 12).

The rotation stopper surfaces 62 are received in direct contact with the inner periphery of the non-circular hole portion 61 when the motor shaft 16 rotates relative to the inner ring 20. The rotation stopper surfaces 62 are formed on both sides, i.e., on one circumferential side and the other circumferential side of the non-circular shaft portion 60. That is, when the motor shaft 16 rotates relative to the inner ring 20 in one circumferential direction, the rotation stopper surface 62 on the one circumferential side is received in direct contact with the inner periphery of the non-circular hole portion 61, and when the motor shaft 16 rotates relative to the inner ring 20 in the other circumferential direction, the rotation stopper surface 62 on the other circumferential side is received in direct contact with the inner periphery of the non-circular hole portion 61.

The elastic member holding portion 63 holds elastic members 64. The elastic members 64 are leaf springs in this embodiment. Each of the elastic members 64 includes a first leaf spring portion 67a circumferentially sandwiched between a surface 65a opposed to one circumferential side of the elastic member holding portion 63 and an inner surface 66a of the non-circular hole portion 61 opposed to the surface 65a in the circumferential direction, and a second leaf spring portion 67b circumferentially sandwiched between a surface 65b opposed to the other circumferential side of the elastic member holding portion 63 and an inner surface 66b of the non-circular hole portion 61 opposed to the surface 65b in the circumferential direction. Each of the elastic members 64 elastically holds the motor shaft 16 in such a manner that the second leaf spring portion 67b biases the non-circular shaft portion 60 to one circumferential side, and, at the same time, the first leaf spring portion 67a biases the non-circular shaft portion 60 to the other circumferential side such that both of the biasing forces are balanced.

As shown in Fig. 11, the elastic member holding portion 63 is formed to have the surfaces 65a and 65b at positions retracted in the circumferential direction from the rotation stopper surfaces 62 so that the elastic members 64 are not excessively compressed and permanently deformed when the motor shaft 16 rotates relative to the inner ring 20 to a position where the rotation stopper surfaces 62 are received by the inner periphery of the non-circular hole portion 61.

Here, the non-circular shaft portion 60 and the non-circular hole portion 61 couple the inner ring 20 and the motor shaft 16 to each other with such play of a predetermined angular range of the motor shaft 16 with respect to the inner ring 20 that the motor shaft 16 is allowed to relatively rotate with respect to the inner ring 20 within a predetermined angular range (the angular range of a predetermined angle in both normal and reverse directions with respect to the central position of the angular range, where the predetermined angle is 5° or more and 15° or less (about 10° in the relevant drawing)) and that the motor shaft 16 is prevented from relatively rotating beyond the predetermined angular range. As shown in Fig. 11, the elastic members 64 (the first leaf spring portions 67a and the second leaf spring portions 67b) are elastically deformed when the inner ring 20 and the motor shaft 16 rotate relative to each other from a state where the inner ring 20 and the motor shaft 16 are at the central position in the predetermined angular range, and the elastic restoring force biases the inner ring 20 and the motor shaft 16 toward the central position (the position in Fig. 10) in the predetermined angular range.

The steering system for a vehicle of the fourth embodiment of the first invention can prevent a situation where the steering wheel 1 is locked and does not move in a case where the direction of the steered wheels 3 (see fig. 1) has reached the stroke end and the driver senses the situation via the steering wheel 1 and suddenly tries to turn the steering wheel 1 in the opposite/reverse direction (the direction in which the direction of the steered wheels 3 returns from the stroke end).

That is, in a case where switching is made from the steering unlocked state to the steering locked state when the direction of the steered wheels 3 shown in Fig. 1 reaches the stroke end, the steering wheel 1 cannot be further rotated, and the driver senses, via the steering wheel 1, that the direction of the steered wheels 3 has reached the stroke end. Here, the following situation could occur. When the driver suddenly tries to turn the steering wheel 1 in the opposite direction, it is necessary to immediately switch between the energized state and the de-energized state of the electromagnet 27 to switch from the steering locked state to the steering unlocked state to allow rotation of the steering wheel 1. However, if the motor shaft 16 shown in Fig. 9 is coupled to the inner ring 20 without any play so as not to rotate relative to the inner ring 20 at all, the operation of switching from the steering locked state to the steering unlocked state cannot be performed in time, and the driver cannot turn the steering wheel 1 in the opposite direction. To address this issue, in the fourth embodiment, the motor shaft 16 is coupled to the inner ring 20 with play so as to allow relative rotation within the predetermined angular range with respect to the inner ring 20. Therefore, when rotation of the steering wheel 1 shown in Fig. 1 is prevented in one direction of normal and reverse directions, the steering wheel 1 can be turned in the other direction of the normal and reverse directions by an angle corresponding to the play provided between the motor shaft 16 and the inner ring 20. Therefore, in the case where the driver senses, via the steering wheel 1, that the direction of the steered wheels 3 has reached the stroke end, and suddenly tries to turn the steering wheel 1 in the opposite direction, it is possible to ensure a time for performing the operation of switching from the steering locked state to the steering unlocked state to allow rotation of the steering wheel 1, and it is possible to prevent a situation where the steering wheel 1 is locked and immovable.

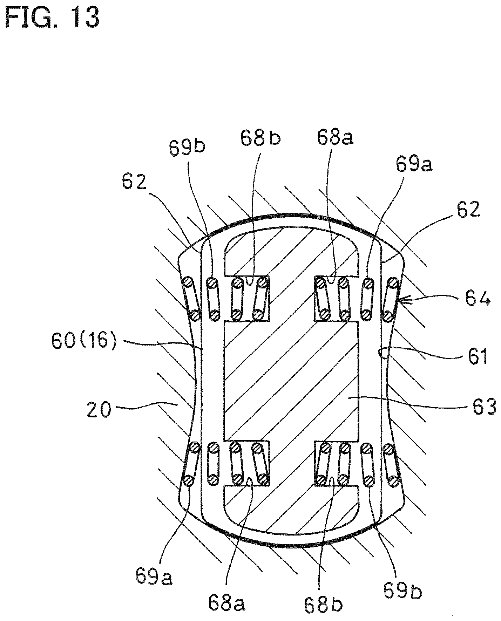

Fig. 13 shows the fifth embodiment of the first invention. The fifth embodiment is different from the fourth embodiment only in the configurations of the elastic members 64, and the other configurations are the same. Therefore, the elements of the fifth embodiment corresponding to those of the fourth embodiment are denoted by the same numerals, and the description thereof is omitted.

The elastic members 64 are compression coil springs in this embodiment. Each of the elastic members 64 includes a first coil spring 69a received in a spring receiving hole 68a formed in the non-circular shaft portion 60 so as to open toward one circumferential side such that the portion of the first coil spring 69a protruding beyond the spring receiving hole 68a is supported by the inner surface of the non-circular hole portion 61; and a second coil spring 69b received in a spring receiving hole 68b formed in the non-circular shaft portion 60 so as to open toward the other circumferential side such that the portion of the second coil spring 69b protruding beyond the spring receiving hole 68b is supported by the inner surface of the non-circular hole portion 61. Both the first coil spring 69a and the second coil spring 69b are kept compressed in the circumferential direction between the non-circular shaft portion 60 and the non-circular hole portion 61. The first coil spring 69a and the second coil spring 69b are elastically deformed when the inner ring 20 and the motor shaft 16 rotate relative to each other from a state where the inner ring 20 and the motor shaft 16 are at the central position in a predetermined angular range, and the elastic restoring force biases the inner ring 20 and the motor shaft 16 toward the central position in the predetermined angular range.

The steering system for a vehicle of the fifth embodiment of the first invention has the same functions and effects as in the fourth embodiment.

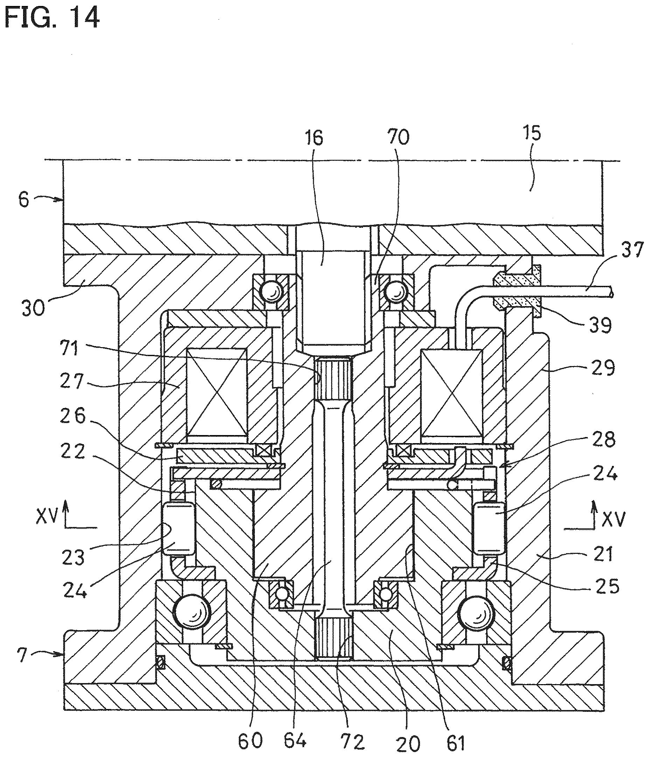

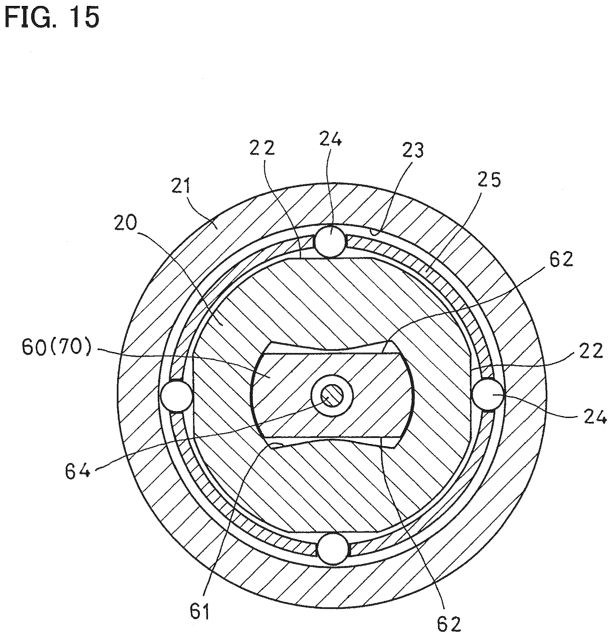

Figs. 14 and 15 show the sixth embodiment of the first invention. The sixth embodiment is different from the fourth embodiment in the configuration of the elastic members 64, and the other configurations are basically the same. Therefore, the elements of the sixth embodiment corresponding to those of the fourth embodiment are denoted by the same numerals, and the description thereof is omitted.

As shown in Fig. 14, the brake unit 7 includes an intermediate shaft 70 coupled to the motor shaft 16; an inner ring 20 coupled to the motor shaft 16 via the intermediate shaft 70; an outer ring 21 fixed to the motor case 15; a plurality of cam surfaces 22 formed on the outer periphery of the inner ring 20; a cylindrical surface 23 formed on the inner periphery of the outer ring 21; engagement elements 24 disposed between the cylindrical surface 23 and the respective cam surfaces 22; an engagement element cage 25 retaining the engagement elements 24; an armature 26 supported to be axially movable; an electromagnet 27 that attracts the armature 26 so as to axially move when the electromagnet 27 is energized; and a motion converting mechanism 28 that circumferentially moves the engagement element cage 25 according to the movement of the armature 26.

The intermediate shaft 70 is spline-fitted to the motor shaft 16. Due to this spline fitting, the intermediate shaft 70 is coupled to the motor shaft 16 with no play so as not to rotate relative to the motor shaft 16 at all.

As shown in Fig. 15, the intermediate shaft 70 includes a non-circular shaft portion 60 having a non-circular cross section. The inner ring 20 is formed with a non-circular hole portion 61 in which the non-circular shaft portion 60 of the intermediate shaft 70 is fitted with a circumferential gap defined. Rotation stopper surfaces 62 are formed on the outer periphery of the non-circular shaft portion 60.

The rotation stopper surfaces 62 are received in direct contact with the inner periphery of the non-circular hole portion 61 when the intermediate shaft 70 rotates relative to the inner ring 20. The rotation stopper surfaces 62 are formed on both sides, i.e., on one circumferential side and the other circumferential side of the non-circular shaft portion 60.

The non-circular shaft portion 60 and the non-circular hole portion 61 couple the inner ring 20 and the intermediate shaft 70 to each other with such play of a predetermined angular range of the intermediate shaft 70 with respect to the inner ring 20 that the intermediate shaft 70 is allowed to relatively rotate with respect to the inner ring 20 within a predetermined angular range and that the intermediate shaft 70 is prevented from relatively rotating beyond the predetermined angular range.

As shown in Fig. 14, the elastic member 64 is a torsion bar in this embodiment. One end of the elastic member 64 is rotationally fixed to the intermediate shaft 70 with the one end spline-fitted in a fitting hole 71 formed at the center of the intermediate shaft 70, and the other end of the elastic member 64 is also rotationally fixed to the inner ring 20 with the other end spline-fitted in a fitting hole 72 formed in the inner ring 20. The elastic member 64 biases the inner ring 20 and the intermediate shaft 70 toward the central position of a predetermined angular range when the inner ring 20 and the intermediate shaft 70 relatively rotate from the central position of the predetermined angular range.

The steering system for a vehicle of the sixth embodiment of the first invention has the same functions and effects as in the fourth embodiment.

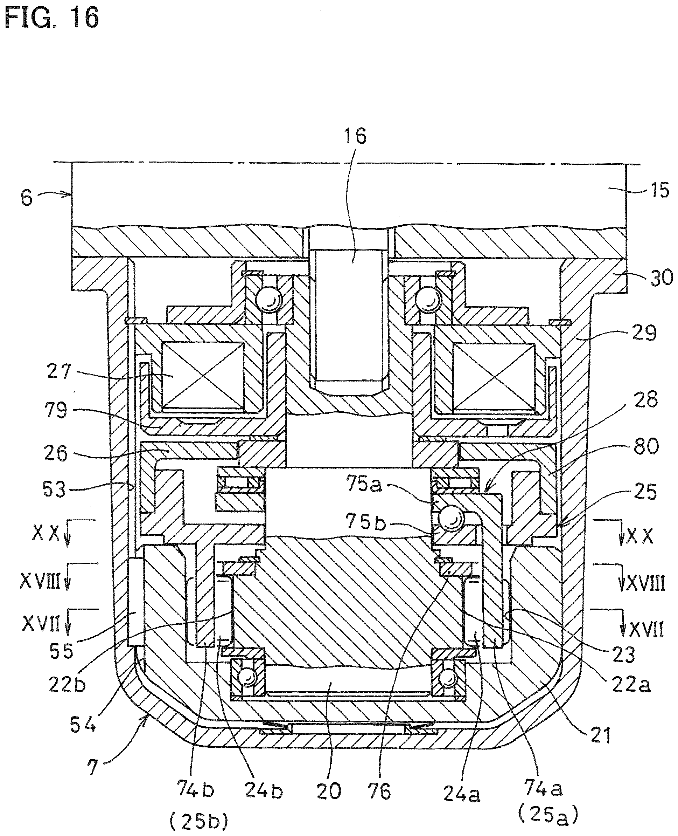

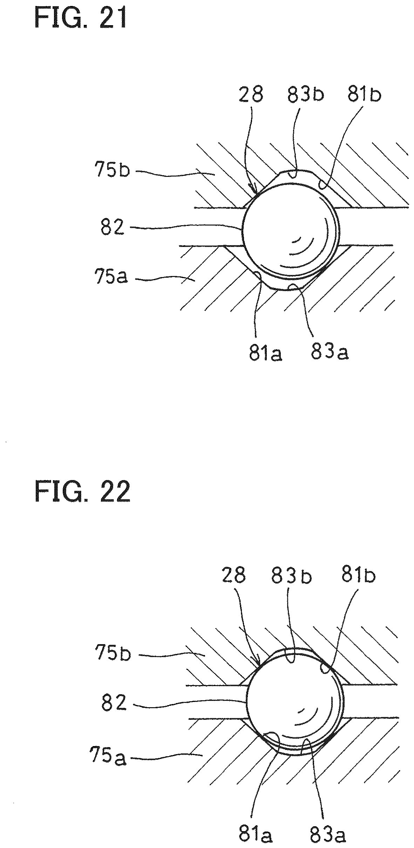

Figs. 16 to 22 show the seventh embodiment of the first invention. The seventh embodiment is different from the first embodiment in the configuration of the motion converting mechanism 28. That is, the motion converting mechanism 28 of the first embodiment is configured to circumferentially move the engagement element cage 25 from the disengagement position to the engagement position when the electromagnet 27 is energized, and circumferentially move the engagement element cage 25 from the engagement position to the disengagement position when the electromagnet 27 is de-energized (that is, an excited operation type clutch is used that engages due to energization, as the brake unit 7). In contrast, the motion converting mechanism 28 of the seventh embodiment is configured to circumferentially move the engagement element cage 25 from the engagement position to the disengagement position when the electromagnet 27 is energized, and circumferentially move the engagement element cage 25 from the disengagement position to the engagement position when the electromagnet 27 is de-energized (that is, as the brake unit 7, a non-excited operation type clutch is used that engages due to deenergization). Hereinafter, the elements of the seventh embodiment corresponding to those of the first embodiment are denoted by the same numerals, and the description thereof is omitted.

As shown in Fig. 16, the brake unit 7 includes an inner ring 20 coupled to the motor shaft 16; an outer ring 21 non-rotatably fixed; a plurality of cam surfaces 22 formed on the outer periphery of the inner ring 20; a cylindrical surface 23 formed on the inner periphery of the outer ring 21; a plurality of engagement elements 24a and 24b disposed between the cylindrical surface 23 and the respective cam surfaces 22; an engagement element cage 25 that retains the engagement elements 24a and 24b; an armature 26 supported to be axially movable; an electromagnet 27 that attracts the armature 26 so as to axially move when the electromagnet 27 is energized; and a motion converting mechanism 28 that circumferentially moves the engagement element cage 25 according to the movement of the armature 26.

The inner ring 20 is spline-fitted to the outer periphery of the motor shaft 16, and the motor shaft 16 is coupled to the inner ring 20 due to this spline fitting. As in the fourth to sixth embodiments, a structure may be adopted in which the inner ring 20 and the motor shaft 16 are coupled together with play of a predetermined angular range, and the elastic member (or members) 64 is disposed between the inner ring 20 and the motor shaft 16.

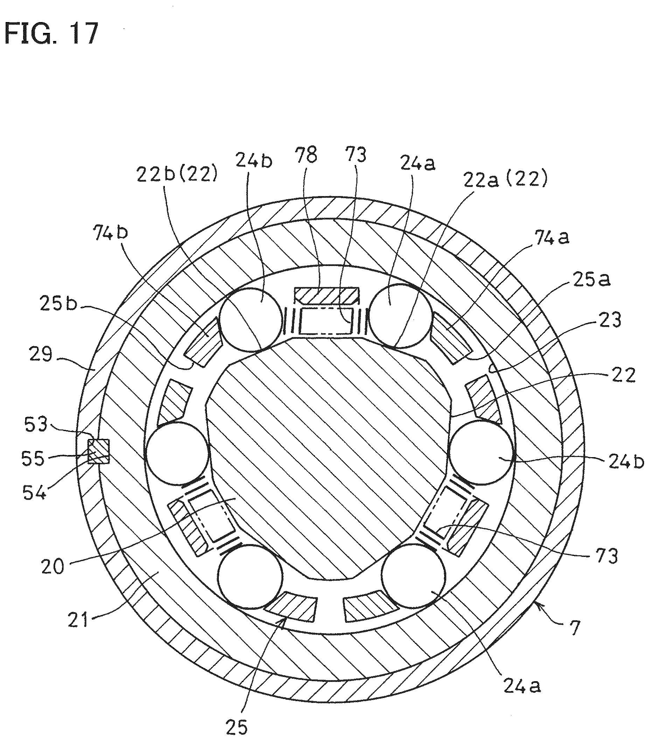

The outer ring 21 is formed separately from the brake case 29. The brake case 29 is made of a non-magnetic material (such as aluminum alloy or copper alloy). On the other hand, the outer ring 21 is formed of a steel material. As shown in Fig. 17, the outer ring 21 is rotationally fixed to the brake case 29 by fitting a common key member 55 into a key groove 53 formed in the inner periphery of the brake case 29 and a key groove 54 formed in the outer periphery of the outer ring 21.

As shown in Fig. 17, a plurality of cam surfaces 22 are disposed on the outer periphery of the inner ring 20 at circumferentially equal intervals. Each of the cam surfaces 22 comprises a front cam surface portion 22a and a rear cam surface portion 22b disposed rearward of the front cam surface 22a in the normal rotational direction of the inner ring 20. The outer ring 21 has, on its the inner periphery, a cylindrical surface 23 radially opposed to the front cam surface portions 22a and the rear cam surface portions 22b.

Between each cam surface 22 and the cylindrical surface 23, a pair of engagement elements 24a and 24b are disposed which are opposed to each other in the circumferential direction with an engagement element separation spring 73 interposed therebetween. Of each pair of engagement elements 24a and 24b, the engagement element 24a on the front side in the normal rotational direction is disposed between the corresponding front cam surface portion 22a and the cylindrical surface 23, and the engagement element 24b on the rear side in the normal rotational direction is disposed between the corresponding rear cam surface portion 22b and the cylindrical surface 23. Each engagement element separation spring 73 presses the corresponding pair of engagement elements 24a and 24b in the direction in which the distance between the engagement elements 24a and 24b is increased.

Each of the front cam surface portions 22a is formed such that the radial distance between the front cam surface portion 22a and the cylindrical surface 23 gradually decreases toward the front side in the normal rotational direction from the position of the corresponding engagement element 24a. Each of the rear cam surface portions 22b is formed such that the radial distance between the rear cam surface portion 22b and the cylindrical surface 23 gradually decreases toward the rear side in the normal rotational direction from the position of the corresponding engagement element 24b.

As shown in Figs. 16 and 17, the engagement element cage 25 comprises a first split cage portion 25a supporting, of the circumferentially opposed engagement elements 24a and 24b with the engagement element separation springs 73 disposed between the respective pairs of engagement elements 24a and 24b, the engagement elements 24a; and a second split cage portion 25b supporting the other engagement elements 24b. The first split cage portion 25a and the second split cage portion 25b are supported so as to be rotatable relative to each other, and individually support each pair of engagement elements 24a and 24b such that the distance between the engagement elements 24a and 24b changes according to the relative rotation.

The first split cage portion 25a includes a plurality of pillars 74a circumferentially spaced apart from each other; and an annular flange 75a that couples the ends of the pillars 74a to each other. Similarly, the second split cage portion 25b includes a plurality of pillars 74b circumferentially spaced apart from each other; and an annular flange 75b that couples the ends of the pillars 74b to each other.

The pillars 74a of the first split cage portion 25a and the pillars 74b of the second split cage portion 25b are inserted between the inner periphery of the outer ring 21 and the outer periphery of the inner ring 20 such that each pillar 74a and the corresponding pillar 74b circumferentially sandwich, from both sides in the circumferential direction, the pair of engagement elements 24a and 24b, which are circumferentially opposed to each other with the engagement element separation spring 73 located therebetween.

The inner periphery of the flange 75a of the first split cage portion 25a and the inner periphery of the flange 75b of the second split cage portion 25b are rotatably supported on the outer periphery of the inner ring 20. With this configuration, the first split cage portion 25a and the second split cage portion 25b are circumferentially movable between (i) an engagement position at which by increasing the interval between each pair of engagement elements 24a and 24b, the engagement elements 24a and 24b are engaged with the cam surfaces 22 and the cylindrical surface 23; and (ii) a disengagement position at which by decreasing the interval between each pair of engagement elements 24a and 24b, the engagement elements 24a and 24b are disengaged from the cam surfaces 22 and the cylindrical surface 23.

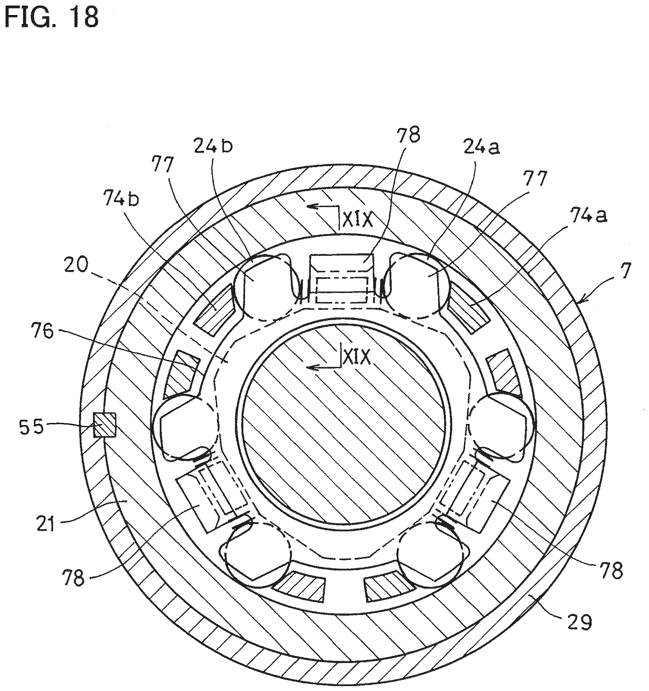

As shown in Fig. 18, a spring holder 76 is fixed to a side surface of the inner ring 20. The spring holder 76 includes stopper pieces 77 located between each pair of pillars 74a and 74b which are circumferentially opposed to each other, and between which the corresponding pair of engagement elements 24a and 24b are interposed. The stopper pieces 77 receive the corresponding pillars 74a and 74b when the pillars 74a and 74b move in the direction in which the distance between the engagement elements 24a and 24b is reduced.

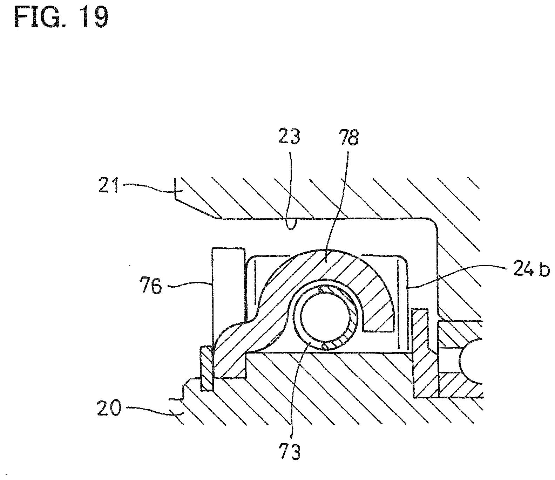

As shown in Fig. 19, the spring holder 76 includes spring holding pieces 78 that hold the respective engagement element separation springs 73. The spring holding pieces 78 are integrally formed with the stopper pieces 77 so as to axially extend between the inner periphery of the outer ring 21 and the outer periphery of the inner ring 20.

As shown in Fig. 16, a rotor 79 is disposed between the electromagnet 27 and the armature 26. The rotor 79 is fixed to the outer periphery of the inner ring 20. The rotor 79 is made of a magnetic material (such as iron or silicon steel).

The armature 26 includes a cylindrical portion 80 fitted to the outer periphery of the second split cage portion 25b with an interference, and due to the fitting of the cylindrical portion 80, the armature 26 is coupled to the second split cage portion 25b so as to axially move in unison with the second split cage portion 25b.

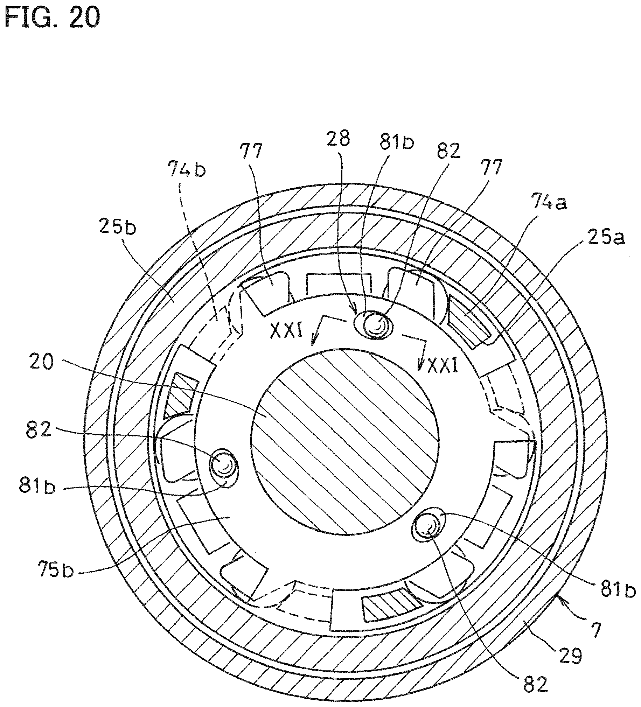

As shown in Figs. 20 to 22, the motion converting mechanism 28 includes inclined grooves 81a disposed in, of the flange 75a of the first split cage portion 25a, the surface opposed to the flange 75b of the second split cage portion 25b; inclined grooves 81b disposed in, of the flange 75b of the second split cage portion 25b, the surface opposed to the flange 75a of the first split cage portion 25a; and balls 82 disposed between the inclined grooves 81a and the respective inclined grooves 81b. The inclined grooves 81a and the inclined grooves 81b are formed so as to circumferentially extend. Each inclined groove 81a has a shape having a groove bottom inclined so as to be gradually shallower in one circumferential direction from a deepest portion 83a having the deepest axial depth, and each inclined groove 81b also has a shape having a groove bottom inclined so as to be gradually shallower in the other circumferential direction from a deepest portion 83b having the deepest axial depth.

The motion converting mechanism 28 is configured such that when the armature 26 is attracted to the electromagnet 27, and the flange 75b of the second split cage portion 25b axially moves, together with the armature 26, toward the flange 75a of the first split cage portion 25a, the balls 82 roll toward the deepest portions 83a and 83b of the inclined grooves 81a and 81b, whereby the first split cage portion 25a and the second split cage portion 25b relatively rotate in the direction in which the pillars 74a and 74b reduce the intervals between the engagement elements 24a and 24b, and the relative rotation causes the engagement element cage 25 to move from the engagement position to the disengagement position.

The armature 26 is biased in the direction away from the rotor 79 by the forces of the engagement element separation springs 73. That is, the force by which each engagement element separation spring 73 shown in Fig. 17 presses the engagement elements 24a and 24b in the direction in which the distance between the engagement elements 24a and 24b is increased is transmitted to the first split cage portion 25a and the second split cage portion 25b. Then, the circumferential force received by the first split cage portion 25a and the second split cage portion 25b is converted into the axial force in the direction away from the rotor 79 by the motion converting mechanism 28 shown in Figs. 20 to 22, and the converted force is transmitted to the second split cage portion 25b. Here, as shown in Fig. 16, since the armature 26 is fixed to the second split cage portion 25b, the armature 26 is therefore biased in the direction away from the rotor 79 by the forces transmitted from the engagement element separation springs 73 via the motion converting mechanism 28.

While the electromagnet 27 shown in Fig. 16 is de-energized, the brake unit 7 is in a locked state in which rotation of the inner ring 20 is prevented. That is, when the electromagnet 27 is de-energized, the armature 26 axially moves in the direction away from the rotor 79 by the forces of the engagement element separation springs 73. At this time, the forces of the engagement element separation springs 73 circumferentially move the engagement element cage 25 from the disengagement position to the engagement position, and the engagement elements 24a on the front side in the normal rotational direction are therefore engaged with the front cam surfaces 22a on the outer periphery of the inner ring 20 and the cylindrical surface 23 on the inner periphery of the outer ring 21, and the engagement elements 24b on the rear side in the normal rotational direction are engaged with the rear cam surfaces 22b on the outer periphery of the inner ring 20 and the cylindrical surface 23 on the inner periphery of the outer ring 21. Therefore, rotation of the inner ring 20 is prevented, and rotation of the motor shaft 16, which is coupled to the inner ring 20, is also prevented.

On the other hand, while the electromagnet 27 is energized, the brake unit 7 is in an idling state in which the inner ring 20 can freely rotate with respect to the outer ring 21. That is, when the electromagnet 27 is energized, the armature 26 is attracted and stuck to the rotor 79, and, in conjunction with the motion of the armature 26, the flange 75b of the second split cage portion 25b axially moves toward the flange 75a of the first split cage portion 25a. At this time, the balls 82 of the motion converting mechanism 28 roll toward the deepest portions 83a and 83b of the inclined grooves 81a and 81b, and the engagement element cage 25 therefore circumferentially moves from the engagement position to the disengagement position. As a result, the engagement elements 24a on the front side in the normal rotational direction are disengaged from the front cam surfaces 22a and the cylindrical surface 23, the engagement elements 24b on the rear side in the normal rotational direction are disengaged from the rear cam surfaces 22b and the cylindrical surface 23 and, and the inner ring 20 and the motor shaft 16 can freely rotate in both normal and reverse directions.

As in the first embodiment, for the steering system for a vehicle of the seventh embodiment of the first invention, by switching between the energized state and the de-energized state of the electromagnet 27 when the direction of the steered wheels 3 reaches the stroke end, the steering wheel 1 is reliably prevented from further rotating, so that it is possible to cause the driver to reliably sense, via the steering wheel 1, that the direction of the steered wheels 3 has reached the stroke end.

The steering system for a vehicle of the seventh embodiment of the first invention is switched (i) from the steering locked state to the steering unlocked state when the electromagnet 27 is energized, and (ii) from the steering unlocked state to the steering locked state when the electromagnet 27 is de-energized. Therefore, when the power of the vehicle is turned off and the electromagnet 27 is de-energized, for example, at the time of parking the vehicle, the steering wheel 1 is brought into the steering locked state in which rotation of the steering wheel is prevented, so that it is possible to add a steering wheel locking function for preventing theft of the vehicle without providing a separate steering wheel locking mechanism.

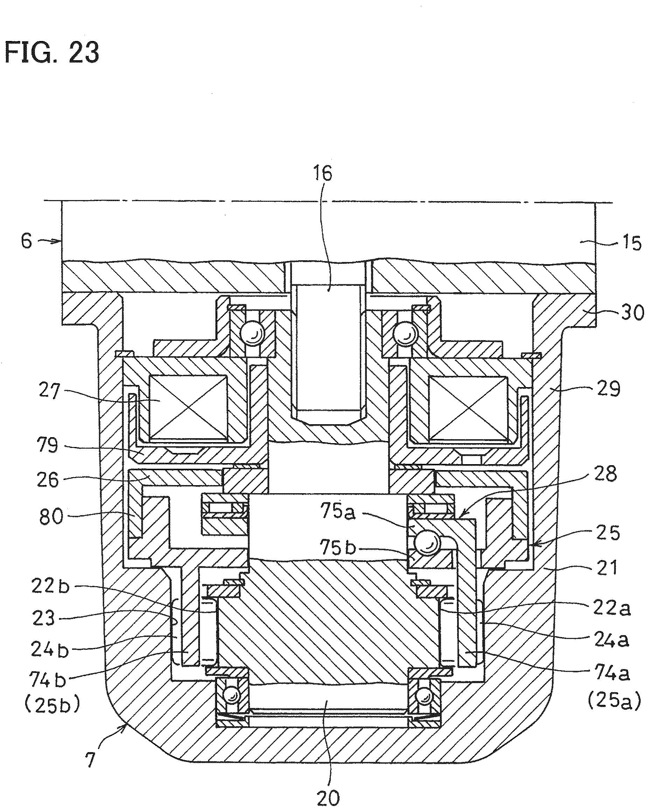

In the seventh embodiment of the first invention, while the outer ring 21 is formed separately from the brake case 29, and the outer ring 21 is rotationally fixed to the brake case 29, as shown in Fig. 23, the outer ring 21 may be formed integrally with the brake case 29.

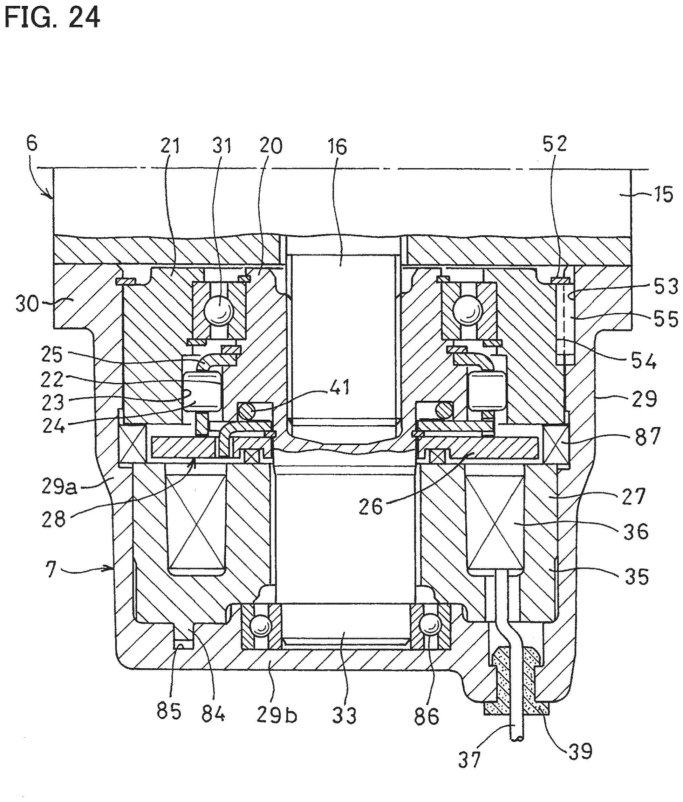

Figs. 24 to 27 show the eighth embodiment of the first invention. The eighth embodiment is different from the second embodiment only in the configuration for axially fixing the outer ring 21 and the electromagnet 27, and the other configurations are basically the same. Therefore, the elements of the eighth embodiment corresponding to those of the second embodiment are denoted by the same numerals, and the description thereof is omitted.

As shown in Fig. 24, the electromagnet 27 is disposed in the brake case 29 so as to be axially opposed to the outer ring 21. The brake case 29 includes a cylindrical portion 29a fitted to the outer periphery of the field core 35 of the electromagnet 27; and an end plate portion 29b supporting an axial end surface of the field core 35 of the electromagnet 27. The end plate portion 29b constitutes an electromagnet movement restricting portion that restricts the movement of the electromagnet 27 in one axial direction (downward in the drawing). In addition, a stop ring 52 mounted to the inner periphery of an opening end of the cylindrical portion 29a constitutes an outer ring movement restricting portion that restricts the movement range of the other axial direction (upward in the drawing) of the outer ring 21.

The end plate portion 29b is integrally formed with the cylindrical portion 29a. The end plate portion 29b is formed with an anti-rotation hole 85 in which an anti-rotation protrusion 84 formed on an axial end surface of the field core 35 is inserted. The electromagnet 27 is circumferentially positioned with respect to the brake case 29 by the engagement of the anti-rotation protrusion 84 in the anti-rotation hole 85. A rolling bearing 86 that rotatably supports the inner ring 20 is mounted to the end plate portion 29b.

An annular elastic spacer 87 is mounted between the outer ring 21 and the electromagnet 27. The elastic spacer 87 is mounted in an axially compressed state, and biases, by its elastic restoring force, the outer ring 21 and the electromagnet 27 in the directions in which the outer ring 21 and the electromagnet 27 are moved away from each other in the axial direction. One axial end of the elastic spacer 87 presses the surface of the outer ring 21 axially opposed to the field core 35, and the other axial end of the elastic spacer 87 presses the surface of the field core 35 opposed to the outer ring 21. The elastic spacer 87 is made of a non-magnetic material (such as aluminum alloy or copper alloy).

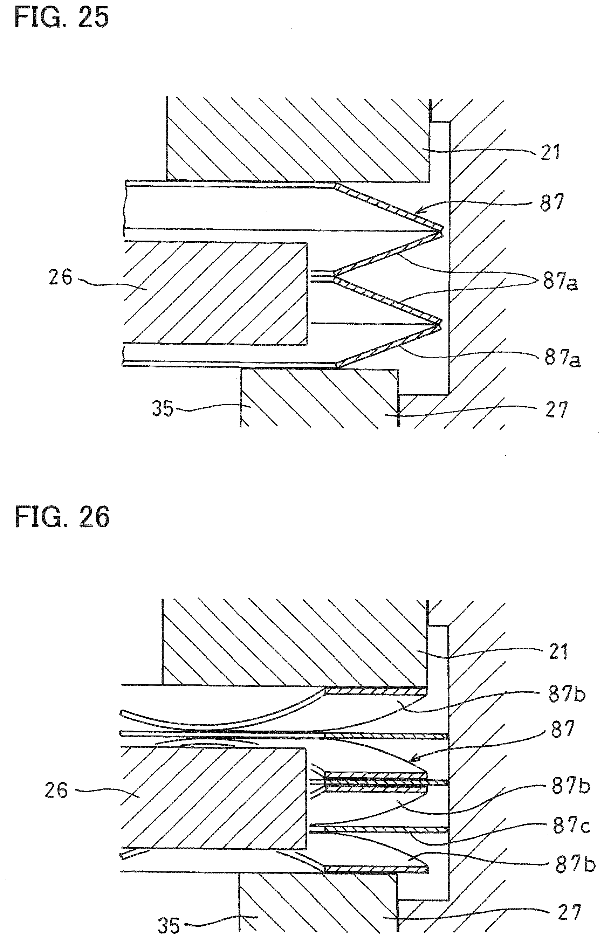

As shown in Fig. 25, disc springs 87a can be used as the elastic spacer 87. The disc springs 87a are conical tubular metal springs. Only a single disk spring 87a can also be used as the elastic spacer 87; however, as shown in the drawing, if a plurality of disc springs 87a axially arranged with the large diameter side and the small diameter side being directed in alternate directions are used as the elastic spacer 87, the axial length of the elastic spacer 87 can be ensured. Since the disc springs 87a can generate a large force in narrow installation space, if disc springs 87a are used as the elastic spacer 87, the axial movements of the outer ring 21 and the electromagnet 27 can be reliably restricted.

As shown in Fig. 26, wave springs 87b can also be used as the elastic spacer 87. The wave springs 87b are annular metal springs each formed such that a waveform is repeated along the circumferential direction. Only the wave springs 87b can also be used as the elastic spacer 87; however, as shown in the drawing, if the wave springs 87b and annular flat washers 87c alternately arranged in the axial direction are used as the elastic spacer 87, the axial length of the elastic spacer 87 can be ensured.

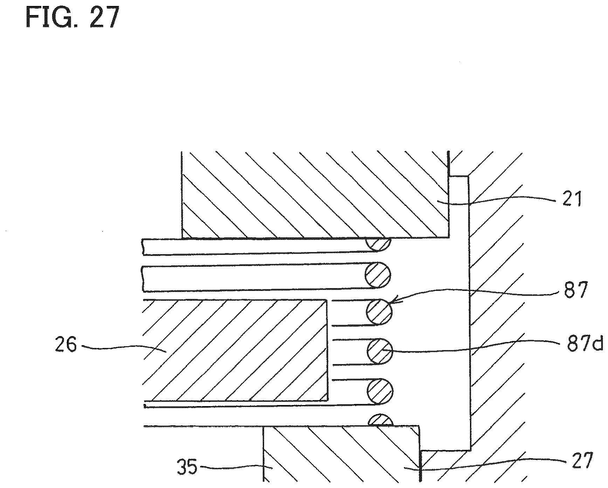

As shown in Fig. 27, it is also possible to use a compression coil spring 87d as the elastic spacer 87. The compression coil spring 87d is a spring formed by spirally winding a metal wire. If the compression coil spring 87d is used as the elastic spacer 87, the elastic spacer 87 can be disposed in a space having a small radial width.

The steering system for a vehicle of the eighth embodiment of the first invention is low in machining cost of the brake case shown in Fig. 24. That is, in a case where the outer ring 21 and the electromagnet 27 are disposed to be axially opposed to each other in the brake case 29, to axially fix the outer ring 21 and the electromagnet 27, it is considered to adopt an arrangement in which there are separately provided (i) a stop ring (not shown) to restrict the axial movement of the electromagnet 27 in the direction toward the outer ring 21 and (ii) a stop ring (not shown) to restrict the axial movement of the outer ring 21 in the direction toward the electromagnet 27, and stop ring grooves for mounting the respective stop rings are formed in the inner periphery of the brake case 29. However, if this arrangement is adopted, a cost is required to form grooves in the inner periphery of the brake case 29. In contrast, if the arrangement of the eighth embodiment is adopted, that is, if the elastic spacer 87 is mounted between the outer ring 21 and the electromagnet 27 so as to bias the outer ring 21 and the electromagnet 27 in the direction axially away from each other; and the biasing force of the elastic spacer 87 restricts the axial movement of the electromagnet 27 in the direction toward the outer ring 21 and the axial movement of the outer ring 21 in the direction toward the electromagnet 27, it is not necessary to form, in the inner periphery of the brake case 29, grooves for mounting the stop rings, so that the machining cost of the brake case 29 is low.

Since the elastic spacer 87 shown in Fig. 24 is formed of a non-magnetic material in the steering system for a vehicle of the eighth embodiment of the first invention, when the electromagnet 27 is energized, the magnetic flux generated from the electromagnet 27 is prevented from leaking through the elastic spacer 87, so that the armature 26 can be efficiently attracted. Therefore, it is possible to reduce the sizes of the electromagnet 27 and the armature 26 and therefore possible to save space.

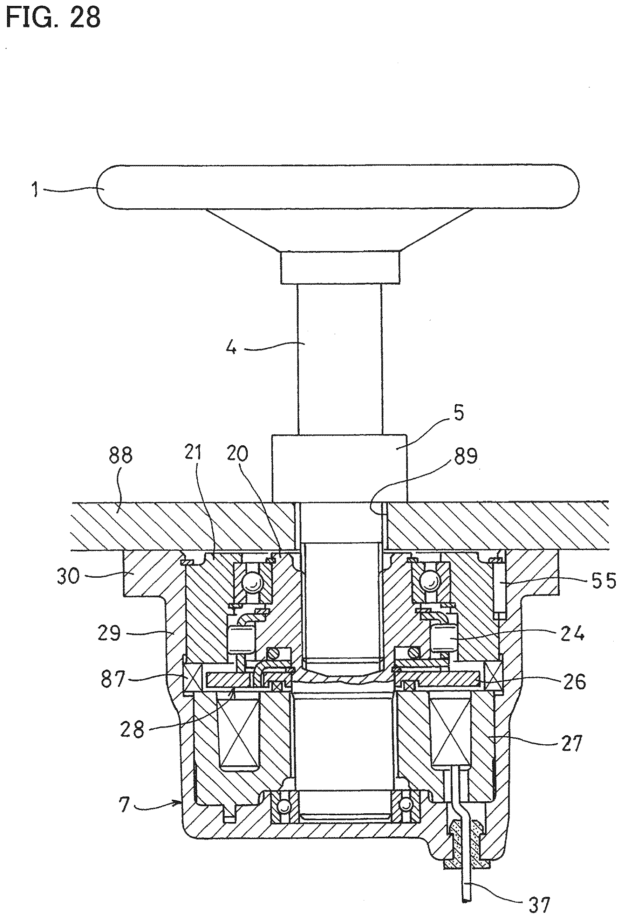

Fig. 28 shows the ninth embodiment of the first invention. While, in each of the above embodiments, the description has been given taking, as an example, the steering system for a vehicle whose steering target is a pair of right and left steered wheels 3 of a vehicle as shown in Fig. 1 or 7, the steering system of the ninth embodiment is a steering system for a vessel whose steering target is a rudder (outboard motor or the like) on the stern of a vessel (not shown).

The ninth embodiment of the first invention is different from the eighth embodiment in that in the eighth embodiment, the inner ring 20 is indirectly coupled to the steering shaft 4 (see Fig. 1) via the motor shaft 16 of the reaction force motor 6, but, in the ninth embodiment, the reaction force motor 6 is not disposed and the inner ring 20 is directly coupled to the steering shaft 4. However, the other configurations are basically the same. Therefore, the elements of the ninth embodiment corresponding to those of the eighth embodiment are denoted by the same numerals, and the description thereof is omitted.

The steering shaft 4 is inserted in a steering insertion hole 89 formed in a dashboard panel 88 of a vessel. The end of the steering shaft 4 on the insertion side, which is inserted in the steering insertion hole 89, is spline-fitted to the inner ring 20. A radially outwardly extending flange 30 is formed at one axial end of the brake case 29, and the flange 30 is fixed to the dashboard panel 88 of the vessel by bolts (not shown). By fixing the brake case 29 to the dashboard panel 88, the brake case 29 is fixed so as not to rotate even when the steering wheel 1 (see Fig. 1) is steered.

As in each of the above embodiments, also for the steering system for a vessel of the ninth embodiment of the first invention, by switching between the energized state and the de-energized state of the electromagnet 27 when the direction of the rudder (outboard motor or the like) on the stern of the vessel (not shown) reaches the stroke end, the steering wheel 1 is reliably prevented from further rotating, so that it is possible to cause the driver to reliably sense, via the steering wheel 1, that the direction of the rudder (outboard motor or the like) of the vessel (not shown) has reached the stroke end.

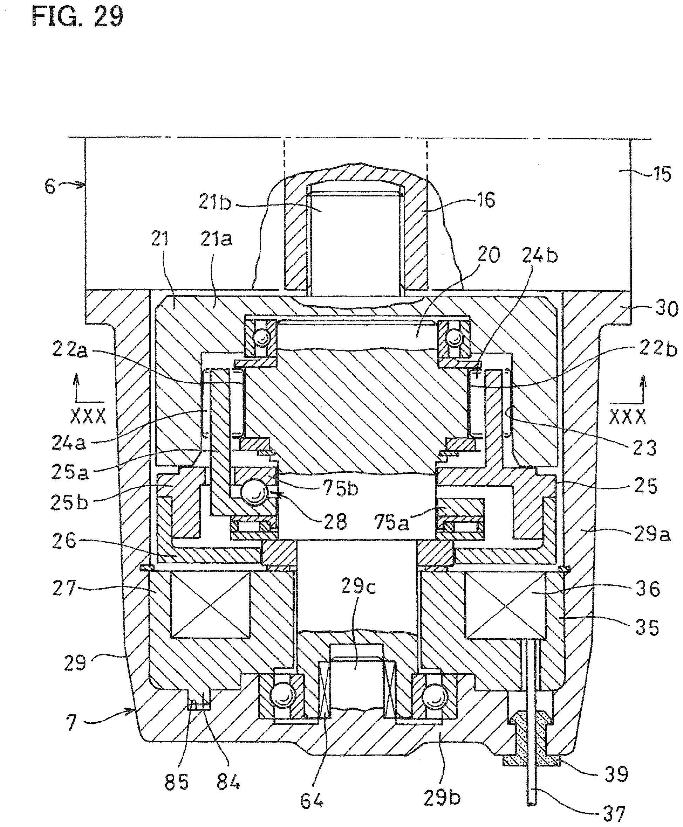

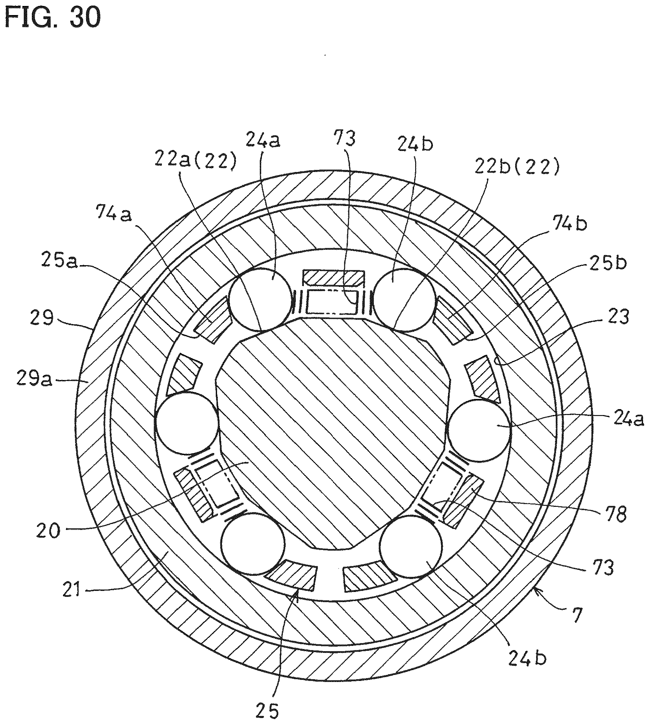

Figs. 29 and 30 show the tenth embodiment of the first invention. The tenth embodiment corresponds to an embodiment in which the relation of the motor shaft 16 and the brake case 29 to the inner ring 20 and the outer ring 21 in the seventh embodiment is reversed. Specifically, the tenth embodiment is different from the seventh embodiment in that in the seventh embodiment, of the inner ring 20 and the outer ring 21, the inner ring 20 is coupled to the motor shaft 16, and the outer ring 21 is coupled to the brake case 29, but, in the tenth embodiment, of the inner ring 20 and the outer ring 21, the outer ring 21 is coupled to the motor shaft 16, and the inner ring 20 is coupled to the brake case 29. However, the other configurations are basically the same. Therefore, the elements of the tenth embodiment corresponding to those of the seventh embodiment are denoted by the same numerals, and the description thereof is omitted.

As shown in Fig. 29, the brake unit 7 includes an outer ring 21 coupled to the motor shaft 16; an outer ring 21 coupled to the brake case 29; a plurality of cam surfaces 22 formed on the outer periphery of the inner ring 20; a cylindrical surface 23 formed on the inner periphery of the outer ring 21; a plurality of engagement elements 24a and 24b disposed between the cylindrical surface 23 and the cam surfaces 22; an engagement element cage 25 that retains the engagement elements 24a and 24b; an armature 26 supported to be axially movable; an electromagnet 27 that attracts the armature 26 so as to axially move when the electromagnet 27 is energized; and a motion converting mechanism 28 that circumferentially moves the engagement element cage 25 according to the movement of the armature 26.

The outer ring 21 includes an outer ring end plate 21a axially opposed to an axial end of the inner ring 20; and an outer ring shaft portion 21b axially extending from the outer ring end plate 21a. The outer ring shaft portion 21b is spline-fitted to the motor shaft 16. Due to this spline fitting, the outer ring 21 is coupled to the motor shaft 16.

The brake case 29 includes a cylindrical portion 29a fitted to the outer periphery of the field core 35 of the electromagnet 27; and an end plate portion 29b supporting an axial end surface of the field core 35 of the electromagnet 27. The end plate portion 29b is integrally formed with the cylindrical portion 29a. The end plate portion 29b is formed with an anti-rotation hole 85 in which an anti-rotation protrusion 84 formed on an axial end surface of the field core 35 is inserted. The electromagnet 27 is circumferentially positioned with respect to the brake case 29 by the engagement of the anti-rotation protrusion 84 in the anti-rotation hole 85.

The inner ring 20 is coupled to the brake case 29 by being rotationally fixed to an inner ring coupling shaft 29c disposed on the end plate portion 29b of the brake case 29. It is also possible to couple the inner ring 20 and the inner ring coupling shaft 29c together without any play so as not to relatively rotate at all like the inner ring 20 and the motor shaft 16 shown in Fig. 2. However, in this embodiment, the inner ring 20 and the inner ring coupling shaft 29c are coupled together with a predetermined play, like the inner ring 20 and the motor shaft 16 shown in Fig. 9, so that the relative rotation of the inner ring 20 with respect to the inner ring coupling shaft 29c within a predetermined angular range is allowed and so that the relative rotation of the inner ring 20 with respect to the inner ring coupling shaft 29c beyond the predetermined angular range is prevented. Between the inner ring 20 and the inner ring coupling shaft 29c, elastic members 64 (see Fig. 9) are disposed that bias the inner ring 20 and the inner ring coupling shaft 29c toward a central position in the predetermined angular range when the inner ring 20 and the inner ring coupling shaft 29c are relatively rotated from the central position in the predetermined angular range.

As shown in Fig. 29, the rotor 79 (see Fig. 16) is not disposed between the electromagnet 27 and the armature 26, and the armature 26 is directly opposed to the electromagnet 27.

The armature 26 is biased in the direction away from the electromagnet 27 by the forces of the engagement element separation springs 73 (see Fig. 30). That is, the force by which the engagement element separation springs 73 shown in Fig. 30 each press the corresponding pair of the engagement elements 24a and 24b in the direction in which the distance between the pair of engagement elements 24a and 24b is increased is transmitted to the first split cage portion 25a and the second split cage portion 25b. Then, the circumferential force received by the first split cage portion 25a and the second split cage portion 25b is converted into the axial force in the direction away from the electromagnet 27 by the motion converting mechanism 28, and the converted force is transmitted to the second split cage portion 25b. Here, since the second split cage portion 25b is fixed to the armature 26, the armature 26 is therefore biased in the direction away from the electromagnet 27 by the forces transmitted from the engagement element separation springs 73 (see Fig. 30) via the motion converting mechanism 28.

While the electromagnet 27 shown in Fig. 29 is de-energized, the brake unit 7 is in a locked state in which rotation of the outer ring 21 is prevented. That is, when the electromagnet 27 is de-energized, the armature 26 axially moves in the direction away from the electromagnet 27 by the forces of the engagement element separation springs 73 (see Fig. 30). At this time, the forces of the engagement element separation springs 73 circumferentially move the engagement element cage 25 from the disengagement position to the engagement position, and the engagement elements 24a on the front side in the normal rotational direction are therefore engaged with the front cam surfaces 22a on the outer periphery of the inner ring 20 and the cylindrical surface 23 on the inner periphery of the outer ring 21, and the engagement elements 24b on the rear side in the normal rotational direction are engaged with the rear cam surfaces 22b on the outer periphery of the inner ring 20 and the cylindrical surface 23 on the inner periphery of the outer ring 21. Therefore, rotation of the outer ring 21 is prevented, and rotation of the motor shaft 16, which is coupled to the outer ring 21, is also prevented.

On the other hand, while the electromagnet 27 is energized, the brake unit 7 is in an idling state in which the outer ring 21 can freely rotate with respect to the inner ring 20. That is, when the electromagnet 27 is energized, the armature 26 is attracted and stuck to the electromagnet 27, and, in conjunction with the motion of the armature 26, the flange 75b of the second split cage portion 25b axially moves toward the flange 75a of the first split cage portion 25a. At this time, the relative axial movement of the first split cage portion 25a and the second split cage portion 25b is converted into the circumferential relative movements of the first split cage portion 25a and the second split cage portion 25b by the motion converting mechanism 28. As a result, the engagement elements 24a on the front side in the normal rotational direction are disengaged from the front cam surfaces 22a and the cylindrical surface 23, and the engagement elements 24b on the rear side in the normal rotational direction are disengaged from the rear cam surfaces 22b and the cylindrical surface 23, so that the outer ring 21 and the motor shaft 16 can freely rotate in both normal and reverse directions.

As in the seventh embodiment, the steering system for a vehicle of the tenth embodiment of the first invention is switched (i) from the steering locked state to the steering unlocked state when the electromagnet 27 is energized and (ii) from the steering unlocked state to the steering locked state when the electromagnet 27 is de-energized. Therefore, when the power of the vehicle is turned off and the electromagnet 27 is de-energized, for example, at the time of parking the vehicle, the steering wheel 1 is brought into the steering locked state in which rotation of the steering wheel is prevented, so that it is possible to add a steering wheel locking function for preventing theft of the vehicle without providing a separate steering wheel locking mechanism. The other functions and effects are also the same as those of the seventh embodiment.

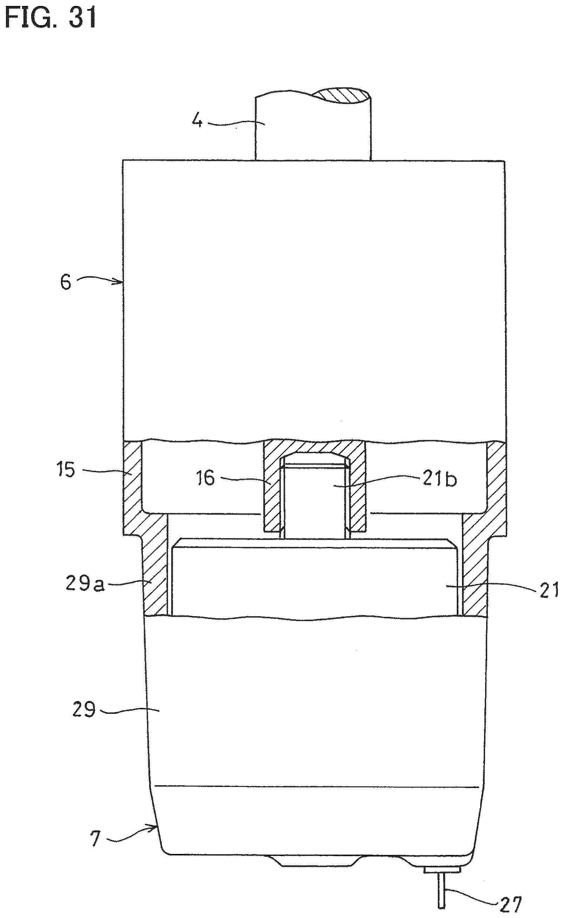

Fig. 31 shows the eleventh embodiment of the first invention. The eleventh embodiment is different from the tenth embodiment only in that while, in the tenth embodiment, the brake case 29 is formed separately from the motor case 15 of the reaction force motor 6, and the brake case 29 is fixed to the motor case 15, in the eleventh embodiment, the brake case 29 is integrally formed with the motor case 15 of the reaction force motor 6, and the other configurations are the same. Therefore, the elements of the eleventh embodiment corresponding to those of the tenth embodiment are denoted by the same numerals, and the description thereof is omitted.

In each of the above embodiments, the description has been given using an example in which rollers are used as engagement elements 24, 24a, and 24bdisposed between the inner periphery of the outer ring 21 and the outer periphery of the inner ring 20. However, it is also possible to use balls or sprags as the engagement elements.

In the first to eleventh embodiments (excluding the ninth embodiment) of the first invention, the description has been given taking, as an example of the steer-by-wire type steering system, a steering system for a vehicle whose steering target is a pair of right and left steered wheels 3 of a vehicle, and, in the ninth embodiment, the description has been given taking, as an example of the steer-by-wire type steering system according to the first invention, a steer-by-wire type steering system for a vessel whose steering target is a rudder (outboard motor or the like) disposed on the stern of a vessel. However, the first invention can be applied not only to the steering system for a vehicle and the steering system for a vessel, but also to the steering system for construction machines, agricultural machines, all-terrain vehicles, and multipurpose four-wheel vehicles in the same manner as long as they use a steer-by-wire type steering system. The same applies to embodiments of the second to fifth inventions that will be described later.

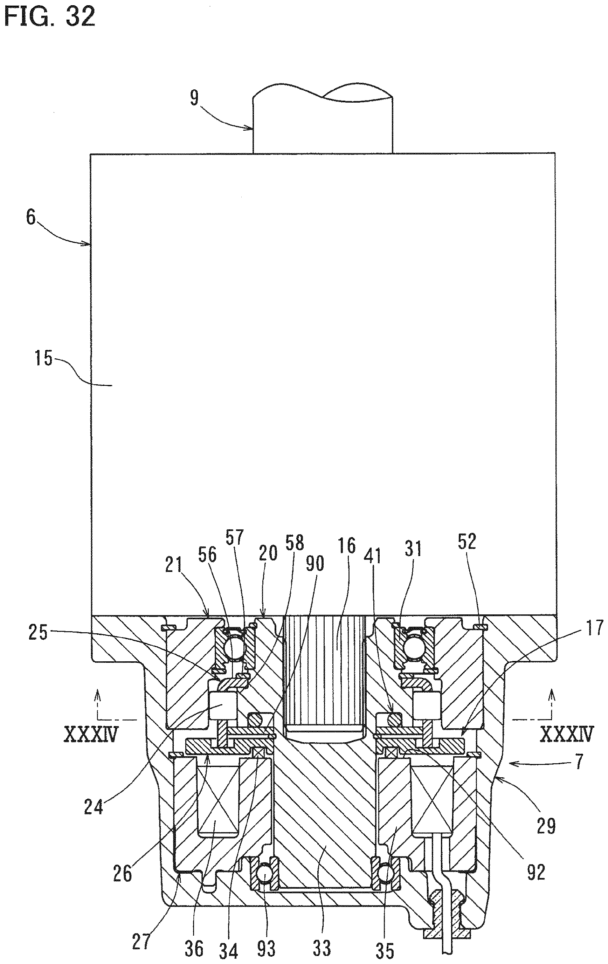

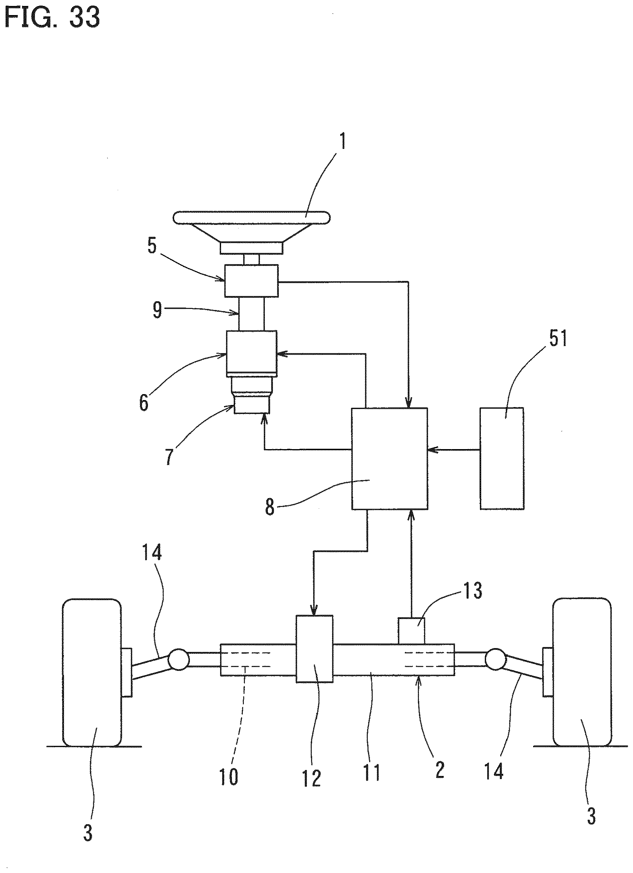

Figs. 32 and 33 show a steer-by-wire type steering system according to the first embodiment of the second invention as an example thereof. Hereinafter, the elements of this first embodiment corresponding to those of the embodiments of the first invention are denoted by the same numerals, and the description thereof is omitted. In the embodiments of the first to fifth inventions, the members/elements denoted by the same numerals are basically the same in configuration.

This steering system includes a steering wheel 1 steered by the driver; a shaft 9 coupled to the steering wheel 1; a steering sensor 5 that detects the operation amount of the steering wheel 1; a reaction force motor 6 that applies a steering reaction force to the steering wheel 1; a brake unit 7 that, when in a non-excited state, prevents rotation of the steering wheel 1, and that, when in an excited state, allows rotation of the steering wheel 1; a steering actuator 2 disposed to be mechanically separated from the steering wheel 1; and a control unit 8.

The shaft 9 is coupled to the steering wheel 1 so as to rotate in unison with the steering wheel 1 when the steering wheel 1 is steered. The steering sensor 5 is mounted to the shaft 9. The steering sensor 5 may be, for example, a steering angle sensor that detects the steering angle of the steering wheel 1, or a steering torque sensor that detects the steering torque applied to the steering wheel 1 by the driver.

The reaction force motor 6 is an electric motor that generates rotational torque by energization. The reaction force motor 6 is coupled to an end of the shaft 9. By applying rotational torque to the shaft 9, the reaction force motor 6 applies the steering reaction force to the steering wheel 1 through the shaft 9.

As shown in Fig. 32, the reaction force motor 6 includes a motor case 15, and a motor shaft 16 protruding beyond the motor case 15 toward the side opposite/remote from the steering wheel 1 (toward the lower side in Fig. 2). The motor shaft 16 is rotatably supported by a rolling bearing (not shown) mounted in the motor case 15. The motor shaft 16 is a constituent element of the shaft 9, and is coupled to a shaft portion of the shaft 9 on a steering column side so as to rotate in unison with the steering wheel 1. The motor case 15 is fixed to the vehicle body (not shown) so as not to rotate.

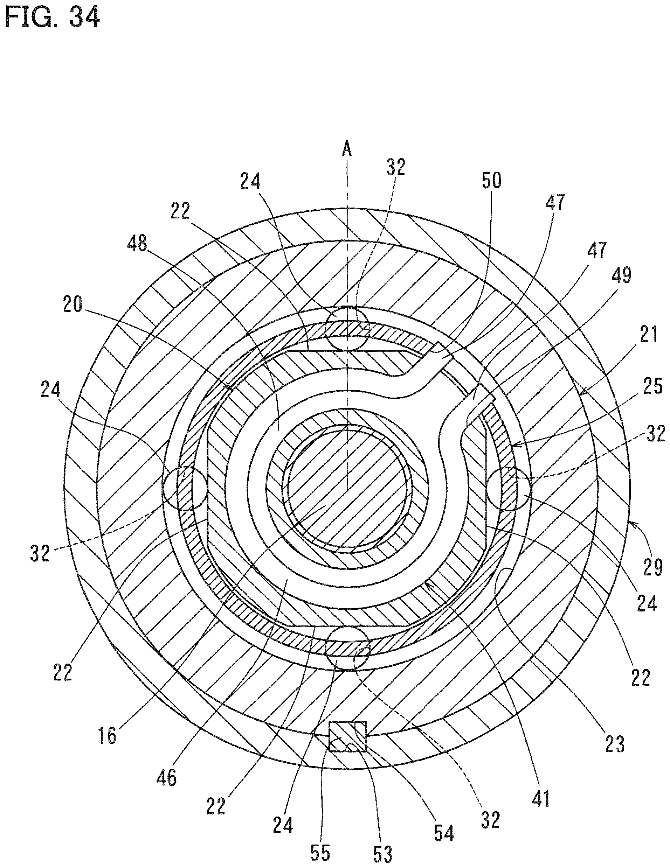

The brake unit 7 includes an inner ring 20 coupled to the motor shaft 16; an outer ring 21 having an inner periphery disposed around the inner ring 20; a plurality of cam surfaces 22 (see Fig. 34) formed on the outer periphery of the inner ring 20; a cylindrical surface 23 formed on the inner periphery of the outer ring 21; engagement elements 24 disposed between the cam surfaces 22 and the cylindrical surface 23; an engagement element cage 25 that retains the engagement elements 24; a centering spring 41 rotationally fixed to the inner ring 20 and the engagement element cage 25; an excitation actuated type electromagnetic brake 17 that brakes the engagement element cage 25; and a brake case 29 coupled to the motor case 15.

The inner ring 20 shown in Fig. 32 is a constituent element of the shaft 9, and is spline-fitted to the outer periphery of the motor shaft 16. Due to this spline fitting, the motor shaft 16 is coupled in a play-free state to the inner ring 20 so as not to rotate relative to the inner ring 20 at all.

The entire inner ring 20 is integrally formed by forging. The inner ring 20 and the motor shaft 16 are separated from each other, because this facilitates formation of the plurality of cam surfaces 22 with high accuracy by forging. As shown in Figs. 32 and 33, the shaft 9 may be constituted by coupling together a plurality of members such as the inner ring 20, the motor shaft 16, and the steering shaft directly coupled to the steering wheel 1, or the shaft 9 may be constituted by a single member or a plurality of members as appropriate, for example, constituted by integrally forming the motor shaft and the steering shaft or integrally forming the motor shaft and the inner ring.

The outer ring 21 and the brake case 29 shown in Fig. 32 are formed separately from each other. The brake case 29 is a tubular member in which constituent parts of the brake unit 7 (the inner ring 20, the engagement elements 24, the engagement element cage 25, the excitation actuated type electromagnetic brake 17, and the like) are received all together. The brake case 29 is made of a non-magnetic material (such as aluminum alloy or copper). A radially outwardly extending flange is formed at one axial end of the brake case 29, and the flange is fixed to an axial end surface of the motor case 15 by bolts (not shown).

On the other hand, the outer ring 21 is formed of a steel material. The outer ring 21 is fitted in the brake case 29, which has a tubular shape, and is prevented from moving out of the brake case 29 by a stop ring 52 mounted on the inner periphery of the brake case 29. Between the inner periphery of the outer ring 21 and the outer periphery of the inner ring 20, a bearing 31 is disposed that rotatably supports the inner ring 20.

As shown in Fig. 34, a common key member 55 is fitted in a key groove 53 formed in the inner periphery of the brake case 29 and a key groove 54 formed in the outer periphery of the outer ring 21, and the outer ring 21 is rotationally fixed to the brake case 29 by the key member 55.

The engagement element cage 25 is an annular member in which a plurality of radially penetrating pockets 32 are formed to be circumferentially spaced apart from each other. The engagement elements 24 are received in the respective pockets 32.

As shown in Fig. 32, the engagement element cage 25 includes an inwardly extending flange 56. The flange 56 is located between a stop ring 57 mounted to the outer periphery of the inner ring 20 and a shoulder portion 58 formed on the outer periphery of the inner ring 20. The flange 56, the stop ring 57, and the shoulder portion 58 restrict axial movement of the engagement element cage 25.

Each engagement element 24 comprises a roller having a circular rolling surface of a circle encircling the central axis of the engagement element.

The engagement element cage 25 is supported to be circumferentially movable, relative to the inner ring 20, between an engagement position at which, by circumferentially moving the engagement elements 24 (shown in Fig. 34) from the circumferential centers of the respective cam surfaces 22, the engagement elements 24 are engaged with the respective cam surfaces 22 and the cylindrical surface 23 and a disengagement position at which, by moving the engagement elements 24 to the circumferential central positions of the respective cam surfaces 22, the engagement elements 24 are disengaged from the respective cam surfaces 22 and the cylindrical surface 23. Fig. 34 shows the state where the engagement element cage 25 is at the disengagement position, particularly, shows the state where the engagement element cage 25 is at a neutral disengagement position A where the engagement elements 24 are disposed at the circumferential centers of the respective cam surfaces 22.

The centering spring 41 shown in Figs. 32 and 34 is an elastic member that elastically holds the engagement element cage 25 at the disengagement position, and that transmits the rotational force of the shaft 9 to the engagement element cage 25. As shown in Fig. 34, the centering spring 41 includes a C-shaped annular portion 46 formed of a steel wire wound into a C-shape; and a pair of extending portions 47 extending radially outward from both ends of the C-shaped annular portion 46, respectively.

A spring receiving recess 48 and a radial groove 49 both for holding the centering spring 41 are formed in an axial end surface of the inner ring 20. The spring receiving recess 48 has a circular arc groove shape extending along the circumferential direction. The radial groove 49 penetrates radially outward from the spring receiving recess 48 to the outer periphery of the inner ring 20.

The C-shaped annular portion 46 of the centering spring 41 is fitted in the spring receiving recess 48. The pair of extending portions 47 are inserted in the radial groove 49. The extending portions 47 protrude beyond the radially outer end of the radial groove 49, and the portions of the extending portions 47 protruding from the radial groove 49 are inserted in a cage groove 50 formed in the engagement element cage 25. The radial groove 49 and the cage groove 50 are formed to have the same circumferential width. The extending portions 47 are in contact with the inner surface portions of the radial groove 49 at both circumferential ends thereof, and with the inner surface portions of the cage groove 50 at both circumferential ends thereof. With this configuration, the centering spring 41 is rotationally fixed to the inner ring 20 so as to rotate in unison with the inner ring 20, and is also rotationally fixed to the engagement element cage 25, whereby the engagement element cage 25 can be elastically held at the disengagement position by the circumferential force acting on the contact portions of the extending portions 47 and the cage groove 50.

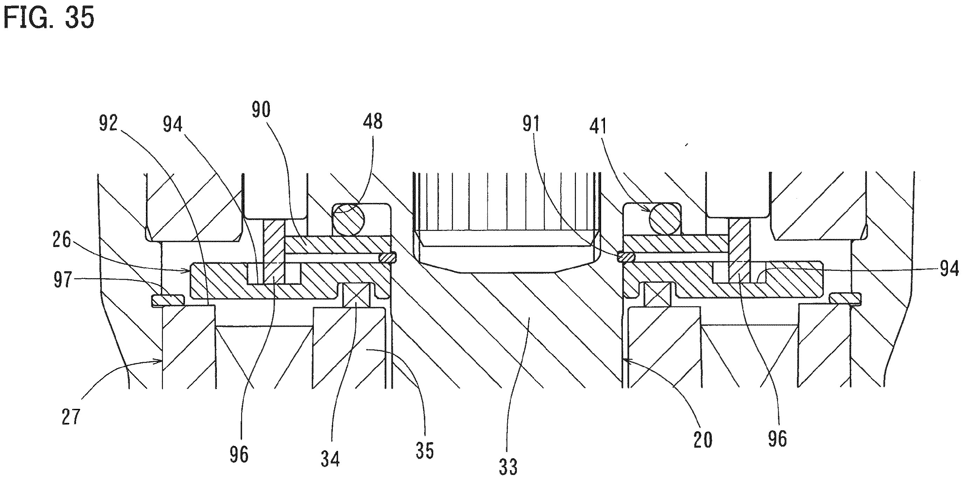

As shown in Figs. 32 and 35, the centering spring 41 is axially restricted by an annular cover member 90 fitted to the outer periphery of the inner ring 20 so as not to move out of the spring housing recess 48 and the like. The axial movement of the cover member 90 is restricted by a stop ring 91 mounted to the outer periphery of the inner ring 20 and an axial end surface of the inner ring 20. The cover member may be omitted, and instead, a flange for preventing the centering spring from moving out may be formed on the engagement element cage 25.

The excitation actuated type electromagnetic brake 17 includes an armature 26 disposed to be axially movable between an inner ring shaft portion 33 provided integrally with the inner ring 20 and the inner periphery of the brake case 29; a friction surface portion 92 fixed at a position axially opposed to the armature 26; an electromagnet 27 axially opposed to the armature 26; and a separation spring 34 for separating the armature 26 from the electromagnet 27 and the friction surface portion 92.

The armature 26 is supported on the outer periphery of the inner ring shaft portion 33 so as to be axially movable. The armature 26 comprises a disk-shaped movable member made of a magnetic material (such as iron or silicon steel). Between the inner ring shaft portion 33 and the inner periphery of the brake case 29, a bearing 93 is disposed that rotatably supports the inner ring 20.

Engaging recesses 94 are formed in the side surface of the armature 26 close to the engagement element cage 25. The engagement element cage 25 is formed with engaging projections 96 that are axially inserted in the respective engaging recesses 94. The engaging projections 96 and the engaging recesses 94 can engage with each other in the circumferential direction. As a result, the armature 26 is rotationally fixed to the engagement element cage 25 so as to circumferentially move in unison with the engagement element cage 25, and is disposed to be axially movable with respect to the engagement element cage 25.

In the shown example, the armature 26 is directly rotationally fixed to the engagement element cage 25, but the cover member may be rotationally fixed to the engagement element cage and the armature so that the armature is indirectly rotationally fixed to the engagement element cage 25 via the cover member.

The electromagnet 27 includes an annular field core 35 having a C-shaped cross section axially opening toward the armature 26; and a solenoid coil 36 wound around the field core 35. The electromagnet 27 is mounted to the inner side of the brake case 29 so as to move neither axially nor circumferentially. A stop ring 97 for restricting the axial movement of the electromagnet 27 is mounted to the inner periphery of the brake case 29.

The friction surface portion 92 is integrally formed with the field core 35. The friction surface portion 92 constitutes the end of the field core 35 close to the armature 26. By mounting the electromagnet 27 to the brake case 29 as described above, the friction surface portion 92 of the field core 35 is fixed at a position axially opposed to the armature 26.

The separation spring 34 is constituted by an annular spring such as a wave washer. The separation spring 34 is disposed between an annular groove portion circumferentially extending on the end surface of the armature 26 close to the electromagnet 27 and the end surface of the field core 35 close to the armature 26. It is also possible to replace the separation spring with different non-annular springs such as compression coil springs that are spaced apart from each other at a plurality of positions in the circumferential direction.

When the solenoid coil 36 is de-energized, the electromagnet 27 is in a non-excited state. At this time, the separation spring 34 supports the armature 26 at a position axially away from the friction surface portion 92 and the electromagnet 27. When the solenoid coil 36 is energized, the electromagnet 27 is in an excited state in which a magnetic circuit is generated to pass through the field core 35 and the armature 26, and the electromagnet 27 axially attracts the armature 26 to the friction surface portion 92 of the field core 35 against the separation spring 34. By this attraction, the armature 26 is axially attracted to the friction surface portion 92, which is a stationary one, and applies an actuation pressure to a frictional contact portion between the friction surface portion 51 and the armature 52, whereby rotation of the engagement element cage 25 can be braked. Furthermore, when the electromagnet 27 is switched from the non-excited state to the excited state, the separation spring 34 sandwiched between the attracted armature 26 and the field core 35, which is a stationary one, is elastically compressed and deformed in the axial direction according to the axial movement of the armature 26. Therefore, a spring force in the direction in which the armature 26 is axially separated from the electromagnet 27 including the friction surface portion 92 is accumulated. When the electromagnet 27 is switched from the excited state to the non-excited state, the armature 26 is axially separated from the electromagnet 27 including the friction surface portion 92 by the elastic restoring force of the separation spring 34, so that rotation of the engagement element cage 25 cannot be braked. The armature 26 separated by the separation spring 34 is received by the engagement element cage 25, and the gap between the armature 26 and the electromagnet 27 is returned to a predetermined magnetic gap.

In a non-excited state where the electromagnet 27 of the excitation actuated type electromagnetic brake 17 is de-energized, the brake unit 7 shown in Fig. 32 is in an idling state in which the inner ring 20 can freely rotate in both normal and reverse rotational directions with respect to the outer ring 21. Specifically, in the state where the armature 26 is supported by the separation spring 34 and is thereby separated from the friction surface portion 92 of the field core 35, and the engagement element cage 25 cannot be braked by the armature 26 and the friction surface portion 92, even when the inner ring 20 rotates in any of the normal and reverse directions, the engagement element cage 25 is co-rotated by the centering spring 41 that rotates in unison with the inner ring 20, and is thereby held at the disengagement position (normally, the neutral disengagement position A shown in Fig. 34) by the elastic restoring force of the centering spring 41. Therefore, the engagement elements 24 retained by the engagement element cage 25 are not engaged with the cam surfaces 22 on the outer periphery of the inner ring 20 and the cylindrical surface 23 on the inner periphery of the outer ring 21, and the inner ring 20 and the motor shaft 16 can freely rotate in both of the normal and reverse directions.

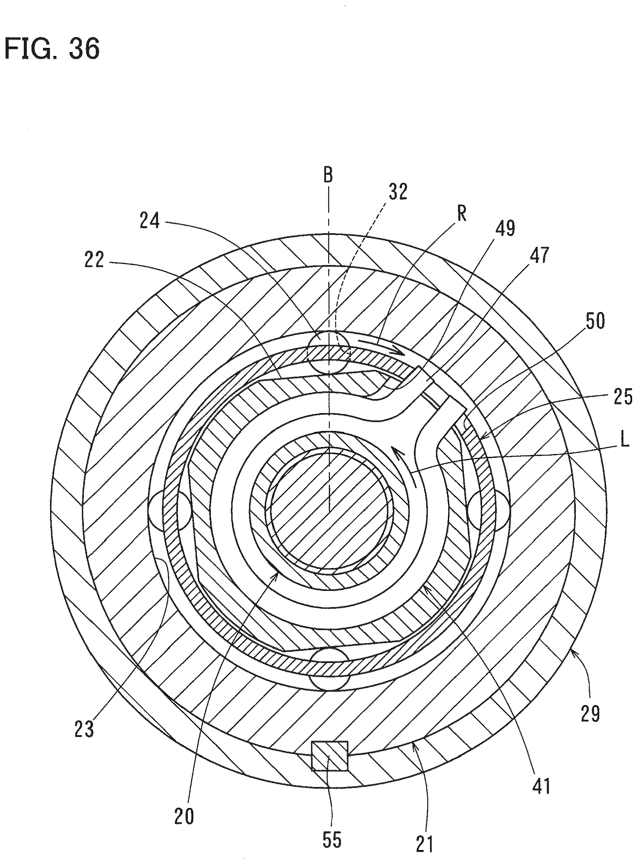

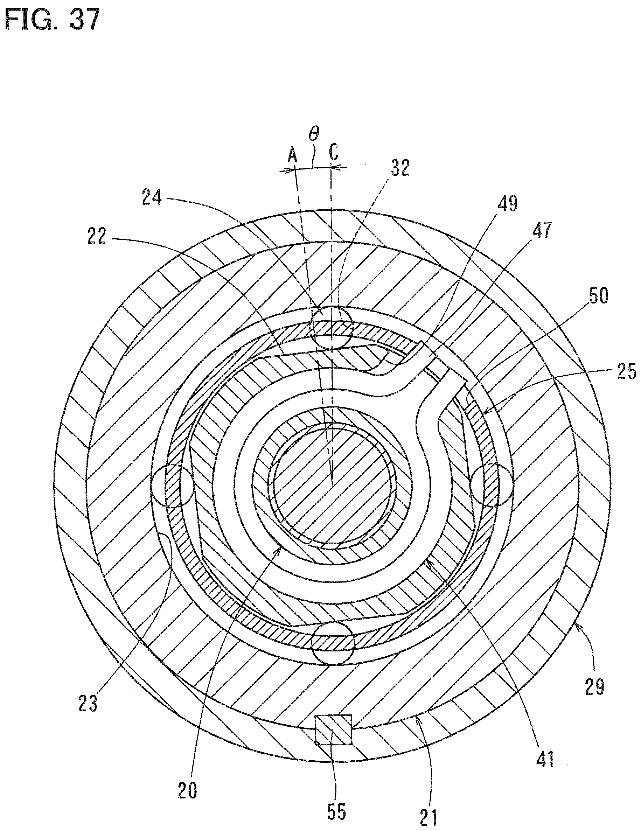

Fig. 36 shows a state where the engagement element cage 25 is at an intermediate disengagement position B (the state where the engagement elements 24 are not engaged with the cam surfaces 22 and the cylindrical surface 23) where the engagement element cage 25 is moving from the neutral disengagement position A (Fig. 34) toward the engagement position. Fig. 37 shows a state where the engagement element cage 25 is at an engagement position C (the state where the engagement elements 24 are engaged with the cam surfaces 22 and the cylindrical surface 23)

When the brake unit 7 is in an excited state where the electromagnet 27 of the excitation actuated type electromagnetic brake 17 is energized, the brake unit 7 is in a locked state where the brake unit 7 can prevent the inner ring 20 from rotating with respect to the outer ring 21 in both normal and reverse directions. That is, when the electromagnet 27 is energized to switch the state to the excited state, the armature 26 is attracted to the friction surface portion 92 of the field core 35 against the separation spring 34, and comes into a state where the armature 26 is in frictional contact with the friction surface portion 92. At this time, as shown in Fig. 36, when the inner ring 20 rotates in either the normal or reverse direction (Fig. 36 exemplifies the case where the inner ring 20 rotates in the direction of arrow L), the rotational force of the inner ring 20 is transmitted from the centering spring 41, which rotates in unison with the inner ring 20, to the engagement element cage 25. However, since a braking force due to the frictional contact between the armature 26 (see Fig. 32) rotationally fixed to the engagement element cage 25 and the friction surface portion 92, which is a stationary one, acts on the engagement element cage 25 via the armature 26, the inner ring 20 rotates relative to the engagement element cage 25. As a result, the engagement element cage 25, which moves in the circumferential direction (the direction of arrow R in the example in Fig. 36) with respect to the inner ring 20, circumferentially pushes and elastically deflects one of the pair of extending portions 47 of the centering spring 41 on the groove inner surface of the cage groove 50; therefore, the engagement element cage 25 circumferentially moves from the neutral disengagement position A in Fig. 34 to the intermediate disengagement position B in Fig. 36 against the centering spring 41. When the circumferential movement reaches a predetermined angle amount, the engagement element cage 25 reaches an engagement position C shown in Fig. 37, and the engagement elements 24 retained by the engagement element cage 25 engages with the cam surfaces 22 on the outer periphery of the inner ring 20 and the cylindrical surface 23 on the inner periphery of the outer ring 21, so that rotation of the inner ring 20 is prevented and rotation of the motor shaft 16, which is coupled to the inner ring 20, is prevented.

The control unit 8 shown in Fig. 33 determines whether the direction of the steered wheels 3 has reached the stroke end on the basis of the position of the steering shaft 10 detected by a steering sensor 13. Here, when the control unit determines that the direction of the steered wheels 3 has not reached the stroke end, the excitation actuated type electromagnetic brake 17 is brought into the non-excited state by de-energizing the electromagnet 27 shown in Fig. 32, thereby keeping the brake unit 7 in the above-described idling state. Here, when the control unit determines that the direction of the steered wheels 3 shown in Fig. 33 has reached the stroke end, the excitation actuated type electromagnetic brake 17 is brought into the excited state by energizing the electromagnet 27 shown in Fig. 32, thereby keeping the brake unit 7 in the above-described locked state.

In the example in Fig. 33, the brake unit 7 including the outer ring 21, the engagement elements 24, the engagement element cage 25, and the excitation actuated type electromagnetic brake 17 is disposed on the side of the reaction force motor 6 axially opposite/remote from the steering wheel 1. However, it is also possible to dispose the brake unit 7 between the steering wheel 1 and the reaction force motor 6. In this case, it is only necessary to adopt a configuration in which the motor shaft 16 shown in Fig. 32 is extended to the upper side of the reaction force motor 6, the brake case 29 is additionally provided with a through hole axially opposed to the inner ring shaft portion 33, the brake unit 7 is mounted in an upside down manner compared to Figs. 32 and 33 so as to be located on side of the reaction force motor 6 close to the steering wheel 1, and the inner ring shaft portion 33 is coupled to the shaft portion on the steering column side of the shaft 9.

The above-described steering system(hereinafter, appropriately see Figs. 32 to 37) is configured as a steer-by-wire type steering system that includes a steering wheel 1; a steering sensor 5 that detects an operation amount of the steering wheel 1; a steering actuator 2 that changes the direction of steered wheels 3 as a steering target according to the operation amount of the steering wheel 1 detected by the steering sensor 5; a shaft 9 coupled to the steering wheel 1 so as to rotate in unison with the steering wheel 1; an outer ring 21 having an inner periphery disposed around the shaft 9; an engagement elements 24 disposed between the shaft 9 and the inner periphery of the outer ring 21; an engagement element cage 25 that retains the engagement elements 24, and that is disposed to be circumferentially movable, with respect to the shaft 9, between an engagement position where the engagement elements 24 are engaged with the shaft 9 and the inner periphery of the outer ring 21 and a disengagement position where the engagement elements 24 are disengaged from the shaft 9 and the inner periphery of the outer ring 21; a centering spring 41 that elastically holds the engagement element cage 25 at the disengagement position, and that is rotationally fixed to the shaft 9 and the engagement element cage 25 so as to rotate in unison with the shaft 9; and an excitation actuated type electromagnetic brake 17 that brakes the engagement element cage 25. With this configuration, when the excitation actuated type electromagnetic brake 17 is brought into the non-excited state, and is therefore brought into a state in which the engagement element cage 25 is not braked, the centering spring 41, which is rotationally fixed to the shaft 9 so as to rotate in unison with the shaft 9, transmits the rotational force of the shaft 9 to the engagement element cage 25, and holds the engagement element cage 25 at the disengagement position with respect to the shaft 9. Therefore, the engagement elements 24 cannot engage with the shaft 9 and the inner periphery of the outer ring 21, so that the steering wheel 1 is allowed to rotate. On the other hand, in the state where the excitation actuated type electromagnetic brake 17 is brought into the excited state and is therefore bought into a state in which the engagement element cage 25 is braked, the engagement element cage 25 to which the rotational force of the shaft 9 is transmitted from the centering spring 41 is braked by the excitation actuated type electromagnetic brake 17. Therefore, even in a case where the steering wheel 1 is rotationally operated, when the shaft 9 relatively rotates with respect to the engagement element cage 25, and the engagement element cage 25 circumferentially moving with respect to the shaft 9 reaches the engagement position against the centering spring 41, the engagement elements 24 are engaged with the shaft 9 and the inner periphery of the outer ring 21, and the shaft 9 is reliably prevented from further rotating. When the excitation actuated type electromagnetic brake 17 is switched from the excited state to the non-excited state, the elastic restoring force of the centering spring 41 returns the engagement element cage 25 to the disengagement position.

Therefore, in this steering system, by switching the excitation actuated type electromagnetic brake 17 from the non-excited state to the excited state, it is possible to reliably prevent the steering wheel 1 from rotating beyond the amount of movement of the engagement element cage 25 in the circumferential direction between the disengagement position and the engagement position, and to reliably cause the driver to sense, via the steering wheel 1, that the direction of the steered wheels 3 has reached the stroke end.

The amount of movement of the engagement element cage 25 in the circumferential direction between the disengagement position and the engagement position can be appropriately set on the basis of the engagement elements 24 and the dimensional settings of (i) the wedge spaces defined by the cam surfaces 22 and the cylindrical surface 23 and (ii) the engagement elements 24. Therefore, in a case where the amount of movement of the engagement element cage 25 in the circumferential direction between the disengagement position and the engagement position is small and the brake unit 7 therefore shifts rapidly to the locked state, it is possible to reduce or minimize the amount by which the steering wheel 1 is allowed to turn after the control unit 8 switches the excitation actuated type electromagnetic brake 17 from the non-excited state to the excited state. In such a case, there is no practical problem even if the excitation actuated type electromagnetic brake 17 is switched from the non-excited state to the excited state when the control unit 8 determines that the direction of the steered wheels 3 has reached the stroke end. For example, the amount of movement of the engagement element cage 25 in the circumferential direction between the disengagement position and the engagement position can be set to 20° or less when considered in terms of the rotational angle between the disengagement position and the engagement position of the engagement element cage 25.

Furthermore, in a case where the steering wheel 1 can be allowed to rotate by a predetermined amount after the control unit 8 switches the excitation actuated type electromagnetic brake 17 from the non-excited state to the excited state, it is possible to switch the excitation actuated type electromagnetic brake 17 from the non-excited state to the excited state when the control unit 8 determines that the direction of the steered wheels 3 has reached a predetermined stroke position. The predetermined stroke position may be set such that the steering wheel 1 is allowed to rotate by a predetermined amount of rotation corresponding to the amount of movement of the engagement element cage 25 in the circumferential direction between the disengagement position and the engagement position (corresponding to the rotational angle θ of the engagement element cage 25 from the neutral disengagement position A to the engagement position C shown in Fig. 37) after the excitation actuated type electromagnetic brake 17 is switched from the non-excited state to the excited state, and when the direction of the steered wheels 3 reaches the stroke end due to the direction change of the steered wheels 3 according to the rotation operation of the steering wheel 1 by the allowed amount of rotation, the engagement element cage 25 reaches the engagement position.

Even when the timing to switch the excitation actuated type electromagnetic brake 17 from the non-excited state to the excited state as described above is set to either one of the following timings: when it is determined that the direction of the steered wheels 3 has reached the stroke end; and when it is determined that the direction thereof has reached the predetermined stroke position, the resistance (the reaction force from the centering spring 41) when the centering spring 41 is elastically deformed while the engagement element cage 25 moves from the disengagement position to the engagement position is applied to the shaft 9, and the resistance increases as the engagement element cage 25 approaches the engagement position. For the driver, the rotational operation of the steering wheel 1 becomes heavier due to the above-described increase in resistance. That is, in the example in Figs. 36 and 37, the torque (the reaction force from the centering spring 41) to deflect the extending portions 47 of the centering spring 41 increases, and this torque is received by the driver holding the steering wheel 1 in Fig. 33. Therefore, when the excitation actuated type electromagnetic brake 17 is switched to the excited state, the driver feels that the steering torque required for the rotation operation of the steering wheel 1 has become larger than during the normal rotation operation of the steering wheel 1 (when the excitation actuated type electromagnetic brake 17 is not excited), that is, the drive feels that the rotation operation has become heavier. As a result, it is possible to cause the driver to sense that the direction of the steered wheels 3 is in the vicinity of the stroke end.

Furthermore, this steering system includes an excitation actuated type electromagnetic brake 17 including an armature 26 rotationally fixed to the engagement element cage 25, and disposed to be axially movable; a friction surface portion 92 fixed to a position axially opposed to the armature 26; an electromagnet 27 axially opposed to the armature 26; and a separation spring 34 that supports the armature 26 at a position axially away from the electromagnet 27 and the friction surface portion 92 when the electromagnet 27 is not exited, and that is disposed to store force according to the axial movement of the armature 26 attracted to the friction surface portion 92 by the electromagnet 27 when the electromagnet 27 is excited. Therefore, in a non-excited state where the electromagnet 27 is de-energized, it is possible to hold the armature 26 at a position separated from the friction surface portion 92 by the support of the separation spring 34 such that the engagement element cage 25 is not braked, and, in addition, a predetermined magnetic gap can be generated between the armature 26 and the electromagnet 27. When the electromagnet 27 is switched from the non-excited state to the excited state, the electromagnet 27 attracts the armature 26 to the friction surface portion 92 against the separation spring 34, and apples an actuation pressure between the friction surface portion 92 and the armature 26, whereby the engagement element cage 25 can be braked and circumferentially moved with respect to the shaft 9. Since the separation spring 34 store force according to the axial movement of the armature 26 when the armature 26 is attracted, when the electromagnet 27 is switched from the excited state to the non-excited state, the armature 26 can be separated from the friction surface portion 92 and the electromagnet 27 by the elastic restoring force of the separation spring 34, whereby the braking of the engagement element cage 25 can be released.

Furthermore, in this steering system, the electromagnet 27 includes a field core 35 axially opposed to the armature 26; and a solenoid coil 36 wound around the field core 35, the friction surface portion 92 is integrally formed with the field core 35, and the armature 26 is a movable member that is directly attracted and stuck to the friction surface portion 92 of the field core 35 when the electromagnet 27 is excited. Therefore, it is possible to omit, between the electromagnet 27 and the armature 26, a rotor against which the armature 26 abuts, and, as a result, the size and the number of parts of the excitation actuated type electromagnetic brake 17 can be reduced. In addition, since no rotor is provided between the electromagnet 27 and the armature 26, a magnetic flux efficiently circulates between the electromagnet 27 and the armature 26 compared to the case where a rotor is provided. Therefore, compared to the case where a rotor is provided, in the case where no rotor is provided, the attraction force of the electromagnet 27 with respec.t to the armature 26 can be increased to enhance the braking performance of the engagement element cage 25, and, as a result, it is possible to increase the reaction force of the centering spring 41 with respect to the relative rotation between the engagement element cage 25 and the shaft 9 at the time of braking, so that the steering torque can be increased.

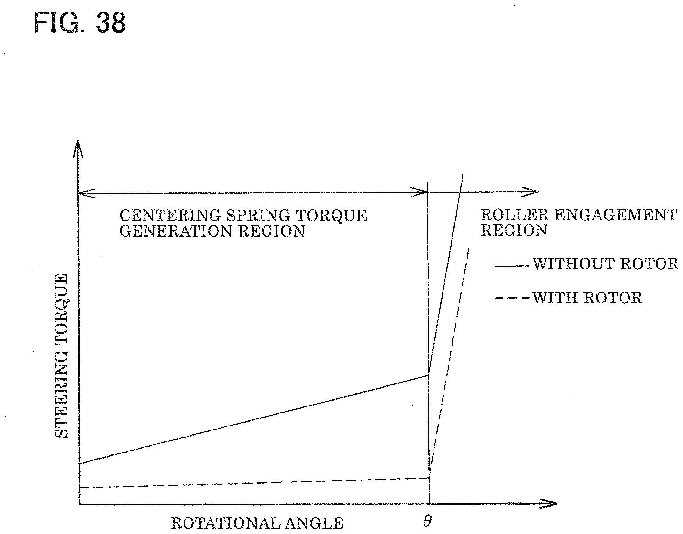

Here, Fig. 38 schematically shows the relationship between the rotational angle of the steering wheel 1, the shaft 9, and the increase in the steering torque, which is the above-described reaction force from the centering spring 41. The "centering spring torque generation region" in Fig. 38 corresponds to the situation where the driver is further turning the steering wheel 1 in Fig. 33 after the excitation actuated type electromagnetic brake 17 is switched to the excited state and until the engagement element cage 25 in Fig. 34 reaches the engagement position C in Fig. 37 from the neutral disengagement position A. The "roller engagement region" in Fig. 38 corresponds to the situation where, although the driver performs a rotation operation to further turn the steering wheel 1 in Fig. 33 after the engagement element cage 25 reaches the engagement position C as in Fig. 37, the rotation operation is prevented by the engagement of the engagement elements 24 with the cam surfaces 22 and the cylindrical surface 23. As shown in Fig. 38, when the driver further turns the steering wheel 1 toward the stroke end side after the excitation actuated type electromagnetic brake 17 in Fig. 32 is switched to the excited state (centering spring torque generation region), the steering torque increases as the steering wheel 1 is further turned. This tendency is the same regardless of whether or not a rotor is provided. However, compared to the case where a rotor is provided, in the case where no rotor is provided, the steering torque in the centering spring torque generation region is explicitly larger immediately after excitation, and an increase rate of the steering torque with respect to the increase in the rotational angle (amount of turn) is also larger.

Therefore, for this steering system, which is provided with the excitation actuated type electromagnetic brake 17 including no rotor as described above, it is possible to cause the driver to sense that the direction of the steered wheels 3 is in the vicinity of the stroke end by rapidly making the rotation operation of the steering wheel 1 heavier than in normal time (when the electromagnet 27 is not excited) immediately after the electromagnet 27 is excited.

Furthermore, since this steering system includes a control unit 8 that switches the excitation actuated type electromagnetic brake 17 to the excited state at a predetermined stroke position before the direction of the steered wheels 3 as a steering target reaches the stroke end, the electromagnet 27 is switched to the excited state when the direction of the steered wheels 3 is close to the stroke end, the driver who is further turning the steering wheel 1 after the switching to the excited state can sense that the direction of the steered wheels 3 is approaching the stroke end, by rapidly making, before the direction of the steered wheels 3 reaches the stroke end, the rotation operation of the steering wheel 1 heavier than in normal time.

In addition, this steering system includes a tubular brake case 29 in which the excitation actuated type electromagnetic brake 17 and the outer ring 21 are received, and the brake case 29 is formed of a non-magnetic material, and formed separately from the outer ring 21, and the outer ring 21 is rotationally fixed to the brake case 29. Therefore, when the excitation actuated type electromagnetic brake 17 is brought into the excited state, the magnetic flux generated from the excitation actuated type electromagnetic brake 17 does not leak to the brake case 29. Therefore, the size of the excitation actuated type electromagnetic brake 17 can be reduced.

In addition, this steering system further includes a reaction force motor 6 that applies a steering reaction force to the steering wheel 1, the steering target is the pair of right and left steered wheels 3, and the outer ring 21, the engagement elements 24, the engagement element cage 25, and the excitation actuated type electromagnetic brake 17 are disposed (i) between the steering wheel 1 and the reaction force motor 6 or (ii) on the side of the reaction force motor 6 axially opposite/remote from the steering wheel 1. Therefore, as a steer-by-wire type steering system for a vehicle, it is possible to cause the driver to reliably sense, via the steering wheel 1, that the direction of the steered wheels 3 has reached the stroke end.

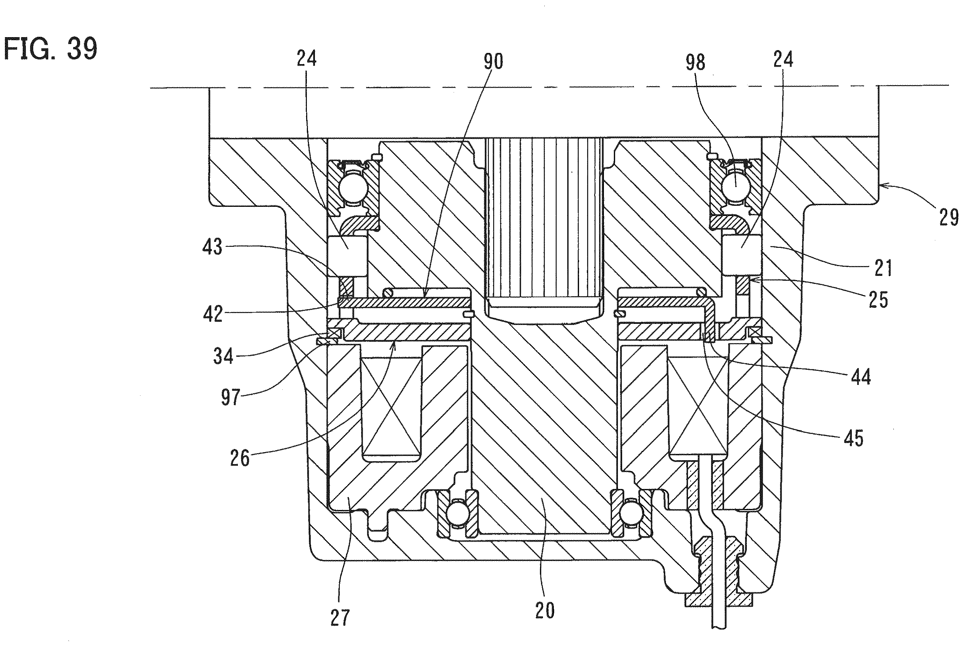

Fig. 39 shows the second embodiment of the second invention. Only the features of the second embodiment that are different from those of the first embodiment are described below. With respect to the elements of the second embodiment corresponding to those of the first embodiment, the same element names are used.

In the steering system according to the second embodiment of the second invention, the outer ring 21 is integrally formed with the brake case 29. Of the inner periphery of the brake case 29, the portion forming a cylindrical surface with which the engagement elements 24 are engaged functions as the outer ring 21. A bearing 98 is disposed between the inner ring 20 and the inner periphery of the brake case 29. The inner peripheral portion of the brake case 29 from the opening end of the brake case 29 to the electromagnet 27 has a large inner diameter compared to the first embodiment, and dimensions of parts such as the outer diameter of the engagement element cage 25, the outer diameter of the cover member 90, and the pitch circle diameter of the engagement elements 24 are increases according to the above large inner diameter. Due to this, it is possible to insert the electromagnet 27, the armature 26, and the like into the brake case 29 from the opening of the brake case 29.

The separation spring 34 is interposed between the stop ring 97 and the armature 26.

An engaging recess (cutout) 42 recessed in the axial direction is formed on the side surface of the engagement element cage 25 on the side of the armature 26. An axial hole (slit portion) 45 is formed to axially penetrate through the armature 26. The cover member 90 includes an engaging projection (first protrusion) 43 inserted in the engaging recess 42 so as to be circumferentially engageable and axially movable; and an axial protrusion (second protrusion) 44 inserted in the axial hole 45 so as to be circumferentially engageable and axially movable. The armature 26 is axially moved with respect to the engagement element cage 25 and the cover member 90 by switching between the non-excited state and the excited state of the electromagnet 27, but the armature 26 is rotationally fixed to the engagement element cage 25 via the cover member 90 by the circumferential engagements between the engaging projection 43 and the engaging recess 42 and between the axial protrusion 44 and the axial hole 45.

The steering system according to the second embodiment of the second invention includes a cylindrical brake case 29 that receives the excitation actuated type electromagnetic brake 17, and the outer ring 21 is integrally formed with the brake case 29. Therefore, it is possible to omit a step in which the outer ring 21 is axially positioned with respect to the brake case 29 by a stop ring or the like and in which the rotation of the outer ring 21 with respect to the brake case 29 is prevented by a key or the like, and it is possible to reduce the number of parts.

In each of the above embodiments, the motor case 15 of the reaction force motor 6 and the brake case 29 are formed separately, but may be formed integrally.

In each of the above-described embodiments, the friction surface portion 92 is a part of the field core 35 of the electromagnet 27, but the friction surface portion 92 may be disposed as another member such as a rotor mounted to the brake case 29.

In each of the above-described embodiments, the steer-by-wire type operation system for a vehicle is excited, but the second invention can also be applied to a steer-by-wire type operation system for a vessel that does not include the reaction force motor 6, and that includes a rudder as a steering target.

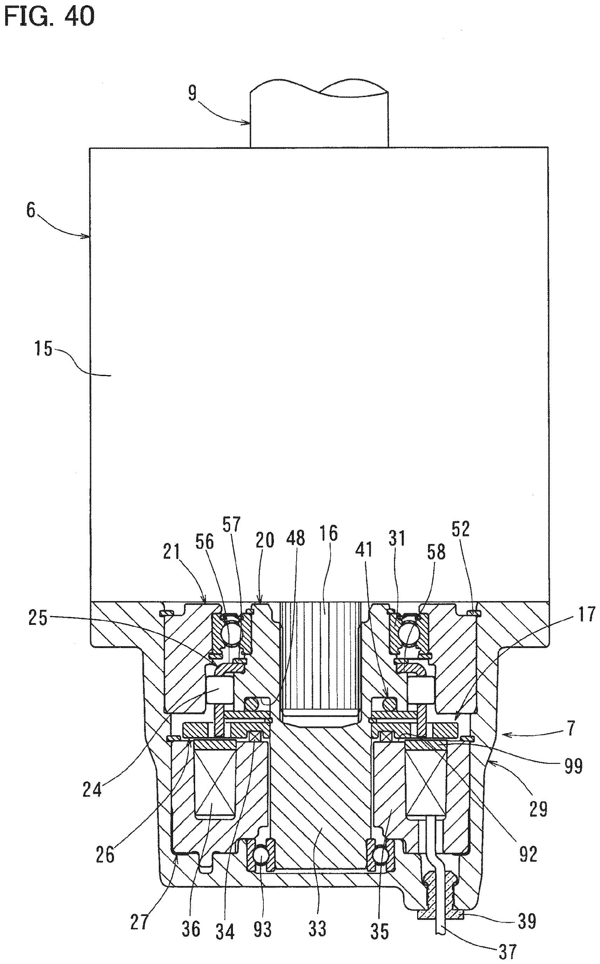

Fig. 40 shows a steer-by-wire type steering system according to the first embodiment of the third invention as an example thereof. Hereinafter, the elements thereof corresponding to those of the embodiments of the second invention are denoted by the same numerals, and the description thereof is omitted.

The armature 26 has engaging holes 95 axially penetrating through the armature 26. The engagement element cage 25 is formed with engaging projections 96 axially inserted in the engaging holes 95. The engaging projections 96 and the engaging holes 95 can circumferentially engage with each other. As a result, the armature 26 is rotationally fixed to the engagement element cage 25 so as to circumferentially move in unison with the engagement element cage 25, and is disposed to be axially movable with respect to the engagement element cage 25. Circumferential play (gap) be between the engaging hole portions and the engaging projections so as to allow relative rotation of the engagement element cage 25 and the armature within the play.

When the solenoid coil 36 is de-energized, the electromagnet 27 is in a non-excited state. At this time, the separation spring 34 supports the armature 26 at a position axially away from the friction surface portion 92 and the electromagnet 27. When the solenoid coil 36 is energized, the electromagnet 27 is in an excited state in which a magnetic circuit is generated to pass through the field core 35 and the armature 26, and axially attracts the armature 26 to the friction surface portion 92 of the field core 35 against the separation spring 34. By this attraction, the armature 26 is axially attracted to the friction surface portion 92, which is a stationary one, and applies an actuation pressure to a frictional contact portion between the friction surface portion 51 and the armature 52, whereby the rotation of the engagement element cage 25 can be braked. Furthermore, when the electromagnet 27 is switched from the non-excited state to the excited state, the separation spring 34 sandwiched between the attracted armature 26 and the field core 35, which is a stationary one is elastically compressed and deformed in the axial direction according to the axial movement of the armature 26. Therefore, a spring force in the direction in which the armature 26 is axially separated from the electromagnet 27 including the friction surface portion 92 is accumulated. When the electromagnet 27 is switched from the excited state to the non-excited state, the armature 26 is axially separated from the electromagnet 27 including the friction surface portion 92 by the elastic restoring force of the separation spring 34, so that rotation of the engagement element cage 25 cannot be braked. The armature 26 separated by the separation spring 34 is received by the stop ring 91, and the gap between the armature 26 and the electromagnet 27 is returned to a predetermined magnetic gap.

The brake unit 7 further includes an impact absorbing member 99 between the electromagnet 27 and the armature 26. The end of the impact absorbing member 99 on the side of the armature 26 is disposed such that, when the electromagnet 27 is not excited, the axial distance between the impact absorbing member 99 and the armature 26 is smaller than the axial distance between the friction surface portion 92 and the armature 26. The armature 26 attracted to the electromagnet 27 comes into axial contact with the impact absorbing member 99 before coming into contact with the friction surface portion 92, so that the armature 26 can abut against the friction surface portion 92 after the impact absorbing member 99 is elastically compressed between the attracted armature 26 and the electromagnet 27. Therefore, impact energy when the armature 26 attracted by the electromagnet 27 collides with the friction surface portion 92 is absorbed by deformation of the impact absorbing member 99. Since the impact absorbing member 99 alleviates the collision between the friction surface portion 92 and the armature 26 as described above, the collision noise is reduced.

The impact absorbing member 99 in the shown example is a resin member for fixing the solenoid coil 36. The end of the impact absorbing member 99 opposite/remote from the armature 26 is in an opening of the field core 35. Such an impact absorbing member 99 can fix the axial position of the solenoid coil 36 with respect to the field core 35 by a method in which at the same time as the impact absorbing member 99 is formed of a casting resin injected into the opening of the field core 35 in which the solenoid coil 36 is received, the impact absorbing member 99 is adhered to the surface of the field core 35. An impact absorbing member separate from the member for fixing the solenoid coil can be disposed, but if the resin member which is in the opening of the field core 35, and which is adhered to the field core 35 constitutes the impact absorbing member 99, it is possible to reduce the number of parts, and omit an assembling step of disposing the impact absorbing member 99.

While, in the shown example, the impact absorbing member 99 is mounted to the electromagnet 27, the impact absorbing member may be mounted to the end surface of the armature 26 close to the electromagnet 27. Furthermore, the impact absorbing member is not limited to a member made of resin, and can also be made of one or more materials. For example, it is also possible to use an impact absorbing member in which an elastomer portion for absorbing impact is adhered to a metal core, and the metal core may be coupled to the armature.

In a release state in which the electromagnet 27 of the electromagnetic brake 17 is de-energized, the brake unit 7 shown in Fig. 40 is in an idling state in which the inner ring 20 can freely rotate in both normal and reverse rotational directions with respect to the outer ring 21. Specifically, in the state where the armature 26 is supported by the separation spring 34 and is thereby separated from the friction surface portion 92 of the field core 35, and the engagement element cage 25 cannot be braked by the armature 26 and the friction surface portion 92, even when the inner ring 20 rotates in any of normal and reverse directions, the engagement element cage 25 is co-rotated by the centering spring 41 rotating in unison with the inner ring 20 and is thereby held at the disengagement position (normally, the neutral disengagement position shown in Fig. 34) by the elastic restoring force of the centering spring 41. Therefore, the engagement elements 24 retained by the engagement element cage 25 are not engaged with the cam surfaces 22 on the outer periphery of the inner ring 20 and the cylindrical surface 23 on the inner periphery of the outer ring 21, and the inner ring 20 and the motor shaft 16 can freely rotate in both normal and reverse directions.

On the other hand, when brake unit 7 is in an operating state where the electromagnet 27 of the electromagnetic brake 17 is energized, the brake unit 7 is in a locked state where the inner ring 20 is prevented from rotating with respect to the outer ring 21 in both normal and reverse directions. That is, when the electromagnet 27 is energized to switch the state to the excited state, the armature 26 is attracted to the friction surface portion 92 of the field core 35 against the separation spring 34, and is kept in frictional contact with the friction surface portion 92. As shown in Fig. 36, when the inner ring 20 rotates in either the normal or reverse direction (one circumferential direction) (Fig. 36 exemplifies the case where the rotation direction is the direction of arrow L), the rotational force of the inner ring 20 is transmitted to the engagement element cage 25 from the centering spring 41 rotating in unison with the inner ring 20. Then, the engaging projections 96 of the engagement element cage 25 rotate in the direction of arrow L with respect to the engaging holes 95 of the armature 26 braked by the stationary friction surface portion 92 shown in Fig. 40. By this rotation, the engaging projections 96 of the engagement element cage 25 are engaged in the engaging holes 95 of the armature 26 in the circumferential direction. In this engaged state, a braking force due to the frictional contact between the armature 26 rotationally fixed to the engagement element cage 25 and the stationary friction surface portion 92 acts on the engagement element cage 25 via the armature 26, and thus the engagement element cage 25 is braked by the friction surface portion 92 via the armature 26. That is, the electromagnetic brake 17 is in an operating state where the engagement element cage 25 is braked, and the inner ring 20 rotates relative to the engagement element cage 25 as shown in Fig. 36. At this time, the engagement element cage 25 moving in the other circumferential direction (the direction of arrow R in Fig. 36) with respect to the inner ring 20 circumferentially pushes and elastically deflects one of the pair of extending portions 47 of the centering spring 41 on the groove inner surface of the cage groove 50; therefore, the engagement element cage 25 circumferentially moves against the centering spring 41 (in Fig. 36, the engagement elements 24 are not engaged with the cam surfaces 22 and the cylindrical surface 23). When the circumferential movement reaches a predetermined angle amount, the engagement element cage 25 reaches the engagement position shown in Fig. 37, and the engagement elements 24 retained by the engagement element cage 25 engages with the cam surfaces 22 on the outer periphery of the inner ring 20 and the cylindrical surface 23 on the inner periphery of the outer ring 21, so that rotation of the inner ring 20 is reliably prevented.

In this embodiment, the control unit 8 shown in Fig. 33 can determine the rotation directions of the steering wheel 1 and the shaft 9 on the basis of appropriate sensor outputs (phase detection, torque detection, and the like) of the external sensor 51, the steering sensor 5, the steering sensor 13, and the like.

The control unit 8 further determines which position of stroke the direction of the steered wheels 3 is located at, on the basis of the position of the steering shaft 10 detected by the steering sensor 13. Here, when the control unit determines that the direction of the steered wheels 3 is not at the stroke end, the brake unit 7 is kept in the above-described idling state. On the other hand, when the control unit determines that the direction of the steered wheels 3 is at the stroke end, the brake unit 7 is kept in the above-described locked state.

In addition, the control unit 8 performs (i) a motor control operation to increase the rotational torque of the reaction force motor 6 such that the steering reaction force increases as the direction of the steered wheels 3 approaches the stroke end, (ii) in addition to the motor control operation, a braking control operation to activate the electromagnetic brake 17 shown in Fig. 40, and (iii) a release control operation to release the electromagnetic brake 17 shown in Fig. 40 when the rotation operation of the steering wheel 1 in the other circumferential direction is performed from the state where the direction of the steered wheels 3 has reached the stroke end by the rotation operation of the steering wheel 1 shown in Fig. 33 in one circumferential direction.

Here, the amount of circumferential movement of the engagement element cage 25 between the neutral disengagement position shown in Fig. 34 and the engagement position shown in Fig. 37 of the engagement element cage 25 can be appropriately set on the basis of the engagement elements 24 and the dimensional settings of (i) the wedge spaces defined by the cam surfaces 22 and the cylindrical surface 23 and (ii) the engagement elements 24. For example, the amount of movement of the engagement element cage 25 in the circumferential direction between the disengagement position and the engagement position can be set to 5 and 15° or less when considered in terms of the rotational angle between the disengagement position and the engagement position of the engagement element cage 25. Therefore, it is possible to define the amount of rotation allowed for the steering wheel 1 after the control unit 8 shown in Fig. 33 performs the braking control operation.

When the control unit 8 performs the braking control operation, the resistance (the reaction force from the centering spring 41) when the centering spring 41 is elastically deformed is applied to the shaft 9 while the engagement element cage 25 moves from the disengagement position to the engagement position as shown in Figs. 36 and 37, and the resistance increases as the engagement element cage 25 approaches the engagement position. For the driver, the rotational operation of the steering wheel 1 shown in Fig. 33 becomes heavier according to the above increase in resistance. That is, the torque (the reaction force from the centering spring 41) to deflect the extending portions 47 of the centering spring 41 shown in Fig. 37 increases, and this torque is received by the driver holding the steering wheel 1 in Fig. 33. Therefore, the steering torque becomes gradually larger than during normal rotation operation of the steering wheel 1 (when the electromagnetic brake is released), in other words, the rotation operation becomes heavier. As a result, it is possible to cause the driver to sense that the direction of the steered wheels 3 is approaching the stroke end.

When, in the state where the engagement element cage 25 has reached the engagement position shown in Fig. 37, the driver further turns the steering wheel 1 shown in Fig. 33, the steering reaction force continues to be increased by the motor control operation, and the rotation operation is prevented by the engagement of the engagement elements 24 with the cam surface 22 and the cylindrical surface 23 as shown in Fig. 37. Therefore, even if the steering wheel 1 is further turned, the direction of the steered wheels 3 cannot be changed. Therefore, the direction of the steered wheels 3 reaches the stroke end at the rotational angle when the engagement element cage 25 reaches the engagement position, and the steering lock can be performed.

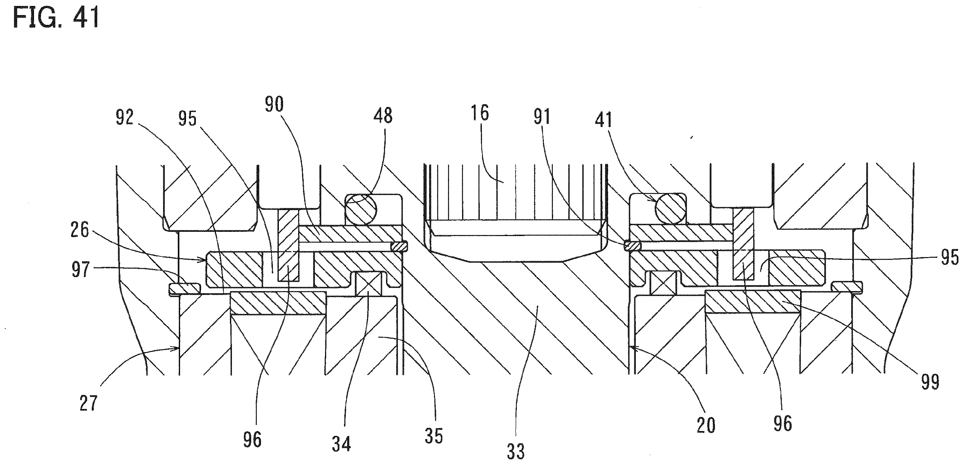

The above-described steering system (hereinafter, see Figs. 33, 34, 36, 37, 40, and 41 as appropriate) is a steer-by-wire type steering system that includes a steering wheel 1; a steering sensor 5 that detects an operation amount of the steering wheel 1; a steering actuator 2 that changes the direction of steered wheels 3 as a steering target according to the operation amount of the steering wheel 1 detected by the steering sensor 5; and an electromagnetic brake 17, the electromagnetic brake 17 including an armature 26 disposed to be axially movable, a friction surface portion 92 fixed at a position axially opposed to the armature 26, and an electromagnet 27 that attracts the armature 26 when excited, and axially moves the armature 26 until the armature 26 comes into contact with the friction surface portion 92 wherein the steer-by-wire type steering system further includes a shaft 9 coupled to the steering wheel 1 so as to rotate in unison with the steering wheel 1; an outer ring 21 having an inner periphery disposed around the shaft 9; engagement elements 24 disposed between the shaft 9 and the inner periphery of the outer ring 21; an engagement element cage 25 that retains the engagement elements 24, and that is disposed to be circumferentially movable with respect to the shaft 9 between an engagement position where the engagement elements 24 are engaged with the shaft 9 and the inner periphery of the outer ring 21 and a disengagement position where the engagement elements 24 are disengaged from the shaft 9 and the inner periphery of the outer ring 21; a centering spring 41 that elastically holds the engagement element cage 25 at the disengagement position and that is rotationally fixed to the shaft 9 and the engagement element cage 25 so as to be rotatable in unison with the shaft 9; an impact absorbing member 99 that alleviates collision between the armature 26 attracted by the electromagnet 27 and the friction surface portion 92, and wherein the electromagnetic brake 17 is disposed to switch, according to the axial movement of the armature 26, between a state in which the engagement element cage 25 is braked and a state in which the braking is released. With this configuration, when the shaft 9 (inner ring 20) rotates while the electromagnetic brake 17 is in the release state where the electromagnetic brake 17 does not brake the engagement element cage 25, the centering spring 41, which is rotationally fixed to the shaft 9 so as to rotate in unison with the shaft 9, transmits the rotational force of the shaft 9 to the engagement element cage 25, and holds the engagement element cage 25 at the disengagement position with respect to the shaft 9. Therefore, the engagement elements 24 cannot be engaged with the shaft 9 and the inner periphery of the outer ring 21, so that the steering wheel 1 is allowed to rotate. On the other hand, when the steering wheel 1 is operated to rotate in an operating state where the electromagnetic brake 17 brakes the engagement element cage 25, since the engagement element cage 25 to which the rotational force of the shaft 9 is transmitted from the centering spring 41 is braked by the electromagnetic brake 17, the engagement element cage 25 and the shaft 9 rotate relative to each other. Due to this relative rotation, when the engagement element cage 25 reaches the engagement position against the centering spring 41, the engagement elements 24 are engaged with the shaft 9 and the inner periphery of the outer ring 21, so that the shaft 9 is reliably prevented from further rotating. Therefore, the steering wheel 1 is reliably prevented from further rotating. As a result, this steering system can cause the driver to reliably sense, via the steering wheel 1, that the direction of the steered wheels 3 has reached the stroke end.

When the electromagnetic brake 17 is switched between the braking state and the release state according to the axial movement of the armature 26 attracted by the electromagnet 27, the collision between the armature 26 and the friction surface portion 92 is alleviated by the impact absorbing member 99. As a result, this steering system can reduce the collision noise.

The electromagnetic brake 17 only needs to generate, between the armature 26 and the friction surface portion 92, friction torque for delaying rotation of the engagement element cage 25 with respect to the rotating shaft 9, and the friction torque itself does not prevent rotation of the shaft 9. Therefore, this steering system can also avoid an increase in size of the electromagnetic brake 17.

Therefore, when the direction of the steered wheels 3 reaches the stroke end, this steering system can cause the driver to reliably sense the situation via the steering wheel 1 by switching between the braking state and the release state of the electromagnetic brake 17; therefore, it is possible to avoid an increase in size of the electromagnetic brake 17, and to reduce collision noise in the electromagnetic brake 17.

Furthermore, in this steering system, an electromagnet 27 includes the field core 35 axially opposed to the armature 26; and a solenoid coil 36 wound around the field core 35, and the armature 26 is constituted by a movable member that is directly attracted and stuck to the friction surface portion 92 of the field core 35 when the electromagnet 27 is excited. Therefore, it is not necessary to provide, between the electromagnet 27 and the armature 26, a rotor against which the armature 26 abuts, in such a manner that the rotor is separate from the electromagnet 27, and, as a result, the size and the number of parts of the electromagnetic brake 17 can be reduced. In addition, since no rotor is provided between the electromagnet 27 and the armature 26, a magnetic flux efficiently circulates between the electromagnet 27 and the armature 26 compared to the case where a rotor is provided. Therefore, compared to the case where a rotor is provided, in the case where no rotor is provided, the attraction force of the electromagnet 27 with respect to the armature 26 is increased, and the braking force of the engagement element cage 25 is thus increased, so that the resistance of the centering spring 41 against the relative rotation between the engagement element cage 25 and the shaft 9 at the time of braking can be made strong. Therefore, in this steering system, when the electromagnetic brake 17 is activated, the rotation operation of the steering wheel 1 is made heavier, by the reaction force from the centering spring 41, more rapidly than when the electromagnetic brake 17 is released, and it is possible to cause the driver to sense that the direction of the steered wheels 3 is in the vicinity of the stroke end.

Furthermore, in this steering system, since the impact absorbing member 99 is a resin member for fixing the solenoid coil 36, the resin member for fixing the position of the solenoid coil 36 with respect to the field core 35 is also used as the impact absorbing member 99, so that the number of parts of the brake unit 7 can be reduced.

In addition, the steering system further includes a separation spring 34 that supports the armature at a position axially away from the friction surface portion 92 when the electromagnet 27 is de-energized, and that is disposed to accumulate force according to the axial movement of the armature 26 attracted when the electromagnet 27 is energized, and the armature 26 includes an electromagnetic brake 17 rotationally fixed to the engagement element cage 25. Therefore, in the non-excited state where the electromagnet 27 is de-energized, it is possible to hold the armature 26 at a position away from the friction surface portion 92 by the support of the separation spring 34 such that the engagement element cage 25 is not braked, and a predetermined magnetic gap can be generated between the armature 26 and the electromagnet 27. When the electromagnet 27 is switched from the non-excited state to the excited state, the electromagnet 27 attracts the armature 26 to the friction surface portion 92 against the separation spring 34, and apples an actuation pressure between the friction surface portion 92 and the armature 26, whereby the engagement element cage 25 can be braked and circumferentially moved with respect to the shaft 9. Since the separation spring 34 store force according to the axial movement of the armature 26 when the armature 26 is attracted, when the electromagnet 27 is switched from the excited state to the non-excited state, the armature 26 can be separated from the friction surface portion 92 and the electromagnet 27 by the elastic restoring force of the separation spring 34, whereby the braking of the engagement element cage 25 can be released. As described above, since the electromagnetic brake 17 is of the excited operation type, the electromagnetic brake 17 is in the non-excited state for a long time, considering that the direction of the steered wheels 3 rarely reaches the stroke end. Therefore, this steering system is excellent in energy saving performance.

In addition, this steering system further includes a reaction force motor 6 that applies steering reaction force to the steering wheel 1, the steering target is the pair of right and left steered wheels 3, and the outer ring 21, the engagement elements 24, the engagement element cage 25, and the electromagnetic brake 17 are provided (i) between the steering wheel 1 and the reaction force motor 6 or (ii) on the side of the reaction force motor 6 axially opposite/remote from the steering wheel 1. Therefore, as a steer-by-wire type steering system for a vehicle, it is possible to cause the driver to reliably sense, via the steering wheel 1, that the direction of the steered wheels 3 has reached the stroke end.

In addition, this steering system includes a cylindrical brake case 29 in which the electromagnetic brake 17 and the outer ring 21 are received, the brake case 29 is formed of a non-magnetic material, and formed separately from the outer ring 21, and the outer ring 21 is rotationally fixed to the brake case 29. Therefore, when the electromagnetic brake 17 is brought into the excited state, the magnetic flux generated from the electromagnetic brake 17 does not leak to the brake case 29. Therefore, the size of the electromagnetic brake 17 can be reduced.

In the first embodiment of the third invention, an example has been described in which the engagement element cage 25 and the armature are directly rotationally fixed to each other, but the armature may be indirectly rotationally fixed to the engagement element cage 25 via the cover member.

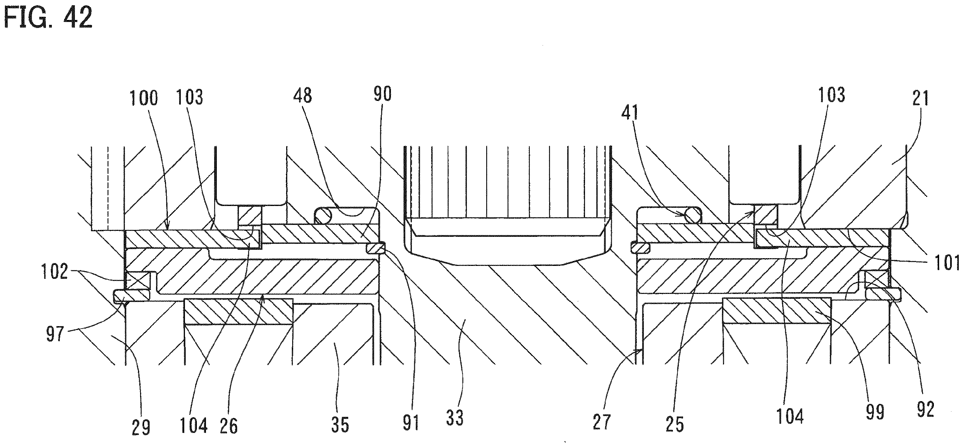

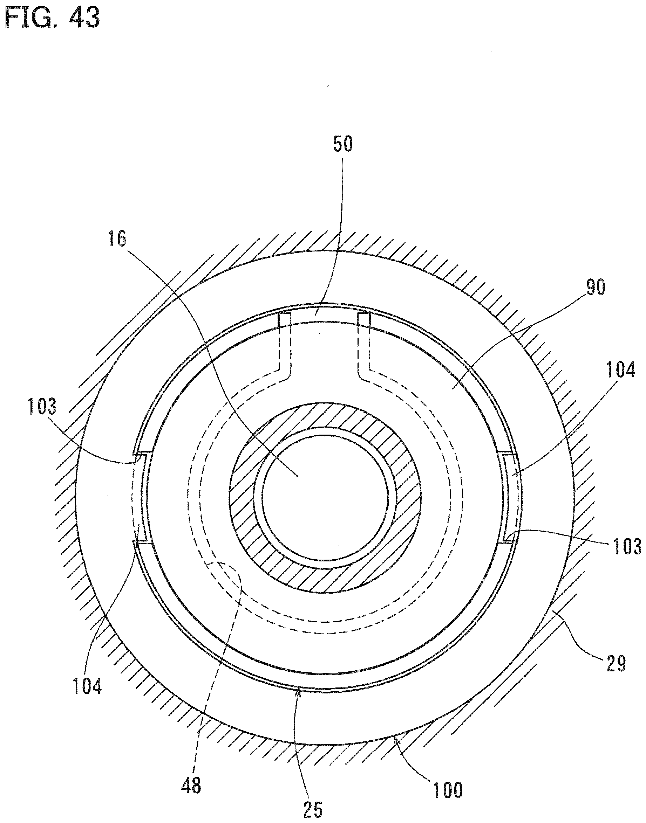

In the first embodiment of the third invention, an example of the excited operation type electromagnetic brake has been described. However, the electromagnetic brake may have another structure, and, for example, a non-excited operation type electromagnetic brake can also be adopted. As an example of such an electromagnetic brake, the second embodiment of the third invention is shown in Figs. 42 to 43. Only the features of the second embodiment that are different from those of the first embodiment are described below. With respect to the elements of the second embodiment corresponding to those of the first embodiment, the same element names are used.

The electromagnetic brake according to the second embodiment of the third invention includes a friction member 100 disposed to be axially movable between the outer periphery of the engagement element cage 25 and the inner periphery of the brake case 29; a friction surface portion 101 formed on the end surface of the outer ring 21, and an actuation spring 102 for applying an actuation pressure between the friction member 100 and the friction surface portion 101.

The friction member 100 has a disk shape, and has an outer periphery axially slidable on the inner periphery of the brake case 29, and an inner periphery axially slidable on the outer periphery of the engagement element cage 25. The engagement element cage 25 is formed with engaging recesses 103, and the friction member 100 has, on its inner periphery, engaging projections 104 that circumferentially engage with the respective engaging recesses 103 of the engagement element cage 25. With this configuration, the friction member 100 is rotationally fixed to the engagement element cage 25, and is disposed to be axially movable with respect to the engagement element cage 25. Circumferential play (gap) be between the engaging recesses and the engaging projections so as to allow relative rotation of the engagement element cage 25 and the friction member within the play.

The friction surface portion 101 is formed on the end surface of the outer ring 21 axially opposed to the friction member 100. The friction surface portion 101, which is a stationary one, axially receives the friction member 100 against the biasing force generated by the actuation spring 102, and can brake rotation of the friction member 100 when the actuation pressure according to the biasing force of the actuation spring 102 acts between the friction surface portion 101 and the friction member 100.

The armature 26 is disposed so as to be axially movable between the inner ring shaft portion 33 and the inner periphery of the brake case 29 and between the friction member 100 and the electromagnet 27.

The actuation spring 102 is an annular spring such as a wave washer. The actuation spring 102 is disposed between the end surface of the armature 26 opposite/remote from the friction member 100 , the stop ring 97, and the inner periphery of the brake case 29. When the electromagnet 27 is not excited, the actuation spring 102 supports the armature 26 at a position axially away from the electromagnet 27, and biases the friction member 100 toward the friction surface portion 101 via the armature 26. With this biasing, the friction member 100 is pressed against the friction surface portion 101 so as to apply an actuation pressure to a frictional contact portion between the friction member 71 and the friction surface portion 72, whereby rotation of the engagement element cage 25 can be braked. When the electromagnet 27 is switched from the non-excited state to the excited state, the electromagnet 27 axially attracts the armature 26 to the friction surface portion 92 of the field core 35 against the actuation spring 102. At this time, since the armature 26 moves in the axial direction away from the friction surface portion 101 while axially compressing the actuation spring 102, the pressing force of the friction member 100 against the friction surface portion 101 is weakened according to the axial movement of the armature 26, and the electromagnetic brake eventually comes into the release state where rotation of the engagement element cage 25 cannot be braked.

The actuation spring 102 can also be disposed between the end surface of the field core 35 and the armature 26. Furthermore, it is also possible to replace the actuation spring with different non-annular springs such as compression coil springs that are spaced apart from each other at a plurality of positions in the circumferential direction.

The above-described steering system according to the second embodiment of the third invention adopts an electromagnetic brake further including a friction member 100 that is rotationally fixed to the engagement element cage 25, and that is disposed to be axially movable with respect to the engagement element cage 25; a friction surface portion 101 that is axially opposed to the friction member 100, and that is stationary with respect to the shaft (inner ring 20); and an actuation spring 102 that biases the friction member 100 so as to press the friction member 100 against the friction surface portion 101 when the electromagnet 27 is not excited, and that is disposed such that the pressing force of the friction member 100 is weakened according to the axial movement of the armature 26 attracted to the electromagnet 27 when the electromagnet 27 is excited. Therefore, when the electromagnet 27 is in the non-excited state where the electromagnet 27 is de-energized, the friction member 100 is pressed against the friction surface portion 101 by biasing of the actuation spring 102, and applies an actuation pressure between the friction member 100 and the friction surface portion 101, whereby the engagement element cage 25 is braked, and is circumferentially moved with respect to the inner ring 20, and when the electromagnet 27 is switched from the non-excited state to the excited state, the attracted armature 26 axially moves, whereby the above pressing is weakened, thereby releasing the braking of the engagement element cage 25 by the friction surface portion 101 and the friction member 100. As described above, in the steering system according to the second embodiment of the third invention, since the electromagnetic brake is of the non-excited operation type, the steering wheel is locked even when no power is supplied, and it is possible to prevent theft of the vehicle or the like.

In addition, in the steering system according to the second embodiment of the third invention, the actuation spring 102 is disposed such that when the electromagnet 27 is not excited, the actuation spring 102 supports the armature 26 at a position axially away from the electromagnet 27, and biases the friction member 100 toward the friction surface portion 101 via the armature 26. Therefore, when the electromagnet 27 is not excited, the friction member 100 is pressed against the friction surface portion 101 by the biasing of the actuation spring 102 via the armature 26, and the support of the actuation spring 102 generates a predetermined magnetic gap between the armature 26 and the electromagnet 27. In addition, when the electromagnet 27 is switched from the excited state to the non-excited state, the elastic restoring force of the actuation spring 102 allows the armature 26 to return to the position of the predetermined magnetic gap.

In the second embodiment of the third invention, the friction surface portion 101 is a part of the outer ring 21, but the friction surface portion 101 may be another member mounted to the brake case 29.

In each of the embodiments described above, the brake case 29 and the outer ring 21 are separate members rotationally fixed to each other, but the brake case 29 and the outer ring 21 may be integrally formed.

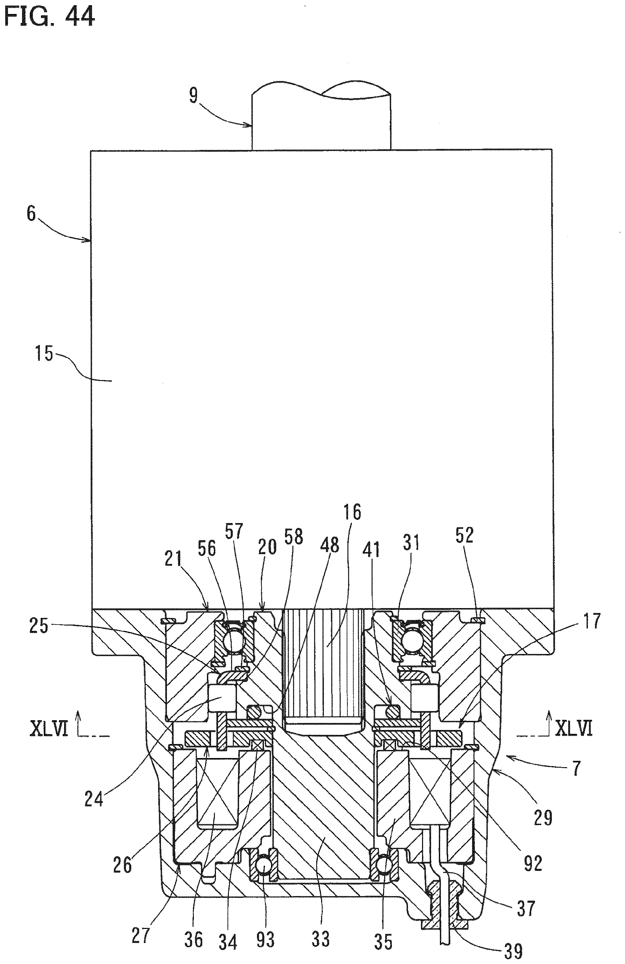

Figs. 44 and 33 show a steer-by-wire type steering system according to the first embodiment of the fourth embodiment as an example thereof. Hereinafter, the elements of this embodiment corresponding to those of the embodiments of the second and third inventions are denoted by the same numerals, and the description thereof is omitted.

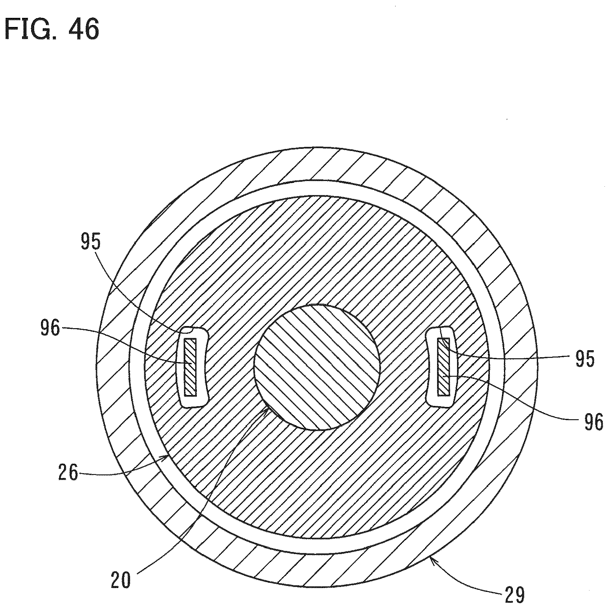

The armature 26 has engaging holes 95 axially penetrating through the armature 26. The engagement element cage 25 has engaging projections 96 axially inserted in the respective engaging holes 95. The circumferential hole width of each engaging hole 95 is larger than the circumferential width of the engaging projection 96. Therefore, as shown in Fig. 46, each engaging projection 96 is inserted in the engaging hole 95 with play in the circumferential direction, and can engage in the engaging hole 95 in the circumferential direction when the engaging projection 96 circumferentially moves beyond the play with respect to the engaging hole 95. As a result, the armature 26 is rotationally fixed to the engagement element cage 25 with play so as to circumferentially move in unison with the engagement element cage 25, and is disposed to be axially movable with respect to the engagement element cage 25.

In a release state in which the electromagnet 27 of the electromagnetic brake 17 is de-energized, the brake unit 7 shown in Fig. 44 is in an idling state in which the inner ring 20 can freely rotate in both normal and reverse rotational directions with respect to the outer ring 21. Specifically, in the state where the armature 26 is supported by the separation spring 34 and is thereby separated from the friction surface portion 92 of the field core 35, and the engagement element cage 25 cannot be braked by the armature 26 and the friction surface portion 92, even when the inner ring 20 rotates in any of the normal and reverse directions, the engagement element cage 25 is co-rotated by the centering spring 41 rotating in unison with the inner ring 20, and is thereby held at the disengagement position (normally, the neutral disengagement position shown in Fig. 34) by the elastic restoring force of the centering spring 41. Therefore, the engagement elements 24 retained by the engagement element cage 25 are not engaged with the cam surfaces 22 on the outer periphery of the inner ring 20 and the cylindrical surface 23 on the inner periphery of the outer ring 21, and the inner ring 20 and the motor shaft 16 can freely rotate in both normal and reverse directions.

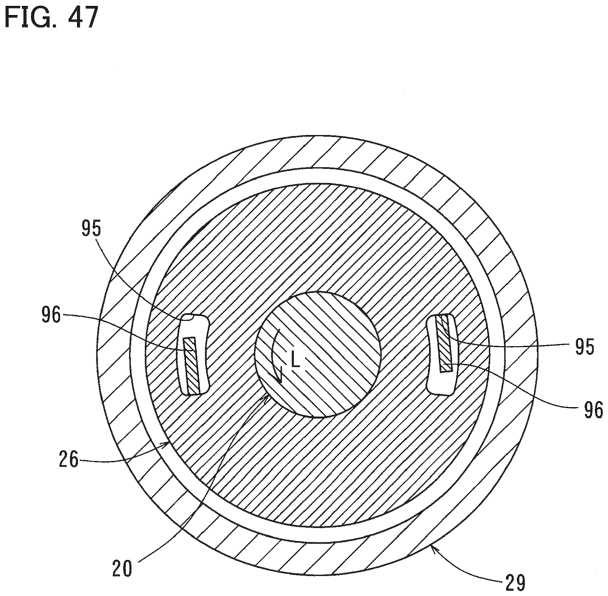

On the other hand, in an operating state where the electromagnet 27 of the electromagnetic brake 17 is energized, the brake unit 7 is in a locked state where the inner ring 20 is prevented from rotating with respect to the outer ring 21 in both normal and reverse directions. That is, when the electromagnet 27 is energized to switch the state to the excited state, the armature 26 is attracted to the friction surface portion 92 of the field core 35 against the separation spring 34, and comes into a state where the armature 26 is in frictional contact with the friction surface portion 92. At this time, when the inner ring 20 rotates in either the normal or reverse direction (one circumferential direction), the rotational force of the inner ring 20 is transmitted to the engagement element cage 25 from the centering spring 41 rotating in unison with the inner ring 20. Then, the engaging projections 96 of the engagement element cage 25 rotate in one circumferential direction (the direction of arrow L in the shown example) by the amount of play with respect to the engaging holes 95 of the armature 26 braked by the friction surface portion 92, which is a stationary one, as shown in Fig. 47. During rotation within this play, the relative rotation between the engagement element cage 25 and the inner ring 20 shown in Fig. 34 does not substantially occur, and the engagement element cage 25 is in the neutral disengagement position. Eventually, the engaging projections 96 engage with the engaging holes 95 in the circumferential direction as shown in Fig. 47. In this engaged state, a braking force due to frictional contact between the armature 26 rotationally fixed to the engagement element cage 25 and the friction surface portion 92, which is a stationary one, acts on the engagement element cage 25 via the armature 26, so that the engagement element cage 25 is braked by the friction surface portion 92 via the armature 26. That is, the electromagnetic brake 17 is in an operating state where the electromagnetic brake 17 brakes the engagement element cage 25, and the inner ring 20 rotates relative to the engagement element cage 25 as shown in Fig. 36. At this time, the engagement element cage 25 moving in the other circumferential direction (the direction of arrow R in the shown example) with respect to the inner ring 20 circumferentially pushes and elastically deflects one of the pair of extending portions 47 of the centering spring 41 on the groove inner surface of the cage groove 50; therefore, the engagement element cage 25 circumferentially moves against the centering spring 41 (in Fig. 36, the engagement elements 24 are not engaged with the cam surfaces 22 and the cylindrical surface 23). When this circumferential movement reaches a predetermined angle amount, the engagement element cage 25 reaches the engagement position shown in Fig. 37, and the engagement elements 24 retained by the engagement element cage 25 engage with the cam surfaces 22 on the outer periphery of the inner ring 20 and the cylindrical surface 23 on the inner periphery of the outer ring 21, so that rotation of the inner ring 20 is reliably prevented.

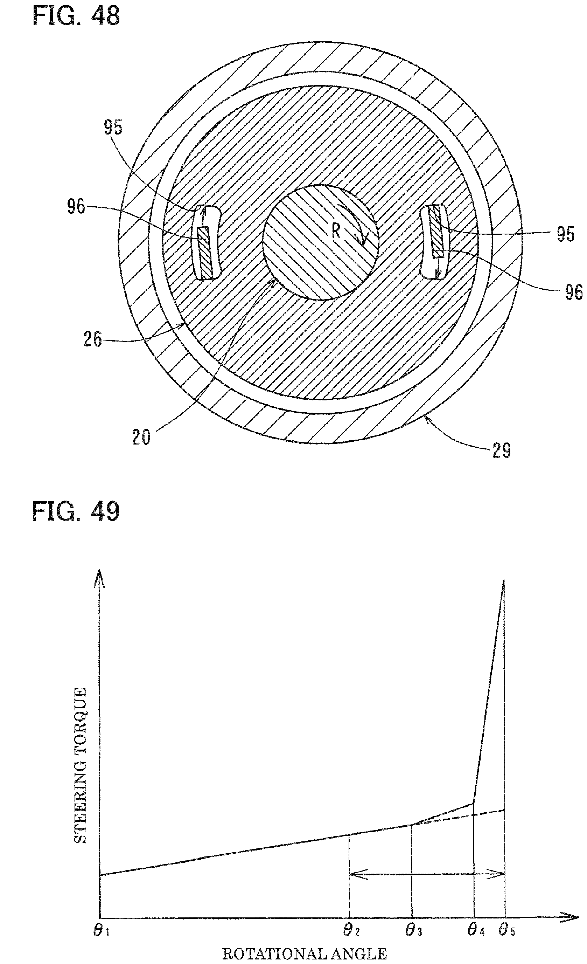

Here, in a case where the inner ring 20 is reversed in the other circumferential direction (direction of arrow R) as shown in Fig. 48 from the state shown in Fig. 37 while the electromagnetic brake 17 remains in the operating state, when this reversing is started, there is play (circumferential gap) in the reverse direction (direction of arrow R) between the engaging holes 95 of the armature 26 and the engaging projections 96 of the engagement element cage 25. For this reason, when the inner ring 20 shown in Fig. 37 co-rotates the engagement element cage 25 in the reverse direction via the centering spring 41, the engaging projections 96 of engagement element cage 25 shown in Fig. 48 are not subjected to the braking action via the armature 26 during the rotation within the play until the engaging projections 96 engage in the engaging holes 95 in the reverse direction. Therefore, during the rotation within play, the engagement element cage 25 shown in Fig. 37 can be smoothly co-rotated from the engagement position in the reverse direction by the inner ring 20 via the centering spring 41, so that the engagement elements 24 can be easily disengaged from the cam surfaces 22 and the inner periphery of the outer ring 21, thereby moving the engagement element cage 25 to the disengagement position.

In the embodiment of the fourth invention, the control unit 8 shown in Fig. 33 determines which position of stroke the direction of the steered wheels 3 is located at, on the basis of the position of the steering shaft 10 detected by the steering sensor 13. Here, when the control unit determines that the direction of the steered wheels 3 is not at the stroke end, the brake unit 7 is kept in the above-described idling state. On the other hand, when the control unit determines that the direction of the steered wheels 3 is at the stroke end, the brake unit 7 is kept in the above-described locked state.

In addition, the control unit 8 performs (i) a motor control operation to increase the rotational torque of the reaction force motor 6 such that the steering reaction force increases as the direction of the steered wheels 3 approaches the stroke end, (ii) in addition to the motor control operation, a braking control operation to activate the electromagnetic brake 17 shown in Fig. 44, and (iii) a release control operation to release the electromagnetic brake 17 shown in Fig. 44 when the rotation operation of the steering wheel 1 in the other circumferential direction is performed from the state where the direction of the steered wheels 3 has reached the stroke end by the rotation operation of the steering wheel 1 shown in Fig. 33 in one circumferential direction.

Here, the amount of circumferential movement of the engagement element cage 25 between the neutral disengagement position shown in Fig. 34 and the engagement position shown in Fig. 37 of the engagement element cage 25 can be appropriately set on the basis of the engagement elements 24 and the dimensional settings of (i) the wedge spaces defined by the cam surfaces 22 and the cylindrical surface 23 and (ii) the engagement elements 24. The amount of movement of the engagement element cage 25 in the circumferential direction between the disengagement position and the engagement position can be set to 5° and 15° or less when considered in terms of the rotational angle between the disengagement position and the engagement position of the engagement element cage 25. Therefore, it is possible to define the amount of rotation allowed for the steering wheel 1 after the control unit 8 shown in Fig. 33 performs the braking control operation.

When the control unit 8 performs the braking control operation, the resistance (the reaction force from the centering spring 41) when the centering spring 41 is elastically deformed is applied to the shaft 9 while the engagement element cage 25 moves from the disengagement position to the engagement position as shown in Fig. 36, and the resistance increases as the engagement element cage 25 approaches the engagement position. For the driver, the rotational operation of the steering wheel 1 shown in Fig. 33 becomes heavier according to the above increase in resistance. That is, the torque (the reaction force from the centering spring 41) to deflect the extending portions 47 of the centering spring 41 shown in Fig. 36 increases, and this torque is received by the driver holding the steering wheel 1 in Fig. 33. Therefore, the driver feels that the steering torque required for the rotation operation of the steering wheel 1 has become larger than during normal rotation operation of the steering wheel 1 (while the electromagnetic brake is released), that is, the driver feels that the rotation operation has become heavier. As a result, it is possible to cause the driver to sense that the direction of the steered wheels 3 is in the vicinity of the stroke end.

Fig. 49 schematically shows the relationship between the rotational angle of the steering wheel 1 and the shaft 9 and the increase in the steering torque by execution of the motor control operation and the braking control operation of the control unit 8. The "rotational angle" on the horizontal axis in the drawing corresponds to the rotational angle of the steering wheel 1 and shaft 9 (the inner ring 20, the motor shaft 16) (See Figs. 44 and 33).

The rotational angle θ₁ in Fig. 49 is the rotational angle when the control unit 8 determines that the direction of the steered wheels 3 has reached a predetermined first stroke position close to the stroke end, and the control unit 8 starts the motor control operation (see Fig. 33). The rotational angle θ₂ in Fig. 49 is the rotational angle when the control unit 8 determines that, after the driver further turns the steering wheel 1, the direction of the steered wheels 3 has reached a predetermined second stroke position closer to the stroke end, and the control unit 8 starts the braking control operation (see Fig. 33). The rotational angle θ₃ in Fig. 49 is the rotational angle when the rotation within the play between the engagement element cage 25 and the armature 26 ends after the driver further turns the steering wheel 1, and the braking of the engagement element cage 25 is started (see Figs. 47 and 36).

Between the rotational angles θ₁ to θ₃ in Fig. 49, the control unit 8 performs the motor control operation, and the rotational torque (steering reaction force) generated by the reaction force motor 6 gradually increases, whereby the steering torque gradually increases (see Fig. 33). The control unit 8 starts the braking control operation at the rotational angle θ₂ in Fig. 49; however, the engagement element cage 25 is not immediately braked, and the rotation within play in one circumferential direction is performed (see Fig. 47). Therefore, the steering torque by the braking control operation does not increase between the rotational angles θ₂ and θ₃ in Fig. 49.

The rotational angle θ₄ is the rotational angle when the engagement element cage 25 reaches the engagement position after the driver further turns the steering wheel 1 (see Fig. 37). Between the rotational angles θ₃ and θ₄ in Fig. 49, (i) the steering reaction force by the motor control operation continues to increase, and, in addition, (ii) the rotation within play of the engagement element cage 25 with respect to the armature 26 ends after the control unit 8 performs the braking control operation, and then the reaction force of the centering spring 41 increases in accordance with movement of the engagement element cage 25 with respect to the inner ring 20 in one circumferential direction (see Fig. 36); therefore, the increase rate of the steering torque further increases. In the angular range greater than or equal to the rotational angle θ₃ in Fig. 49, the increase in the steering reaction force due to the motor control operation is indicated by a chain line.

The rotational angle θ₅ corresponds to the rotational angle when, after the driver further turns the steering wheel 1, the rotation operation is blocked by the engagement of the engagement elements 24 with the cam surfaces 22 and the cylindrical surface 23 (see Figs. 33 and 37). The direction of the steered wheels 3 cannot be changed even when the steering wheel 1 is further turned; therefore, the stroke end of the steered wheels 3 corresponds to when the rotational angle is θ₅ in Fig. 49. Between the rotational angles θ₄ and θ₅, (i) the steering reaction force by the motor control operation and the reaction force of the centering spring 41 by the braking control operation increase, and, in addition, (ii) the engagement elements 24 are engaged with the cam surfaces 22 of the inner ring 20 and the inner periphery of the outer ring 21, toward one circumferential direction, thereby preventing rotation of the inner ring 20 (see Fig. 37); therefore, the steering torque rapidly increases, and the steering wheel 1 cannot be turned even forcibly (see Fig. 33).

As described above, the control unit 8 starts the motor control operation at the rotational angle θ₁ and, in addition, starts the braking control operation at the rotational angle θ₂, so that the engagement element cage 25 can reach the engagement position from the neutral disengagement position at the rotational angle θ₂, and can be moved, in one circumferential direction, to the rotational angle θ₅, at which the inner ring 20 cannot rotate (see Fig. 44). In the meantime, a further increase in the increase rate of the steering torque can be started at the rotational angle θ₃, and the steering torque can be rapidly increased after the rotational angle θ₄, at which the engagement element cage 25 reaches the engagement position, and the steering lock can be finally performed at the rotational angle θ₅, which is the stroke end.

There is a possibility that the driver is surprised at the fact that the rotation of the steering wheel 1 in one circumferential direction is prevented at the rotational angle θ₅ (see Fig. 33), and that the driver hastily performs a sudden reverse steering operation to turn the steering wheel 1 in the other circumferential direction. In this case, when control unit 8 senses that the shaft 9 is reversely turned, the control unit 8 performs the release control operation. However, it takes some time for the control unit 8 to determine that the reverse turn was performed, and to switch the electromagnetic brake 17 to the release state (switching of the electromagnet 27 between the excited state and the non-excited state) (see Figs. 44 and 48). The engagement element cage 25 can easily rotate relative to the braked armature 26 in a range from the rotational angle θ₅ to the rotational angle θ₂ at the neutral disengagement position. In particular, the circumferential play between the armature 26 and the engagement element cage 25 from the rotational angle θ₅ additionally provides a range in which the engagement element cage 25 can relatively rotate smoothly; therefore, it is possible to ensure time for the control unit 8 to sense the reverse turn of the shaft 9, and to switch the electromagnetic brake 17 to the release state.

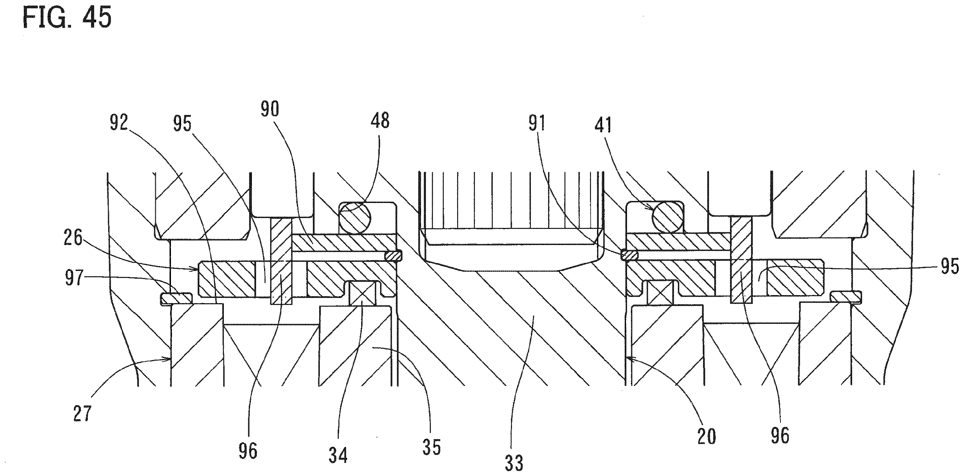

The above-described steering system (hereinafter, see Figs. 33, 34, 36, 37, and 44 to 49 as appropriate) is a steer-by-wire type steering system that includes a steering wheel 1; a steering sensor 5 that detects an operation amount of the steering wheel 1; a steering actuator 2 that changes the direction of steered wheels 3 as a steering target according to the operation amount of the steering wheel 1 detected by the steering sensor 5; a reaction force motor 6 that applies a steering reaction force to the steering wheel 1; a shaft 9 coupled to the steering wheel 1 so as to rotate in unison with the steering wheel 1; an outer ring 21 having an inner periphery disposed around the shaft 9; engagement elements 24 disposed between the shaft 9 and the inner periphery of the outer ring 21; an engagement element cage 25 that retains the engagement elements 24, and that is disposed to be circumferentially movable with respect to the shaft 9 between an engagement position where the engagement elements 24 are engaged with the shaft 9 and the inner periphery of the outer ring 21 and a disengagement position where the engagement elements 24 are disengaged from the shaft 9 and the inner periphery of the outer ring 21; a centering spring 41 that elastically holds the engagement element cage 25 at the disengagement position, and that is rotationally fixed to the shaft 9 and the engagement element cage 25 so as to be rotatable in unison with the shaft 9; an electromagnetic brake 17 that brakes the engagement element cage 25; and a control unit 8 that performs a motor control operation to increase the rotational torque of the reaction force motor 6 such that as the direction of the steered wheels 3 approaches the stroke end, the steering reaction force increases, and that performs, in addition to this, a braking control operation to activate the electromagnetic brake 17. With this configuration, when the shaft 9 (inner ring 20) rotates while the electromagnetic brake 17 is in a release state where the electromagnetic brake 17 does not brake the engagement element cage 25, the centering spring 41, which is rotationally fixed to the shaft 9 so as to rotate in unison with the shaft 9, transmits the rotational force of the shaft 9 to the engagement element cage 25, and holds the engagement element cage 25 at the disengagement position with respect to the shaft 9. Therefore, the engagement elements 24 cannot be engaged with the shaft 9 and the inner periphery of the outer ring 21, so that the steering wheel 1 is allowed to rotate. On the other hand, when the steering wheel 1 is rotationally operated in an operating state where the electromagnetic brake 17 brakes the engagement element cage 25, since the engagement element cage 25 to which the rotational force of the shaft 9 is transmitted from the centering spring 41 is braked by the electromagnetic brake 17, the engagement element cage 25 and the shaft 9 rotate relative to each other. Due to this relative rotation, when the engagement element cage 25 reaches the engagement position against the centering spring 41, the engagement elements 24 are engaged with the shaft 9 and the inner periphery of the outer ring 21, so that the shaft 9 is reliably prevented from further rotating. The control unit 8 first performs the motor control operation, and the steering reaction force gradually increases as the direction of the steered wheels 3 approaches the stroke end, so that it is possible to cause the driver to sense, via the steering wheel 1, that the direction of the steered wheels 3 is close to the stroke end. If the driver does not notice that the direction of the steered wheels 3 is close to the stroke end, and continues to further turn the steering wheel 1, the control unit 8 further performs the braking control operation, and the resistance (the reaction force from the centering spring 41) when the engagement element cage 25 braked by the electromagnetic brake 17 elastically deforms the centering spring 41 while moving from the disengagement position to the engagement position is applied to the steering wheel 1 via the shaft 9, and the resistance increases as the engagement element cage 25 approaches the engagement position. As a result, as the direction of the steered wheels 3 approaches the stroke end, a reaction force in which the steering reaction force by the reaction force motor 6 and the resistance of the centering spring 41 are added up is applied to the steering wheel 1, so that it is possible to cause the driver to more reliably sense that the direction of the steered wheels 3 is close to the stroke end. However, if the driver does not stop turning the steering wheel 1, and the engagement element cage 25 reaches the engagement position, the engagement elements 24 are engaged with the shaft 9 and the inner periphery of the outer ring 21, thereby reliably preventing the steering wheel 1 from rotating. Therefore, it is possible to cause the driver to sense, via the steering wheel 1, that the direction of the steered wheels 3 has reached the stroke end.

Furthermore, this steering system includes an electromagnetic brake 17 including an armature 26 that is rotationally fixed to the engagement element cage 25, and that is disposed to be axially movable; a friction surface portion 92 fixed to a position axially opposed to the armature 26; an electromagnet 27 axially opposed to the armature 26; and a separation spring 34 that supports the armature 26 at a position axially away from the electromagnet 27 and the friction surface portion 92 when the electromagnet 27 is not exited, and that is disposed to store force according to axial movement of the armature 26 attracted to the friction surface portion 92 by the electromagnet 27 when the electromagnet 27 is excited. Therefore, in a non-excited state where the electromagnet 27 is de-energized, it is possible to hold the armature 26 at a position away from the friction surface portion 92 by the support of the separation spring 34 such that the engagement element cage 25 is not braked, and, in addition, a predetermined magnetic gap can be generated between the armature 26 and the electromagnet 27. When the electromagnet 27 is switched from the non-excited state to the excited state, the electromagnet 27 attracts the armature 26 to the friction surface portion 92 against the separation spring 34, and apples an actuation pressure between the friction surface portion 92 and the armature 26, whereby the engagement element cage 25 can be braked and circumferentially moved with respect to the shaft 9. Since the separation spring 34 stores force according to axial movement of the armature 26 when the armature 26 is attracted, when the electromagnet 27 is switched from the excited state to the non-excited state, the armature 26 can be separated from the friction surface portion 92 and the electromagnet 27 by the elastic restoring force of the separation spring 34, whereby the braking of the engagement element cage 25 can be released. As described above, since the electromagnetic brake 17 is of the excited operation type, the electromagnetic brake 17 is in the non-excited state for a long time, considering that the direction of the steered wheels 3 rarely reaches the stroke end. Therefore, this steering system is excellent in energy saving performance.

In this steering system, since the armature 26 is rotationally fixed, with play in the circumferential direction, to the engagement element cage 25, smooth relative rotation between the braked armature 26 and the engagement element cage 25 that is co-rotated by the inner ring 20 via the centering spring 41 is performed within the play at the time of the above sudden reverse steering operation, so that it is possible to buy time until the electromagnetic brake 17 is released, whereby the failure in unlocking is prevented.

In this steering system, when, from the state in which the direction of the steered wheels 3 has reached the stroke end by turning the steering wheel 1 in one circumferential direction, the steering wheel 1 is turned in the other circumferential direction, the control unit 8 performs a release control operation to release the electromagnetic brake 17; and the shaft 9 and the engagement element cage 25 are provided to be allowed to rotate in the other circumferential direction from when the direction of the steered wheels 3 reaches the stroke end until the electromagnetic brake 17 is released. Therefore, at the time of the above sudden reverse steering operation, the shaft 9 and the engagement element cage 25 are allowed to reversely rotate until the electromagnetic brake 17 is released, whereby the failure in unlocking is reliably prevented

Furthermore, in this steering system, the electromagnet 27 includes a field core 35 axially opposed to the armature 26; and a solenoid coil 36 wound around the field core 35, and the armature 26 is constituted by a movable member that is directly attracted and stuck to the friction surface portion 92 of the field core 35 when the electromagnet 27 is excited. Therefore, it is possible to omit, between the electromagnet 27 and the armature 26, a rotor against which the armature 26 abuts, and, as a result, the size and the number of parts of the electromagnetic brake 17 can be reduced. In addition, since no rotor is provided between the electromagnet 27 and the armature 26, a magnetic flux efficiently circulates between the electromagnet 27 and the armature 26 compared to the case where a rotor is provided. Therefore, compared to the case where a rotor is provided, in the case where no rotor is provided, the attraction force of the electromagnet 27 with respect to the armature 26 is increased, and the braking force of the engagement element cage 25 is increased, so that the resistance of the centering spring 41 against the relative rotation between the engagement element cage 25 and the shaft 9 at the time of braking can be made strong. Therefore, in this steering system, when the electromagnetic brake 17 is activated, the rotation operation of the steering wheel 1 is made heavier by the reaction force from the centering spring 41 more rapidly than when the electromagnetic brake 17 is released, and it is possible to cause the driver to sense that the direction of the steered wheels 3 is in the vicinity of the stroke end.

In the first embodiment of the fourth invention, an example has been described in which the engagement element cage 25 and the armature are rotationally fixed to each other with circumferential play, and such play may be provided such that circumferential play is appropriately provided between adjacent path elements in the shaft torque transmission path for transmitting the rotational torque of the shaft to the stationary system. In this embodiment, the stationary system that receives the rotational torque of the shaft 9 includes: a motor case 15 supported on the vehicle body side; a brake case 29 fixed to the motor case 15; and a fixed portion including the outer ring 21 fixed to the brake case 29. The shaft torque transmission path established between the stationary system and the shaft 9 includes (i) a system passing through each of the following path elements: the motor shaft 16; the inner ring 20; the centering spring 41; the engagement elements 24; the engagement element cage 25; the outer ring 21; and the brake case 29 and (ii) a system passing through each of the following path elements: the motor shaft 16, the inner ring 20, the centering spring 41, the engagement element cage 25, the armature 26, the friction surface portion 92 (field core 35), and the brake case 29. Any adjacent path elements may be coupled to each other with circumferential play so that the path element, of the coupled elements, on the shaft 9 side (upstream side of torque transmission) can relatively rotate in the circumferential direction with respect to the path element, of the coupled elements, on the stationary system side (downstream side of torque transmission) and so that the relative rotation can be prevented from relatively rotating beyond a predetermined rotational angle.

In the first embodiment of the fourth invention, an example has been described in which the engagement element cage 25 and the armature are directly rotationally fixed, but the armature may be indirectly rotationally fixed to the engagement element cage 25 via the cover member. In this case, the rotationally fixed set of the cover member and the armature correspond to the above-described "adjacent path elements", and the rotationally fixed set of the cover member and the engagement element cage 25 correspond to the above-described "adjacent path elements". Therefore, at least one of the rotationally fixed sets may be coupled with circumferential play as described above.

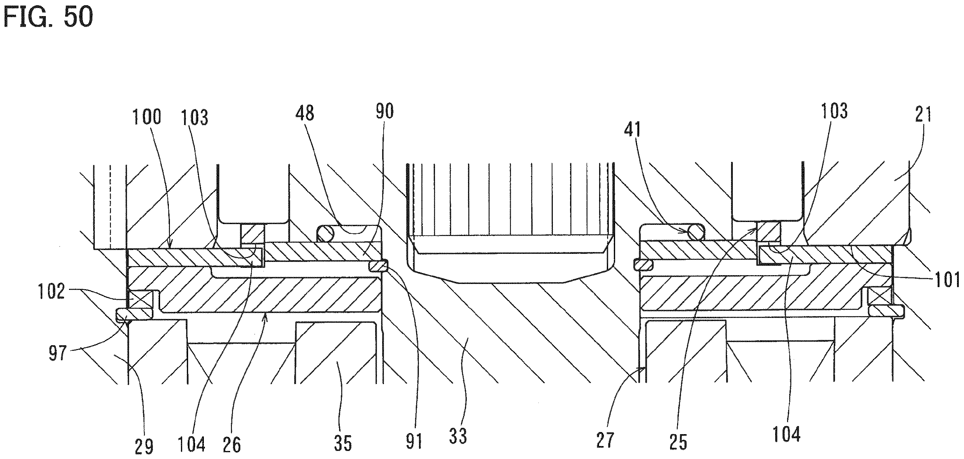

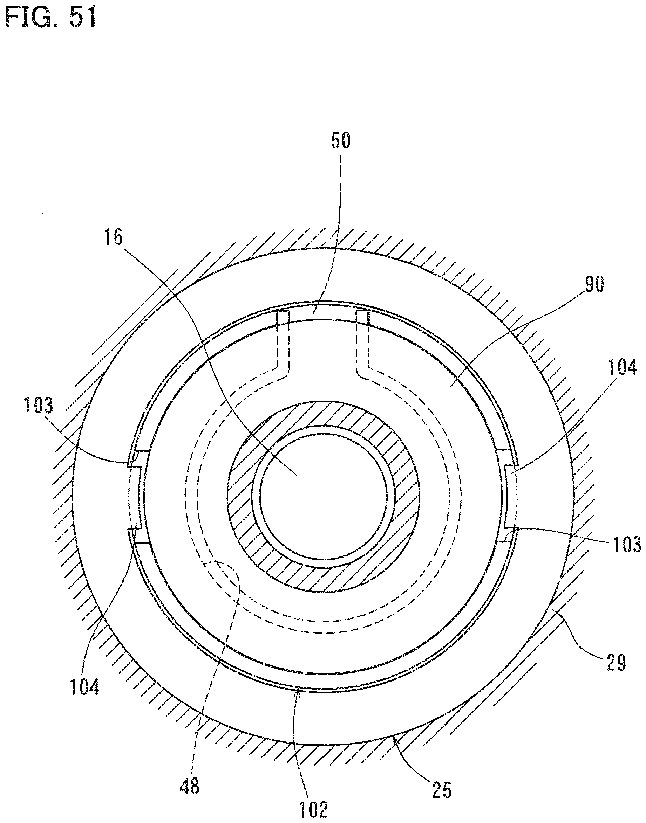

In the first embodiment of the fourth invention, an example of the excited operation type electromagnetic brake has been described. However, the electromagnetic brake may have another structure, and, for example, a non-excited operation type electromagnetic brake can also be adopted. As an example of such electromagnetic brake, the second embodiment of the fourth invention is shown in Figs. 50 to 51. Only the features of the second embodiment that are different from those of the first embodiment are described below. With respect to the elements of the second embodiment corresponding to those of the first embodiment, the same element names are used.

An electromagnetic brake according to the second embodiment of the fourth invention includes: a friction member 100 disposed to be axially movable between the outer periphery of the engagement element cage 25 and the inner periphery of the brake case 29; a friction surface portion 101 formed on the end surface of the outer ring 21, and an actuation spring 102 for applying an actuation pressure between the friction member 100 and the friction surface portion 101.

The friction member 100 is provided to have a disk shape, the outer periphery of the friction member 100 can axially slide on the inner periphery of the brake case 29, and the inner periphery of the friction member 100 can axially slide on the outer periphery of the engagement element cage 25. In the engagement element cage 25 there are formed engaging recesses 103, and on the inner periphery of the friction member 100 there are formed engaging projections 104 that circumferentially engage with the engaging recesses 103 of the engagement element cage 25. Between each of the engaging recesses 103 and the corresponding engaging projection 104 there is provided circumferential play. With this configuration, the friction member 100 is disposed such that the friction member 100 is rotationally fixed to the engagement element cage 25 with circumferential play and is axially movable with respect to the engagement element cage 25.

The friction surface portion 101 is formed on the end surface of the outer ring 21 on the side axially opposed to the friction member 100. The friction surface portion 101, which is a stationary system, axially receives the friction member 100 against the biasing force generated by the actuation spring 102, and can brake the rotation of the friction member 100 when the actuation pressure according to the biasing force of the actuation spring 102 acts between the friction surface portion 101 and the friction member 100.

The armature 26 is disposed so as to be axially movable between the inner ring shaft portion 33 and the inner periphery of the brake case 29 and between the friction member 100 and the electromagnet 27.

The actuation spring 102 is an annular spring such as a wave washer. The actuation spring 102 is disposed between the end surface of the armature 26 opposite to the friction member 100 side, the stop ring 97, and the inner periphery of the brake case 29. When the electromagnet 27 is not excited, the actuation spring 102 supports the armature 26 at a position axially away from the electromagnet 27 and biases the friction member 100 toward the friction surface portion 101 via the armature 26. With this biasing, the friction member 100 is pressed against the friction surface portion 101 to apply the actuation pressure to a frictional contact portion between the friction member 71 and the friction surface portion 72, whereby the rotation of the engagement element cage 25 can be braked. When the electromagnet 27 is switched from the non-excited state to the excited state, the electromagnet 27 axially attracts the armature 26 to the field core 35 against the actuation spring 102. At this time, since the armature 26 axially moves in the direction away from the friction surface portion 101 while axially compressing the actuation spring 102, the pressing force of the friction member 100 against the friction surface portion 101 is reduced according to the axial movement of the armature 26, and the electromagnetic brake eventually comes into the release state where the rotation of the engagement element cage 25 cannot be braked.

The actuation spring 102 can also be disposed between the end surface of the field core 35 and the armature 26. Furthermore, it is also possible to change the actuation spring to another non-annular springs such as compression coil springs and to dispersedly dispose the compression coil springs at a plurality of positions in the circumferential direction.

The steering system according to the second embodiment of the fourth invention is configured as described above, and the steering system adopts the electromagnetic brake including: the friction member 100 that is rotationally fixed to the engagement element cage 25 and is disposed to be axially movable with respect to the engagement element cage 25; the friction surface portion 101 that is axially opposed to the friction member 100 and is stationary with respect to the axis (inner ring 20); the electromagnet 27; the armature 26 axially opposed to the electromagnet 27; and the actuation spring 102 that biases the friction member 100 so as to press the friction member 100 against the friction surface portion 101 when the electromagnet 27 is not excited and that is disposed such that the pressing force of the friction member 100 is reduced according to the axial movement of the armature 26 attracted by the electromagnet 27 when the electromagnet 27 is excited, whereby the electromagnetic brake can operate as follows. When the electromagnet 27 is in the non-excited state where the electromagnet 27 is de-energized, the friction member 100 is pressed against the friction surface portion 101 by biasing of the actuation spring 102 and applies an actuation pressure between the friction member 100 and the friction surface portion 101, whereby the engagement element cage 25 is braked and is circumferentially moved with respect to the inner ring 20, and, at the same time, when the electromagnet 27 is switched from the non-excited state to the excited state, the attracted armature 26 axially moves, whereby the above-described pressing is weakened, thereby releasing the braking of the engagement element cage 25 by the friction surface portion 101 and the friction member 100. As described above, in the steering system according to the second embodiment of the fourth invention, since the electromagnetic brake is of the non-excited operation type, the steering is locked even when no power is supplied, and it is possible to prevent theft of the vehicle or the like.

At the beginning of the sudden reverse steering operation as described above, the armature 26 is not attracted by the electromagnet 27, and the friction member 100 is pressed against the friction surface portion 101 by the actuation spring 102. When the inner ring 20 rotates in either the forward or reverse direction (one circumferential direction), the rotational force of the inner ring 20 is transmitted from the centering spring 41 that rotates in unison with the inner ring 20 to the engagement element cage 25. Then, the engaging recesses 103 of the engagement element cage 25 rotate in one circumferential direction by the amount of the play with respect to the engaging projections 104 of the friction member 100 braked by the friction surface portion 101 belonging to the stationary system. During the rotation within the play, the relative rotation between the engagement element cage 25 and the inner ring 20 does not substantially occur, the engagement element cage 25 is at the neutral disengagement position, and when the engagement element cage 25 rotates relative to the friction member 100 by the play or more, the engaging recesses 103 is engaged with the engaging projections 104 in the circumferential direction. As described above, when the inner ring 20 co-rotates the engagement element cage 25 in the reverse direction via the centering spring 41, the engaging recesses 103 of the engagement element cage 25 are not subjected to the braking action from the friction member 100 during the rotation within the play until the engaging projections 104 are engaged in the reverse direction. During this rotation within play, the engagement element cage 25 can be smoothly co-rotated in the reverse direction by the inner ring 20 via the centering spring 41 and be easily moved from the engagement position to the disengagement position. As described above, in the steering system according to the second embodiment of the fourth invention, since the friction member 100 is rotationally fixed with play in the circumferential direction with respect to the engagement element cage 25, smooth relative rotation between the friction member 100 and the engagement element cage 25 that is co-rotated by the inner ring 20 via the centering spring 41 is performed within the play at the time of the sudden reverse steering operation, so that it is possible to prevent the above-described failure in unlocking.

In addition, in the steering system according to the second embodiment of the fourth invention, the actuation spring 102 is disposed such that the actuation spring 102 supports the armature 26 at a position axially away from the electromagnet 27 when the electromagnet 27 is not excited and such that the actuation spring 102 biases the friction member 100 toward the friction surface portion 101 via the armature 26. Therefore, the steering system can operate as follows. When the electromagnet 27 is not excited, the friction member 100 is pressed against the friction surface portion 101 by the biasing of the actuation spring 102 via the armature 26, and the support of the actuation spring 102 can provide a predetermined magnetic gap between the armature 26 and the electromagnet 27. In addition, when the electromagnet 27 is switched from the excited state to the non-excited state, the elastic restoring force of the actuation spring 102 allows the armature 26 to return to the position at the predetermined magnetic gap.

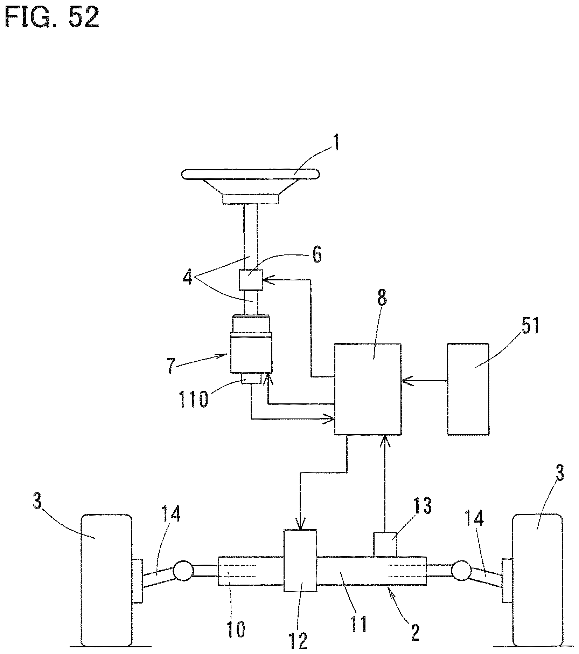

Fig. 52 shows a steer-by-wire type steering system according to the embodiment of the fifth invention. Hereinafter, the elements thereof corresponding to those of the embodiments of the first to fourth inventions invention are denoted by the same numerals, and the description thereof is omitted.

This steering system includes: a steering wheel 1 steered by the driver; a shaft 4 (hereinafter, referred to as steering shaft 4) coupled to the steering wheel 1; a steering sensor 110 that detects an operation amount of the steering wheel 1; a reaction force motor 6 that applies a steering reaction force to the steering wheel 1; a brake unit (electromagnetic clutch unit) 7 configured such that when one of an energized state and a de-energized state is switched to the other state, one of a steering locked state in which rotation of the steering wheel 1 is prevented and a steering unlocked state in which rotation of the steering wheel 1 is allowed is switched to the other state by the brake unit 7; a steering sensor 110 that detects the operation amount of the steering wheel 1; a steering actuator 2 disposed to be mechanically separated from the steering wheel 1; and a control unit 8.

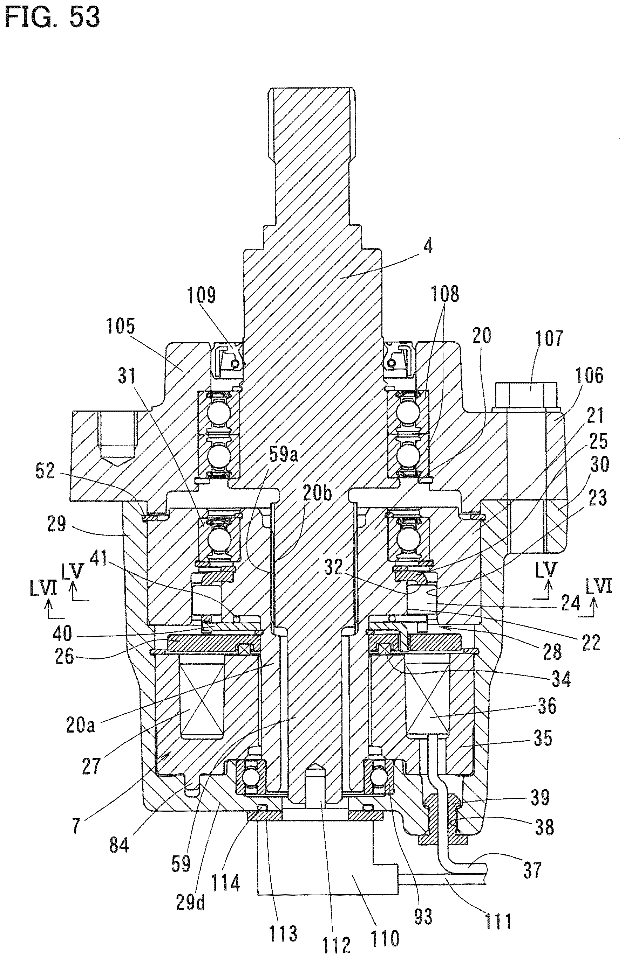

The steering shaft 4 is coupled to the steering wheel 1 so as to rotate in unison with the steering wheel 1 when the steering wheel 1 is steered. The steering sensor 110 is mounted to the steering shaft 4. The steering sensor 110 may be, for example, a steering angle sensor that detects the steering angle of the steering wheel 1, or a steering torque sensor that detects the steering torque applied to the steering wheel 1 by the driver. The steering sensor 110 is provided at the end of the steering shaft 4 opposite to the steering wheel 1. In Fig. 53, numeral 111 denotes a lead wire leading to the steering sensor 110, numeral 112 denotes an input shaft to input rotation to the steering sensor 110, numeral 113 denotes a shim, and numeral 114 denotes an O-ring.

The reaction force motor 6 is provided on the steering shaft 4 connecting the steering wheel 1 and the brake unit 7 (see Fig. 52).

As shown in Fig. 53, the steering shaft 4 is supported so as to be axially rotatable by a rolling bearing mounted in a brake case (clutch case) 29 in which the brake unit 7 is received. The brake case 29 is a tubular member in which the constituent members of the brake unit 7 are collectively received. The brake case 29 is fixed to the vehicle body (not shown) so as not to rotate. The brake case 29 includes a lid body 105 that closes the opening of the end (hereinafter, referred to as one axial end) on the steering wheel 1 side. The brake case 29 has an opening portion at the end of the brake case 29 opposite to the steering wheel 1 (hereinafter, referred to as the other axial end), and the other axial end of the steering shaft 4 is exposed at the opening portion. The steering sensor 110 is mounted so as to close the exposed portion at the other axial end of the steering shaft 4.

The brake unit 7 includes a two-way clutch having: an inner ring 20 coupled to the steering shaft 4; an outer ring 21 provided to be fixed to the brake case 29; a plurality of cam surfaces 22 formed on the outer periphery of the inner ring 20; a cylindrical surface 23 formed on the inner periphery of the outer ring 21; and engagement elements 24 each including a roller incorporated between one of the cam surfaces 22 and the cylindrical surface 23. The brake unit 7 further includes: an engagement element cage 25 that retains the engagement elements 24; an armature 26 supported to be axially movable; an electromagnet 27 that, when energized, attracts the armature 26 and axially moves the armature 26; and a motion converting mechanism 28 that circumferentially moves the engagement element cage 25 according to the movement of the armature 26.

The outer ring 21 is fitted and fixed in the brake case 29, and is prevented from coming off by a stop ring 52. That is, the outer ring 21 is fixed (immovable). As the fixing structure, the following structure can be adopted, for example: a structure in which the outer diameter surface of the outer ring 21 and the inner diameter surface of the brake case 29 are fixed by a key groove and a key member to be non-rotatable relative to each other; or a structure in which a projection and a recess are between the outer diameter surface of the outer ring 21 and the inner diameter surface of the brake case 29 and the projection and the recess are fitted to each other to prevent rotation of the outer ring 21 and the brake case 29 relative to each other.

On one axial end of the recess-shaped main body 29d of the brake case 29 there is formed a flange 30 extending radially outward. A flange 106 of the lid body 105 is placed on the flange 30, and the lid body 105 is fixed to the main body 29d by being tightened with a bolt 107. A bearing 31 is mounted to the outer ring 21 (brake case 29) so as to rotatably support the inner ring 20. In this embodiment, the outer ring 21 and the brake case 29 are formed as separate members, and are both integrally fixed. In the case where the brake case 29 and the outer ring 21 are formed as separate members as described above, it is effective for reduction of magnetic leakage when the outer ring 21 is formed of a magnetic material and the brake case 29 is formed of a non-magnetic material. As the material for the brake case 29, an aluminum alloy is preferable in consideration of weight reduction and mass productivity. On the other hand, when the brake case 29 and the outer ring 21 are integrally molded, the number of parts is small, and the manufacturing cost can be reduced.

The cam surfaces 22 of the inner ring 20 are formed on the outer periphery of the inner ring 20. The inner ring 20 is spline-fitted to the outer periphery of the end portion 59 that is a portion of the steering shaft 4 and is located inside the brake case 29. Numerals 20b and 59a in the drawing denote splines that mesh with each other. Due to this spline fitting, the steering shaft 4 cannot rotate relative to the inner ring 20. The electromagnet 27 is provided on the outer periphery at the other axial end of the steering shaft 4. The inner ring 20 includes an extension portion 20a that enters between the inner diameter surface of the electromagnet 27 and the outer diameter surface of the steering shaft 4, and the extension portion 20a is rotatably supported by the brake case 29 by a bearing 93.

The end opening of the brake case 29 on the steering wheel 1 side is closed by the lid body 105. The steering shaft 4 is rotatably supported by the lid body 105 by two bearings 108 that are parallel to each other. On the one axial end side with respect to the bearings 108, a gap between the lid body 105 and the outer periphery of the steering shaft 4 is sealed with a seal 109.

The brake unit 7 has a function of switching between an engaged state in which the inner ring 20 and the outer ring 21 are engaged with each other via the engagement elements 24 and a disengaged state in which the engagement between the inner ring 20 and the outer ring 21 is released. The engagement element cage 25 retains the engagement elements 24 along the circumferential direction. The engagement element cage 25 is supported to be circumferentially movable, relative to the inner ring 20, between the position for the engaged state where, by circumferentially moving the engagement elements 24 from the circumferential central positions of the respective cam surfaces 22, the engagement elements 24 are engaged with the respective cam surfaces 22 and the cylindrical surface 23, and the position for the disengaged state where, by moving the engagement elements 24 to the circumferential central positions of the respective cam surfaces 22, the engagement elements 24 are disengaged from the respective cam surfaces 22 and the cylindrical surface 23.

The armature 26 is supported on the outer periphery of the extension portion 20a of the inner ring 20 so as to be axially movable. The electromagnet 27 includes an annular field core 35 having a C-shaped cross section axially opening toward the armature 26; and a solenoid coil 36 wound around the field core 35. The anti-rotation protrusion 84 provided on the field core 35 is inserted in a recess provided in the brake case 29, whereby the field core 35 and the brake case 29 are prevented from rotating relative to each other.

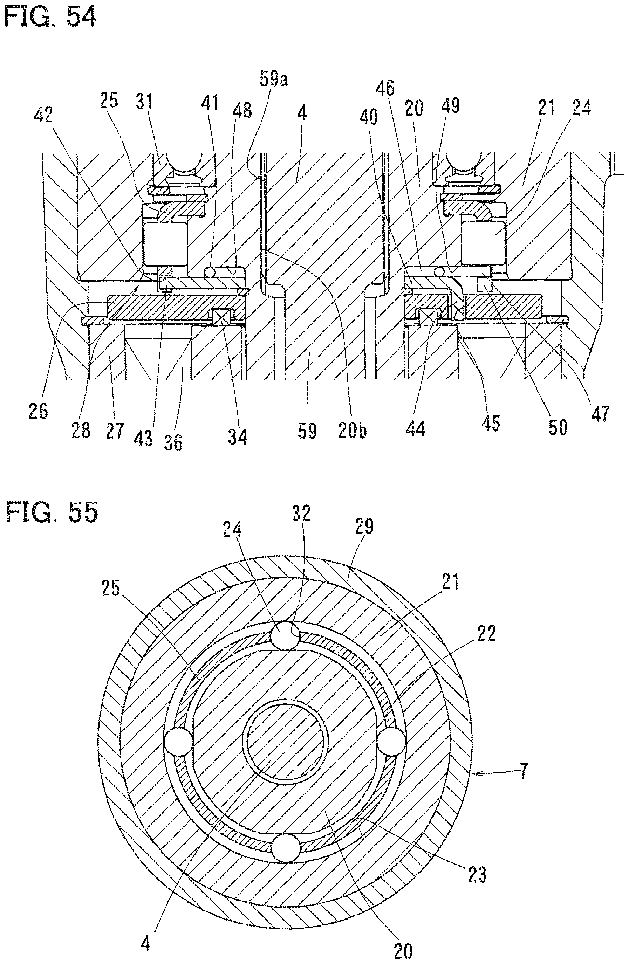

As shown in Fig. 54, the motion converting mechanism 28 includes: an intermediate plate 40 that is rotationally fixed to the armature 26 to be axially movable relative to the armature 26 and is rotationally fixed to the engagement element cage 25; and a centering spring 41 that elastically holds the engagement element cage 25 at the position for the disengaged state. When the armature 26 axially moves due to energization of the electromagnet 27, the motion converting mechanism 28 exerts a function of circumferentially moving the engagement element cage 25 from one of the position for the engaged state and the position for the disengaged state to the other according to the movement of the armature 26.

When the electromagnet 27 is de-energized, the brake unit 7 is in an idling state in which the inner ring 20 can freely rotate with respect to the outer ring 21. That is, when the electromagnet 27 is de-energized, the armature 26 is separated from the electromagnet 27 by the biasing force of the separation spring 34, and the armature 26 is freely rotatable with respect to the electromagnet 27. At this time, since the engagement element cage 25 is held at the position for the disengaged state by the elastic restoring force of the centering spring 41, even when the inner ring 20 is rotated, the engagement elements 24 are not engaged between the cam surfaces 22 on the outer periphery of the inner ring 20 and the cylindrical surface 23 on the inner periphery of the outer ring 21, and the steering shaft 4 coupled to the inner ring 20 can therefore freely rotate in both normal and reverse directions.

On the other hand, in a state where the electromagnet 27 is energized, the brake unit 7 is in a locked state in which relative rotation of the inner ring 20 is prevented. That is, when the electromagnet 27 is energized, the armature 26 is attracted and stuck to the electromagnet 27, and the armature 26 is brought into frictional contact with the electromagnet 27. Since the armature 26 in frictional contact with the electromagnet 27 is rotationally fixed to the engagement element cage 25 via the intermediate plate 40, when the inner ring 20 is rotated in this state, the rotation of the engagement element cage 25 is restricted, and the inner ring 20 therefore rotates relative to the engagement element cage 25. As a result, the engagement element cage 25 moves from the position for the disengaged state to the position for the engaged state against the elastic force of the centering spring 41, and the engagement elements 24 are engaged between the cam surfaces 22 on the outer periphery of the inner ring 20 and the cylindrical surface 23 on the inner periphery of the outer ring 21, so that relative rotation of the inner ring 20 is prevented, and the steering shaft 4 coupled to the inner ring 20 is therefore prevented from rotating.

As shown in Fig. 52, the reaction force motor 6, the brake unit 7, and the steering motor 12 are controlled by the control unit 8. The external sensor 51, the steering sensor 110, and the steering sensor 13 are electrically connected to the input side of the control unit 8. The external sensor 51 is a vehicle speed sensor or the like that detects a traveling speed of the vehicle. The reaction force motor 6, the brake unit 7, and the steering actuator 2 are electrically connected to the output side of the control unit 8.

The control unit 8 performs control to cause the steering motor 12 to operate according to the operation amount of the steering wheel 1 detected by the steering sensor 110 and the traveling situation (vehicle speed or the like) of the vehicle detected by the external sensor 51 so as to change the direction of the pair of right and left steered wheels 3 (steering target). At this time, the control unit 8 performs control to cause the reaction force motor 6 to operate such that the steering reaction force having a magnitude according to the operation amount of the steering wheel 1 and the traveling situation of the vehicle. The control unit 8 further determines whether the direction of the steered wheels 3 has reached the stroke end on the basis of the position of the steering shaft 10 detected by the steering sensor 13. When it is determined that the direction of the steered wheels 3 has not reached the stroke end, the electromagnet 27 of the brake unit 7 is de-energized to hold the engagement element cage 25 at the disengagement position. On the other hand, when it is determined that the direction of the steered wheels 3 has reached the stroke end, the electromagnet 27 of the brake unit 7 is energized to move the engagement element cage 25 from the position for the disengaged state to the position for the engaged state.

With the steering system of the embodiment of the fifth invention, it is possible to move the engagement element cage 25 from the position for the disengaged state to the position for the engaged state by switching between the energized state and the de-energized state of the electromagnet 27 so that switching is made from the steering unlocked state in which the steering wheel 1 is allowed to rotate to the steering locked state in which the steering wheel 1 is prevented from rotating. That is, by using an excitation type brake type electromagnetic engagement element clutch, it is possible to stop the rotation of the steering wheel 1 reliably and instantaneously by supplying power when the steering wheel 1 reaches the stroke end. Here, when the engagement element cage 25 moves to the position for the engaged state, the engagement elements 24 are physically engaged between the inner ring 20 and the outer ring 21, whereby the rotation of the inner ring 20 is prevented. Therefore, the rotation of the steering wheel 1 coupled to the inner ring 20 via the steering shaft 4 is reliably prevented. Therefore, by switching between the energized state and the de-energized state of the electromagnet 27 when the direction of the steered wheels 3 reaches the stroke end, the steering wheel 1 is prevented from further rotating, so that it is possible to cause the driver to reliably sense, via the steering wheel 1, that the direction of the steered wheels 3 has reached the stroke end.

With this steering system, when the steering sensor 13 detects that the steered wheels 3 has reached the stroke end, the electromagnet 27 is energized, so that the two-way clutch is engaged and the steering wheel 1 does not rotate any further. Even when the energization is turned off in this state, the engagement of the two-way clutch is not released because torque is applied to the two-way clutch unless the driver stops inputting rotation in the same direction, to the steering wheel 1. Therefore, it is possible to reduce current consumption and heat generation. In addition, with this steering system, it is possible to stop the rotation of the steering wheel 1 by supplying power only for a certain period of time when the steered wheels 3 reaches the stroke end. Therefore, the capacity of the electromagnetic brake configured with the brake unit 7 can be reduced, and it is possible to reduce the size of the device.

In this embodiment, a roller clutch using the engagement elements 24 is adopted as the two-way clutch. Because even a small roller clutch can bear a relatively large torque, the roller clutch contributes to downsizing of the device also in this respect. Note that, when, after the rotation of the steering wheel 1 in one direction is locked, the driver stops inputting of the rotation in the one direction to the steering wheel 1, the engagement of the roller clutch is released by the centering spring 41, and the steering operation can be performed immediately. Therefore, the driver does not feel uncomfortable with the situation where the steering wheel 1 does not rotate against his or her intention.

In the fifth invention, the other axial end of the steering shaft 4 is exposed in the opening portion on the other axial end side of the brake case 29. The steering sensor 110 is mounted so as to close the exposed portion at the other axial end of the steering shaft 4. Therefore, unlike the steering system of Patent Document 1, the steering sensor 110 does not protrude the radial direction away from the axial center of the brake unit 7. This configuration contributes to downsizing of the device. In addition, since the other axial end of the steering shaft 4 is coaxially connected to the input shaft 112 of the steering sensor 110, the rotation of the steering shaft 4 is directly transmitted to the steering sensor 110, and there is no need for an intermediate part for transmitting the rotation. Also in this respect, the overall device can be downsized.

The above-described embodiments are mere examples in every respect, and the present invention is not limited thereto. The scope of the present invention is indicated not by the above description but by the claims, and should be understood to include all modifications within the meaning and scope equivalent to the scope of the claims.

### DESCRIPTION OF REFERENCE NUMERALS

1: steering wheel
2: steering actuator
3: steered wheel (steering target)
4: steering shaft
5: steering sensor
6: reaction force motor
8: control unit
9: shaft
16: motor shaft
17: electromagnetic brake (electromagnetic clutch)
20: inner ring
20a: extension portion
21: outer ring
24, 24a, 24b: engagement element (roller)
25: engagement element cage
26: armature
27: electromagnet
28: motion converting mechanism
29: brake case (clutch case, fixed member)
29b: end plate portion (electromagnet movement restricting portion)
34: separation spring
35: field core
36: solenoid coil
41: centering spring
52: stop ring (outer ring movement restricting portion)
60: non-circular shaft portion
61: non-circular hole portion
64: elastic member
70: intermediate shaft
87: elastic spacer
87a: disc spring
87b: wave spring
87d: compression coil spring
92: friction surface portion
93: bearing
99: impact absorbing member
100: friction member
101: friction surface portion
102: actuation spring
105: lid body
108: bearing
110: steering sensor
112: input shaft

## Claims

1. A steer-by-wire type steering system comprising:
a steering wheel (1);
a steering sensor (5) configured to detect an operation amount of the steering wheel (1); and
a steering actuator (2) disposed to be mechanically separated from the steering wheel (1), and configured to change a direction of a steering target (3) according to the operation amount of the steering wheel (1) detected by the steering sensor (5);
**characterized in that** the steer-by-wire type steering system further comprises:
a shaft (4, 16, 70) coupled to the steering wheel (1) so as to rotate in unison with the steering wheel (1);
a fixed member (29) non-rotatably fixed;
an inner ring (20) coupled to one of the shaft (4, 16, 70) and the fixed member (29);
an outer ring (21) coupled to the other of the shaft (4, 16, 70) and the fixed member (29);
engagement elements (24, 24a, 24b) disposed between an outer periphery of the inner ring (20) and an inner periphery of the outer ring (21);
an engagement element cage (25) retaining the engagement elements (24, 24a, 24b), and supported to be circumferentially movable between an engagement position where the engagement elements (24, 24a, 24b) are engaged with the inner ring (20) and the outer ring (21) and a disengagement position where the engagement elements (24, 24a, 24b) are disengaged from the inner ring (20) and the outer ring (21);
an armature (26) supported to be axially movable;
an electromagnet (27) configured to attract and axially move the armature (26) when the electromagnet (27) is energized; and
a motion converting mechanism (28) configured to circumferentially move, according to movement of the armature (26), the engagement element cage (25) from one of the engaging position and the disengagement position to the other of the engaging position and the disengagement position.

2. The steer-by-wire type steering system according to claim 1, wherein the inner ring (20) is coupled to the shaft (4, 16, 70), and the outer ring (21) is coupled to the fixed member (29).

3. The steer-by-wire type steering system according to claim 2, wherein the inner ring (20) and the shaft (4, 16, 70) are coupled to each other with play of a predetermined angular range such that the shaft (4, 16, 70) is allowed to rotate relative to the inner ring (20) within the predetermined angular range, and such that the shaft (4, 16, 70) is prevented from rotating relative to the inner ring (20) beyond the predetermined angular range, and
wherein an elastic member (64) is disposed between the inner ring (20) and the shaft (4, 16, 70) such that when the inner ring (20) and the shaft (4, 16, 70) rotate relative to each other from a state where the inner ring (20) and the shaft (4, 16, 70) are at a central position of the predetermined angular range, the elastic member (64) biases the inner ring (20) and the shaft (4, 16, 70) toward the central position of the predetermined angular range.

4. The steer-by-wire type steering system according to claim 3, wherein the shaft (4, 16, 70) includes a non-circular shaft portion (60) having a non-circular cross section,
wherein the inner ring (20) includes a non-circular hole portion (61) fitted to the non-circular shaft portion (60) with a circumferential gap defined, and
wherein the elastic member (64) is a leaf spring disposed to be circumferentially sandwiched between the non-circular shaft portion (60) and the non-circular hole portion (61).

5. The steer-by-wire type steering system according to claim 3, wherein the shaft (4, 16, 70) includes a non-circular shaft portion (60) having a non-circular cross section,
wherein the inner ring (20) includes a non-circular hole portion (61) fitted to the non-circular shaft portion (60) with a circumferential gap defined, and
the elastic member (64) is a compression coil spring disposed to be compressed between the non-circular shaft portion (60) and the non-circular hole portion (61).

6. The steer-by-wire type steering system according to claim 3, wherein the shaft (4, 16, 70) includes a non-circular shaft portion (60) having a non-circular cross section,
wherein the inner ring (20) includes a non-circular hole portion (61) fitted to the non-circular shaft portion (60) with a circumferential gap defined, and
wherein the elastic member (64) is a torsion bar of which one end is fitted in a fitting hole formed at a center of the shaft (4, 16, 70) and is rotationally fixed to the shaft (4, 16, 70), and of which the other end is rotationally fixed to the inner ring (20).

7. The steer-by-wire type steering system according to any one of claims 2 to 6, wherein the fixed member (29) is a tubular brake case in which the electromagnet (27) and the armature (26) are received, and
wherein the outer ring (21) is integrally formed with the tubular brake case (29).

8. The steer-by-wire type steering system according to any one of claims 2 to 6, wherein the fixed member (29) is a tubular brake case (29) in which the electromagnet (27) and the armature (26) are received,
wherein the tubular brake case (29) is formed of a non-magnetic material, and
wherein the outer ring (21) is formed separately from the tubular brake case (29), and is rotationally fixed to the tubular brake case (29).

9. The steer-by-wire type steering system according to any one of claims 2 to 6, wherein the fixed member (29) is a tubular brake case (29) in which the electromagnet (27) and the armature (26) are received,
wherein the outer ring (21) is formed separately from the tubular brake case (29), and is rotationally fixed to the tubular brake case (29),
wherein the electromagnet (27) is disposed in the tubular brake case (29) so as to be axially opposed to the outer ring (21),
wherein the tubular brake case (29) is provided with:
an electromagnet movement restricting portion (29b) for restricting movement of the electromagnet (27) in one axial direction; and
an outer ring movement restricting portion (52) for restricting a movement range of the outer ring (21) in the other axial direction, and
wherein an elastic spacer (87) is disposed between the outer ring (21) and the electromagnet (27) so as to bias the outer ring (21) and the electromagnet (27) in a direction axially away from each other.

10. The steer-by-wire type steering system according to claim 9, wherein the elastic spacer (87) is any one of a disc spring (87a), a wave spring (87b), and a compression coil spring (87d).

11. The steer-by-wire type steering system according to claim 9 or 10, wherein the elastic spacer (87) is formed of a non-magnetic material.

12. The steer-by-wire type steering system according to claim 1, wherein the outer ring (21) is coupled to the shaft (4, 16, 70), and the inner ring (20) is coupled to the fixed member (29).

13. The steer-by-wire type steering system according to claim 12, wherein the inner ring (20) and the fixed member (29) are coupled to each other with play of a predetermined angular range such that the inner ring (20) is allowed to rotate relative to the fixed member (29) within the predetermined angular range, and such that the inner ring (20) is prevented from rotating relative to the fixed member (29) beyond the predetermined angular range, and
wherein an elastic member (64) is disposed between the inner ring (20) and the fixed member (29) such that when the inner ring (20) and the fixed member (29) rotate relative to each other from a state where the inner ring (20) and the fixed member (29) are at a central position of the predetermined angular range, the elastic member (64) biases the inner ring (20) and the fixed member (29) toward the central position of the predetermined angular range.

14. The steer-by-wire type steering system according to claim 13, wherein the fixed member (29) is a tubular brake case (29) in which the electromagnet (27) and the armature (26) are received, and the tubular brake case (29) is formed of a non-magnetic material.

15. The steer-by-wire type steering system according to claim 13, further comprising a reaction force motor (6) configured to apply a steering reaction force to the steering wheel (1),
wherein the fixed member (29) is a tubular brake case (29) in which the electromagnet (27) and the armature (26) are received, and the tubular brake case (29) is integrally formed with a motor case (15) of the reaction force motor (6).

16. The steer-by-wire type steering system according to any one of claims 1 to 15, wherein the motion converting mechanism (28) is configured to circumferentially move the engagement element cage (25) from the disengagement position to the engagement position when the electromagnet (27) is energized; and
circumferentially move the engagement element cage (25) from the engagement position to the disengagement position when the electromagnet (27) is not energized.

17. A steer-by-wire type steering system comprising:
a steering wheel (1);
a steering sensor (5) configured to detect an operation amount of the steering wheel (1); and
a steering actuator (2) configured to change a direction of a steering target (3) according to the operation amount of the steering wheel (1) detected by the steering sensor (5);
**characterized in that** the steer-by-wire type steering system further comprises:
a shaft (9) coupled to the steering wheel (1) so as to rotate in unison with the steering wheel (1);
an outer ring (21) having an inner periphery disposed around the shaft (9);
engagement elements (24) disposed between the shaft (9) and the inner periphery of the outer ring (21);
an engagement element cage (25) retaining the engagement elements (24), and disposed to be circumferentially movable between an engagement position where the engagement elements (24) are engaged with the shaft (9) and the inner periphery of the outer ring (21) and a disengagement position where the engagement elements (24) are disengaged from the shaft (9) and the inner periphery of the outer ring (21);
a centering spring (41) elastically holding the engagement element cage (25) at the disengagement position, and rotationally fixed to the shaft (9) and the engagement element cage (25) so as to rotate in unison with the shaft (9); and
an excitation actuated type electromagnetic brake (17) configured to brake the engagement element cage (25).

18. The steer-by-wire type steering system according to claim 17, wherein the excitation actuated type electromagnetic brake (17) comprises:
an armature (26) rotationally fixed to the engagement element cage (25), and disposed to be axially movable;
a friction surface portion (92) fixed at a position axially opposed to the armature (26);
an electromagnet (27) axially opposed to the armature (26); and
a separation spring (34) supporting the armature (26) at a position axially away from the electromagnet (27) and the friction surface portion (92) when the electromagnet (27) is not excited, the separation spring (34) being disposed to store force according to axial movement of the armature (26) attracted to the friction surface portion (92) by the electromagnet (27) when the electromagnet (27) is excited.

19. The steer-by-wire type steering system according to claim 18, wherein the electromagnet (27) comprises a field core (35) axially opposed to the armature (26); and a solenoid coil (36) wound around the field core (35),
wherein the friction surface portion (92) is integrally formed with the field core (35), and
wherein the armature (26) comprises a movable member configured to be directly attracted and stuck to the friction surface portion (92) of the field core (35) when the electromagnet (27) is excited.

20. The steer-by-wire type steering system according to claim 19, further comprising a control unit (8) configured to switch, at a predetermined stroke position before the direction of the steering target (3) reaches a stroke end, the excitation actuated type electromagnetic brake (17) to an excited state.

21. The steer-by-wire type steering system according to any one of claims 17 to 20, further comprising a tubular brake case (29) in which the outer ring (21) and the excitation actuated type electromagnetic brake (17) are received,
wherein the tubular brake case (29) is formed of a non-magnetic material, and formed separately from the outer ring (21), and
wherein the outer ring (21) is rotationally fixed to the tubular brake case (29).

22. The steer-by-wire type steering system according to any one of claims 17 to 20, further comprising a tubular brake case (29) in which the excitation actuated type electromagnetic brake (17) is received,
wherein the outer ring (21) is integrally formed with the tubular brake case (29).

23. The steer-by-wire type steering system according to any one of claims 17 to 22, further comprising a reaction force motor (6) configured to apply a steering reaction force to the steering wheel (1),
wherein the steering target (3) comprises a pair of right and left steered wheels, and
wherein the outer ring (21), the engagement elements (24), the engagement element cage (25), and the excitation actuated type electromagnetic brake (17) are disposed between the steering wheel (1) and the reaction force motor (6), or disposed on a side of the reaction force motor (6) axially opposite from the steering wheel (1).

24. A steer-by-wire type steering system comprising:
a steering wheel (1);
a steering sensor (5) configured to detect an operation amount of the steering wheel (1);
a steering actuator (2) configured to change a direction of a steering target (3) according to the operation amount of the steering wheel (1) detected by the steering sensor (5); and
an electromagnetic brake (17),
wherein the electromagnetic brake (17) comprises;
an armature (26) disposed to be axially movable;
a friction surface portion (92) fixed at a position axially opposed to the armature (26); and
an electromagnet (27) configured to attract and axially move the armature (26) until the armature (26) comes into contact with the friction surface portion (92) when the electromagnet (27) is excited;
**characterized in that** the steer-by-wire type steering system further comprises:
a shaft (9) coupled to the steering wheel (1) so as to rotate in unison with the steering wheel (1);
an outer ring (21) having an inner periphery disposed around the shaft (9);
engagement elements (24) disposed between the shaft (9) and the inner periphery of the outer ring (21);
an engagement element cage (25) retaining the engagement elements (24), and disposed to be circumferentially movable between an engagement position where the engagement elements (24) are engaged with the shaft (9) and the inner periphery of the outer ring (21) and a disengagement position where the engagement elements (24) are disengaged from the shaft (9) and the inner periphery of the outer ring (21);
a centering spring (41) elastically holding the engagement element cage (25) at the disengagement position, and rotationally fixed to the shaft (9) and the engagement element cage (25) so as to rotate in unison with the shaft (9); and
an impact absorbing member (99) for alleviating collision between the armature (26) attracted by the electromagnet (27) and the friction surface portion (92),
wherein the electromagnetic brake (17) is disposed to switch, according to axial movement of the armature (26), between a state in which the engagement element cage (25) is braked and a state in which the braking thereof is released.

25. The steer-by-wire type steering system according to claim 24, wherein the electromagnet (27) comprises a field core (35) axially opposed to the armature (26); and a solenoid coil (36) wound around the field core (35), and
wherein the armature (26) comprises a movable member configured to be directly attracted and stuck to the field core (35) when the electromagnet (27) is excited.

26. The steer-by-wire type steering system according to claim 25, wherein the impact absorbing member (99) comprises a resin member for fixing the solenoid coil (36).

27. The steer-by-wire type steering system according to any one of claims 24 to 26, wherein the electromagnetic brake (17) further comprises a separation spring (34) supporting the armature (26) at a position axially away from the friction surface portion (92) when the electromagnet (27) is not excited, the separation spring (34) being disposed to store force according to axial movement of the armature (26) attracted when the electromagnet (27) is excited, and
wherein the armature (26) is rotationally fixed to the engagement element cage (25).

28. The steer-by-wire type steering system according to any one of claims 24 to 26, wherein the electromagnetic brake (17) further comprises:
a friction member (100) rotationally fixed to the engagement element cage (25), and disposed to be axially movable with respect to the engagement element cage (25);
a friction surface portion (101) that is axially opposed to the friction member (100), and that is stationary with respect to the shaft (9); and
an actuation spring (102) disposed such that when the electromagnet (27) is not excited, the actuation spring (102) biases the friction member (100) so as to be pressed against the friction surface portion (101), and such that when the electromagnet (27) is excited, pressing of the friction member (100) weakens according to axial movement of the armature (26) attracted to the electromagnet (27).

29. The steer-by-wire type steering system according to any one of claims 24 to 28, further comprising a reaction force motor (6) configured to apply a steering reaction force to the steering wheel (1),
wherein the steering target (3) comprises a pair of right and left steered wheels, and
wherein the outer ring (21), the engagement elements (24), the engagement element cage (25), and the electromagnetic brake (17) are disposed between the steering wheel (1) and the reaction force motor (6), or disposed on a side of the reaction force motor (6) axially opposite from the steering wheel (1).

30. A steer-by-wire type steering system comprising:
a steering wheel (1);
a steering sensor (5) configured to detect an operation amount of the steering wheel (1);
a steering actuator (2) configured to change a direction of a steering target (3) according to the operation amount of the steering wheel (1) detected by the steering sensor (5); and
a reaction force motor (6) configured to apply a steering reaction force to the steering wheel (1);
**characterized in that** the steer-by-wire type steering system further comprises:
a shaft (9) coupled to the steering wheel (1) so as to rotate in unison with the steering wheel (1);
an outer ring (21) having an inner periphery disposed around the shaft (9);
engagement elements (24) disposed between the shaft (9) and the inner periphery of the outer ring (21);
an engagement element cage (25) retaining the engagement elements (24), and disposed to be circumferentially movable between an engagement position where the engagement elements (24) are engaged with the shaft (9) and the inner periphery of the outer ring (21) and a disengagement position where the engagement elements (24) are disengaged from the shaft (9) and the inner periphery of the outer ring (21);
a centering spring (41) elastically holding the engagement element cage (25) at the disengagement position, and rotationally fixed to the shaft (9) and the engagement element cage (25) so as to rotate in unison with the shaft (9);
an electromagnetic brake (17) configured to brake the engagement element cage (25); and
a control unit (8) configured to perform:
a motor control operation to increase a rotational torque of the reaction force motor (6) such that the steering reaction force increases as the direction of the steering target (3) approaches a stroke end; and,
in addition, a braking control operation to activate the electromagnetic brake (17).

31. The steer-by-wire type steering system according to claim 30, wherein the electromagnetic brake (17) comprises:
an armature (26) rotationally fixed to the engagement element cage (25), and disposed to be axially movable;
a friction surface portion (92) fixed at a position axially opposed to the armature (26);
an electromagnet (27) axially opposed to the armature (26); and
a separation spring (34) supporting the armature (26) at a position axially away from the electromagnet (27) and the friction surface portion (92) when the electromagnet (27) is not excited, the separation spring (34) being disposed to store force according to axial movement of the armature (26) attracted to the friction surface portion (92) by the electromagnet (27) when the electromagnet (27) is excited.

32. The steer-by-wire type steering system according to claim 31, wherein the armature (26) is rotationally fixed to the engagement element cage (25) with circumferential play.

33. The steer-by-wire type steering system according to claim 30, wherein the electromagnetic brake (17) comprises:
a friction member (100) rotationally fixed to the engagement element cage (25), and disposed to be axially movable with respect to the engagement element cage (25);
a friction surface portion (101) that is axially opposed to the friction member (100), and that is stationary with respect to the shaft (9);
an electromagnet (27);
an armature (26) axially opposed to the electromagnet (27); and
an actuation spring (102) disposed such that when the electromagnet (27) is not excited, the actuation spring (102) biases the friction member (100) so as to be pressed against the friction surface portion (101), and such that when the electromagnet (27) is excited, pressing of the friction member (100) weakens according to axial movement of the armature (26) attracted to the electromagnet (27).

34. The steer-by-wire type steering system according to claim 33, wherein the friction member (100) is rotationally fixed to the engagement element cage (25) with circumferential play.

35. The steer-by-wire type steering system according to any one of claims 31 to 34, wherein the electromagnet (27) comprises a field core (35) axially opposed to the armature (26); and a solenoid coil (36) wound around the field core (35), and
wherein the armature (26) comprises a movable member configured to be directly attracted and stuck to the field core (35) when the electromagnet (27) is excited.

36. The steer-by-wire type steering system according to any one of claims 30 to 35, wherein the control unit (8) is configured to perform a release control operation to release the electromagnetic brake (17) when from a state in which the direction of the steering target (3) has reached the stroke end by turning the steering wheel (1) in one circumferential direction, the steering wheel (1) is turned in the other circumferential direction, and
wherein the shaft (9) and the engagement element cage (25) are disposed to be allowed to rotate in the other circumferential direction from when the direction of the steering target (3) reaches the stroke end until the electromagnetic brake (17) is released.

37. The steer-by-wire type steering system according to any one of claims 30 to 36, wherein the steering target (3) comprises a pair of right and left steered wheels, and
wherein the outer ring (21), the engagement elements (24), the engagement element cage (25), and the electromagnetic brake (17) are disposed between the steering wheel (1) and the reaction force motor (6), or disposed on a side of the reaction force motor (6) axially opposite from the steering wheel (1).

38. A steer-by-wire type steering system comprising:
a steering wheel (1);
a steering sensor (110) configured to detect an operation amount of the steering wheel (1);
a steering actuator (2) disposed to be mechanically separated from the steering wheel (1), and configured to change a direction of a steering target (3) according to the operation amount of the steering wheel (1) detected by the steering sensor (110);
a shaft (4) coupled to the steering wheel (1) so as to rotate in unison with the steering wheel (1); and
a brake unit (7) comprising an inner ring (20) coupled to the shaft (4); an outer ring (21)fixed; and engagement elements (24) disposed between an outer periphery of the inner ring (20) and an inner periphery of the outer ring (21), the brake unit (7) being configured to switch between an engaged state in which the inner ring (20) and the outer ring (21) are engaged with each other via the engagement elements (24) and a disengaged state in which the inner ring (20) and the outer ring (21) are disengaged from each other,
wherein the steering sensor (110) is disposed at an end of the shaft (4) opposite from the steering wheel (1), and
wherein the motion converting mechanism (28) is configured such that when the direction of the steering target (3) reaches a stroke end, the motion converting mechanism (28) energizes the electromagnet (27) so as to circumferentially move the engagement elements (24) from a position for the disengaged state to a position for the engaged state, thereby locking the inner ring (20) and the outer ring (21), and such that when the direction of the steering target (3) leaves from the stroke end, the motion converting mechanism (28) de-energizes the electromagnet (27) so as to circumferentially move the engagement elements (24) from the position for the engaged state to the position for the disengaged state, thereby unlocking the inner ring (20) and the outer ring (21).

39. The steer-by-wire type steering system according to claim 38, wherein the brake unit (7) comprises:
an engagement element cage (25) retaining the engagement elements (24);
an armature (26) supported to be axially movable;
an electromagnet (27) configured to attract and axially move the armature (26) when the electromagnet (27) is energized; and
a motion converting mechanism (28) configured to circumferentially move the engagement element cage (25) from one of the position for the engaged state and the position for the disengaged state to other of the position for the engaged state and the position for the disengaged state according to movement of the armature (26).

40. The steer-by-wire type steering system according to claim 39, further comprising a tubular brake case (29) in which the electromagnet (27) and the armature (26) are received,
wherein the outer ring (21) is integrally formed with the tubular brake case (29).

41. The steer-by-wire type steering system according to claim 39, further comprising a tubular brake case (29) in which the electromagnet (27) and the armature (26) are received,
wherein the tubular brake case (29) is formed of a non-magnetic material, and
wherein the outer ring (21) is formed separately from the tubular brake case (29), and is rotationally fixed to the tubular brake case (29).

42. The steer-by-wire type steering system according to claim 40 or 41, wherein the electromagnet (27) is disposed on an outer periphery of the end of the shaft (4) opposite from the steering wheel (1), and
wherein the inner ring (20) includes an extension portion (20a) entering between an inner diameter surface of the electromagnet (27) and an outer diameter surface of the shaft (4), and rotatably supported on the tubular brake case (29) by a bearing (93).

43. The steer-by-wire type steering system according to any one of claims 40 to 42, wherein the tubular brake case (29) has, on a side of the steering wheel (1), an end opening closed by a lid body (105), and
wherein the shaft (4) is rotatably supported on the lid body (105) by a bearing (108), and the end of the shaft (4) opposite from the steering wheel (1) is coaxially connected to an input shaft (112) of the steering sensor (110).
